# EUROPEAN PATENT SPECIFICATION

(11) **EP 4 305 877 B1**
(45) Date of publication and mention of the grant of the patent: **07.05.2025**
(21) Application number: 22716607.1
(22) Date of filing: 10.03.2022
(51) Int. Cl.: H04W 8/18

(54) **MOBILITY IN NON-PUBLIC NETWORKS**
MOBILITÄT IN NICHTÖFFENTLICHEN NETZWERKEN
MOBILITÉ DANS DES RÉSEAUX NON PUBLICS

(30) Priority: 12.03.2021 US 202163160503 P
(43) Date of publication of application: 17.01.2024
(73) Proprietor: Ofinno, LLC, Reston, VA 20190 (US)
(72) Inventor: TALEBI FARD, Peyman, Reston, Virginia 20190 (US); RYU, Jinsook, Reston, Virginia 20190 (US); DINAN, Esmael Hejazi, Reston, Virginia 20190 (US); PARK, Kyungmin, Reston, Virginia 20190 (US); KIM, Taehun, Reston, Virginia 20190 (US); QIAO, Weihua, Reston, Virginia 20190 (US)
(74) Representative: Westphal, Mussgnug & Partner, Patentanwälte mbB
(86) International application number: PCT/US2022/019722
(87) International publication number: WO 2022/192523

(56) References cited:
- US-A1- 2014 211 756
- "3rd Generation Partnership Project; Technical Specification Group Services and System Aspects; Study on enhanced support of non-public networks (Release 17)", no. V0.4.0, 19 June 2020 (2020-06-19), pages 1 - 158, XP051924077, Retrieved from the Internet <URL:https://www.3gpp.org/ftp/tsg_sa/WG2_Arch/TSGS2_143e_Electronic/INBOX/DRAFTS/DRAFT_23700-07-130_rm.docx> [retrieved on 20200619]

## Description

### TECHNICAL FIELD

This application relates to the field of wireless communication systems such as 4G communication systems (e.g., LTE), 5G communication systems, other communication systems compatible with 4G and/or 5G communication systems, and related methods, systems and apparatuses.

### BACKGROUND

With regard to the prior art, reference is made to the U.S. patent applications US 2021 /360521 A1 and US 2020/214036 A1, US 2014/211756 A1, and XP051924077.

### SUMMARY

The invention is set out in the appended claims. A method for a wireless device of a wireless communication system is described herein. In accordance with one embodiment, the method includes sending - by the wireless device to an access and mobility management function (AMF) of an overlay network - a first non-access stratum (NAS) message indicating an access switch, wherein the access switch indicates a request to receive information of one or more underlay networks. The method further includes receiving - by the wireless device from the AMF - a second NAS message comprising the information of the one or more underlay networks. Moreover, a corresponding method for the AMF is described as well as related apparatuses, devices and systems.

### BRIEF DESCRIPTION OF THE DRAWINGS

Examples of several of the various embodiments of the present disclosure are described herein with reference to the drawings.
FIG. 1A and FIG. 1B illustrate example communication networks including an access network and a core network.
FIG. 2A, FIG. 2B, FIG. 2C, and FIG. 2D illustrate various examples of a framework for a service-based architecture within a core network.
FIG. 3 illustrates an example communication network including core network functions.
FIG. 4A and FIG. 4B illustrate example of core network architecture with multiple user plane functions and untrusted access.
FIG. 5 illustrates an example of a core network architecture for a roaming scenario.
FIG. 6 illustrates an example of network slicing.
FIG. 7A, FIG. 7B, and FIG. 7C illustrate a user plane protocol stack, a control plane protocol stack, and services provided between protocol layers of the user plane protocol stack.
FIG. 8 illustrates an example of a quality of service model for data exchange.
FIG. 9A, FIG. 9B, FIG. 9C, and FIG. 9D illustrate example states and state transitions of a wireless device.
FIG. 10 illustrates an example of a registration procedure for a wireless device.
FIG. 11 illustrates an example of a service request procedure for a wireless device.
FIG. 12 illustrates an example of a protocol data unit session establishment procedure for a wireless device.
FIG. 13 illustrates examples of components of the elements in a communications network.
FIG. 14A, FIG. 14B, FIG. 14C, and FIG. 14D illustrate various examples of physical core network deployments, each having one or more network functions or portions thereof.
FIG. 15 illustrates an example embodiment of a present disclosure.
FIG. 16 illustrates an example embodiment of a present disclosure.
FIG. 17 illustrates an example embodiment of a present disclosure.
FIG. 18 illustrates an example embodiment of a present disclosure.
FIG. 19 illustrates an example embodiment of a present disclosure.
FIG. 20 illustrates an example embodiment of a present disclosure.
FIG. 21 illustrates an example embodiment of a present disclosure.
FIG. 22 illustrates an example embodiment of a present disclosure.
FIG. 23 illustrates an example embodiment of a present disclosure.
FIG. 24 illustrates an example embodiment of a present disclosure.
FIG. 25 illustrates an example embodiment of a present disclosure.
FIG. 26 illustrates an example embodiment of a present disclosure.
FIG. 27 illustrates an example embodiment of a present disclosure.
FIG. 28 illustrates an example embodiment of a present disclosure.
FIG. 29 illustrates an example embodiment of a present disclosure.
FIG. 30 illustrates an example embodiment of a present disclosure.
FIG. 31 illustrates an example embodiment of a present disclosure.
FIG. 32 illustrates an example embodiment of a present disclosure.
FIG. 33 illustrates an example embodiment of a present disclosure.
FIG. 34 illustrates an example embodiment of a present disclosure.
FIG. 35 illustrates an example embodiment of a present disclosure.

### DETAILED DESCRIPTION

In the present disclosure, various embodiments are presented as examples of how the disclosed techniques may be implemented and/or how the disclosed techniques may be practiced in environments and scenarios. It will be apparent to persons skilled in the relevant art that various changes in form and detail can be made therein without departing from the scope. In fact, after reading the description, it will be apparent to one skilled in the relevant art how to implement alternative embodiments. The present embodiments should not be limited by any of the described exemplary embodiments. The embodiments of the present disclosure will be described with reference to the accompanying drawings. Limitations, features, and/or elements from the disclosed example embodiments may be combined to create further embodiments within the scope of the disclosure. Any figures which highlight the functionality and advantages, are presented for example purposes only. The disclosed architecture is sufficiently flexible and configurable, such that it may be utilized in ways other than that shown. For example, the actions listed in any flowchart may be re-ordered or only optionally used in some embodiments.

Embodiments may be configured to operate as needed. The disclosed mechanism may be performed when certain criteria are met, for example, in a wireless device, a base station, a radio environment, a network, a combination of the above, and/or the like. Example criteria may be based, at least in part, on for example, wireless device or network node configurations, traffic load, initial system set up, packet sizes, traffic characteristics, a combination of the above, and/or the like. When the one or more criteria are met, various example embodiments may be applied. Therefore, it may be possible to implement example embodiments that selectively implement disclosed protocols.

A base station may communicate with a mix of wireless devices. Wireless devices and/or base stations may support multiple technologies, and/or multiple releases of the same technology. Wireless devices may have one or more specific capabilities. When this disclosure refers to a base station communicating with a plurality of wireless devices, this disclosure may refer to a subset of the total wireless devices in a coverage area. This disclosure may refer to, for example, a plurality of wireless devices of a given LTE or 5G release with a given capability and in a given sector of the base station. The plurality of wireless devices in this disclosure may refer to a selected plurality of wireless devices, and/or a subset of total wireless devices in a coverage area which perform according to disclosed methods, and/or the like. There may be a plurality of base stations or a plurality of wireless devices in a coverage area that may not comply with the disclosed methods, for example, those wireless devices or base stations may perform based on older releases of LTE or 5G technology.

In this disclosure, "a" and "an" and similar phrases refer to a single instance of a particular element, but should not be interpreted to exclude other instances of that element. For example, a bicycle with two wheels may be described as having "a wheel". Any term that ends with the suffix "(s)" is to be interpreted as "at least one" and/or "one or more." In this disclosure, the term "may" is to be interpreted as "may, for example." In other words, the term "may" is indicative that the phrase following the term "may" is an example of one of a multitude of suitable possibilities that may, or may not, be employed by one or more of the various embodiments. The terms "comprises" and "consists of", as used herein, enumerate one or more components of the element being described. The term "comprises" is interchangeable with "includes" and does not exclude unenumerated components from being included in the element being described. By contrast, "consists of" provides a complete enumeration of the one or more components of the element being described.

The phrases "based on", "in response to", "depending on", "employing", "using", and similar phrases indicate the presence and/or influence of a particular factor and/or condition on an event and/or action, but do not exclude unenumerated factors and/or conditions from also being present and/or influencing the event and/or action. For example, if action X is performed "based on" condition Y, this is to be interpreted as the action being performed "based at least on" condition Y. For example, if the performance of action X is performed when conditions Y and Z are both satisfied, then the performing of action X may be described as being "based on Y".

The term "configured" may relate to the capacity of a device whether the device is in an operational or non-operational state. Configured may refer to specific settings in a device that effect the operational characteristics of the device whether the device is in an operational or non-operational state. In other words, the hardware, software, firmware, registers, memory values, and/or the like may be "configured" within a device, whether the device is in an operational or nonoperational state, to provide the device with specific characteristics. Terms such as "a control message to cause in a device" may mean that a control message has parameters that may be used to configure specific characteristics or may be used to implement certain actions in the device, whether the device is in an operational or non-operational state.

In this disclosure, a parameter may comprise one or more information objects, and an information object may comprise one or more other objects. For example, if parameter J comprises parameter K, and parameter K comprises parameter L, and parameter L comprises parameter M, then J comprises L, and J comprises M. A parameter may be referred to as a field or information element. In an example embodiment, when one or more messages comprise a plurality of parameters, it implies that a parameter in the plurality of parameters is in at least one of the one or more messages, but does not have to be in each of the one or more messages.

This disclosure may refer to possible combinations of enumerated elements. For the sake of brevity and legibility, the present disclosure does not explicitly recite each and every permutation that may be obtained by choosing from a set of optional features. The present disclosure is to be interpreted as explicitly disclosing all such permutations. For example, the seven possible combinations of enumerated elements A, B, C consist of: (1) "A"; (2) "B"; (3) "C"; (4) "A and B"; (5) "A and C"; (6) "B and C"; and (7) "A, B, and C". For the sake of brevity and legibility, these seven possible combinations may be described using any of the following interchangeable formulations: "at least one of A, B, and C"; "at least one of A, B, or C"; "one or more of A, B, and C"; "one or more of A, B, or C"; "A, B, and/or C". It will be understood that impossible combinations are excluded. For example, "X and/or not-X" should be interpreted as "X or not-X". It will be further understood that these formulations may describe alternative phrasings of overlapping and/or synonymous concepts, for example, "identifier, identification, and/or ID number".

This disclosure may refer to sets and/or subsets. As an example, set X may be a set of elements comprising one or more elements. If every element of X is also an element of Y, then X may be referred to as a subset of Y. In this disclosure, only non-empty sets and subsets are considered. For example, if Y consists of the elements Y1, Y2, and Y3, then the possible subsets of Y are {Y1, Y2, Y3}, {Y1, Y2}, {Y1, Y3}, {Y2, Y3}, {Y1}, {Y2}, and {Y3}.

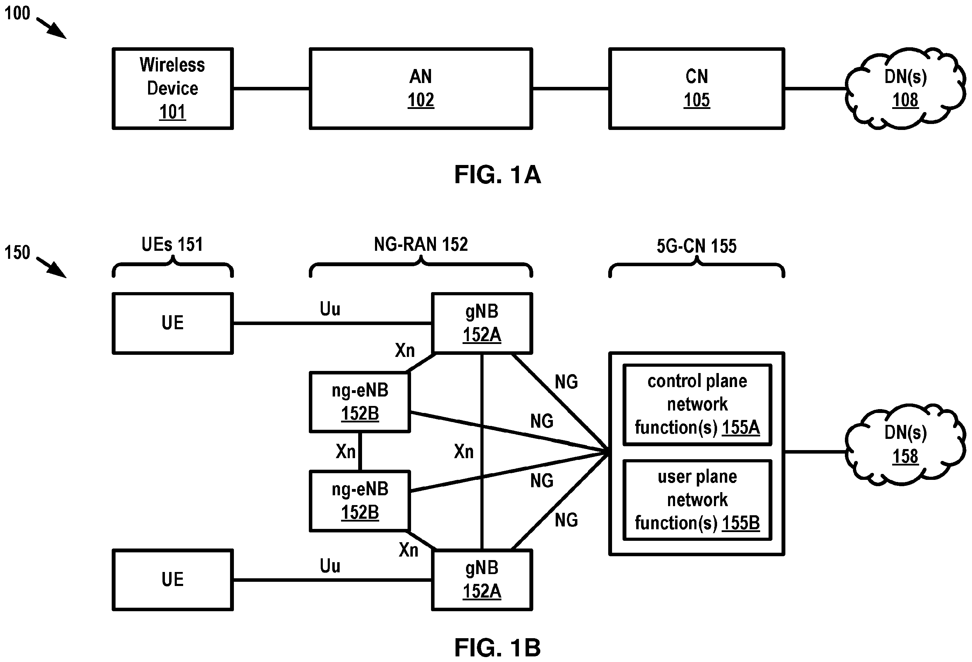

FIG. 1A illustrates an example of a communication network 100 in which embodiments of the present disclosure may be implemented. The communication network 100 may comprise, for example, a public land mobile network (PLMN) run by a network operator. As illustrated in FIG. 1A, the communication network 100 includes a wireless device 101, an access network (AN) 102, a core network (CN) 105, and one or more data network (DNs) 108.

The wireless device 101 may communicate with DNs 108 via AN 102 and CN 105. In the present disclosure, the term wireless device may refer to and encompass any mobile device or fixed (non-mobile) device for which wireless communication is needed or usable. For example, a wireless device may be a telephone, smart phone, tablet, computer, laptop, sensor, meter, wearable device, Internet of Things (IoT) device, vehicle road side unit (RSU), relay node, automobile, unmanned aerial vehicle, urban air mobility, and/or any combination thereof. The term wireless device encompasses other terminology, including user equipment (UE), user terminal (UT), access terminal (AT), mobile station, handset, wireless transmit and receive unit (WTRU), and/or wireless communication device.

The AN 102 may connect wireless device 101 to CN 105 in any suitable manner. The communication direction from the AN 102 to the wireless device 101 is known as the downlink and the communication direction from the wireless device 101 to AN 102 is known as the uplink. Downlink transmissions may be separated from uplink transmissions using frequency division duplexing (FDD), time-division duplexing (TDD), and/or some combination of the two duplexing techniques. The AN 102 may connect to wireless device 101 through radio communications over an air interface. An access network that at least partially operates over the air interface may be referred to as a radio access network (RAN). The CN 105 may set up one or more end-to-end connection between wireless device 101 and the one or more DNs 108. The CN 105 may authenticate wireless device 101 and provide charging functionality.

In the present disclosure, the term base station may refer to and encompass any element of AN 102 that facilitates communication between wireless device 101 and AN 102. Access networks and base stations have many different names and implementations. The base station may be a terrestrial base station fixed to the earth. The base station may be a mobile base station with a moving coverage area. The base station may be in space, for example, on board a satellite. For example, WiFi and other standards may use the term access point. As another example, the Third-Generation Partnership Project (3GPP) has produced specifications for three generations of mobile networks, each of which uses different terminology. Third Generation (3G) and/or Universal Mobile Telecommunications System (UMTS) standards may use the term Node B. 4G, Long Term Evolution (LTE), and/or Evolved Universal Terrestrial Radio Access (E-UTRA) standards may use the term Evolved Node B (eNB). 5G and/or New Radio (NR) standards may describe AN 102 as a next-generation radio access network (NG-RAN) and may refer to base stations as Next Generation eNB (ng-eNB) and/or Generation Node B (gNB). Future standards (for example, 6G, 7G, 8G) may use new terminology to refer to the elements which implement the methods described in the present disclosure (e.g., wireless devices, base stations, ANs, CNs, and/or components thereof). A base station may be implemented as a repeater or relay node used to extend the coverage area of a donor node. A repeater node may amplify and rebroadcast a radio signal received from a donor node. A relay node may perform the same/similar functions as a repeater node but may decode the radio signal received from the donor node to remove noise before amplifying and rebroadcasting the radio signal.

The AN 102 may include one or more base stations, each having one or more coverage areas. The geographical size and/or extent of a coverage area may be defined in terms of a range at which a receiver of AN 102 can successfully receive transmissions from a transmitter (e.g., wireless device 101) operating within the coverage area (and/or vice-versa). The coverage areas may be referred to as sectors or cells (although in some contexts, the term cell refers to the carrier frequency used in a particular coverage area, rather than the coverage area itself). Base stations with large coverage areas may be referred to as macrocell base stations. Other base stations cover smaller areas, for example, to provide coverage in areas with weak macrocell coverage, or to provide additional coverage in areas with high traffic (sometimes referred to as hotspots). Examples of small cell base stations include, in order of decreasing coverage area, microcell base stations, picocell base stations, and femtocell base stations or home base stations. Together, the coverage areas of the base stations may provide radio coverage to wireless device 101 over a wide geographic area to support wireless device mobility.

A base station may include one or more sets of antennas for communicating with the wireless device 101 over the air interface. Each set of antennas may be separately controlled by the base station. Each set of antennas may have a corresponding coverage area. As an example, a base station may include three sets of antennas to respectively control three coverage areas on three different sides of the base station. The entirety of the base station (and its corresponding antennas) may be deployed at a single location. Alternatively, a controller at a central location may control one or more sets of antennas at one or more distributed locations. The controller may be, for example, a baseband processing unit that is part of a centralized or cloud RAN architecture. The baseband processing unit may be either centralized in a pool of baseband processing units or virtualized. A set of antennas at a distributed location may be referred to as a remote radio head (RRH).

FIG. 1B illustrates another example communication network 150 in which embodiments of the present disclosure may be implemented. The communication network 150 may comprise, for example, a PLMN run by a network operator. As illustrated in FIG. 1B, communication network 150 includes UEs 151, a next generation radio access network (NG-RAN) 152, a 5G core network (5G-CN) 155, and one or more DNs 158. The NG-RAN 152 includes one or more base stations, illustrated as generation node Bs (gNBs) 152A and next generation evolved Node Bs (ng eNBs) 152B. The 5G-CN 155 includes one or more network functions (NFs), including control plane functions 155A and user plane functions 155B. The one or more DNs 158 may comprise public DNs (e.g., the Internet), private DNs, and/or intra-operator DNs. Relative to corresponding components illustrated in FIG. 1A, these components may represent specific implementations and/or terminology.

The base stations of the NG-RAN 152 may be connected to the UEs 151 via Uu interfaces. The base stations of the NG-RAN 152 may be connected to each other via Xn interfaces. The base stations of the NG-RAN 152 may be connected to 5G CN 155 via NG interfaces. The Uu interface may include an air interface. The NG and Xn interfaces may include an air interface, or may consist of direct physical connections and/or indirect connections over an underlying transport network (e.g., an internet protocol (IP) transport network).

Each of the Uu, Xn, and NG interfaces may be associated with a protocol stack. The protocol stacks may include a user plane (UP) and a control plane (CP). Generally, user plane data may include data pertaining to users of the UEs 151, for example, internet content downloaded via a web browser application, sensor data uploaded via a tracking application, or email data communicated to or from an email server. Control plane data, by contrast, may comprise signaling and messages that facilitate packaging and routing of user plane data so that it can be exchanged with the DN(s). The NG interface, for example, may be divided into an NG user plane interface (NG-U) and an NG control plane interface (NG-C). The NG-U interface may provide delivery of user plane data between the base stations and the one or more user plane network functions 155B. The NG-C interface may be used for control signaling between the base stations and the one or more control plane network functions 155A. The NG-C interface may provide, for example, NG interface management, UE context management, UE mobility management, transport of NAS messages, paging, PDU session management, and configuration transfer and/or warning message transmission. In some cases, the NG-C interface may support transmission of user data (for example, a small data transmission for an IoT device).

One or more of the base stations of the NG-RAN 152 may be split into a central unit (CU) and one or more distributed units (DUs). A CU may be coupled to one or more DUs via an F1 interface. The CU may handle one or more upper layers in the protocol stack and the DU may handle one or more lower layers in the protocol stack. For example, the CU may handle RRC, PDCP, and SDAP, and the DU may handle RLC, MAC, and PHY. The one or more DUs may be in geographically diverse locations relative to the CU and/or each other. Accordingly, the CU/DU split architecture may permit increased coverage and/or better coordination.

The gNBs 152A and ng-eNBs 152B may provide different user plane and control plane protocol termination towards the UEs 151. For example, the gNB 154A may provide new radio (NR) protocol terminations over a Uu interface associated with a first protocol stack. The ng-eNBs 152B may provide Evolved UMTS Terrestrial Radio Access (E-UTRA) protocol terminations over a Uu interface associated with a second protocol stack.

The 5G-CN 155 may authenticate UEs 151, set up end-to-end connections between UEs 151 and the one or more DNs 158, and provide charging functionality. The 5G-CN 155 may be based on a service-based architecture, in which the NFs making up the 5G-CN 155 offer services to each other and to other elements of the communication network 150 via interfaces. The 5G-CN 155 may include any number of other NFs and any number of instances of each NF.

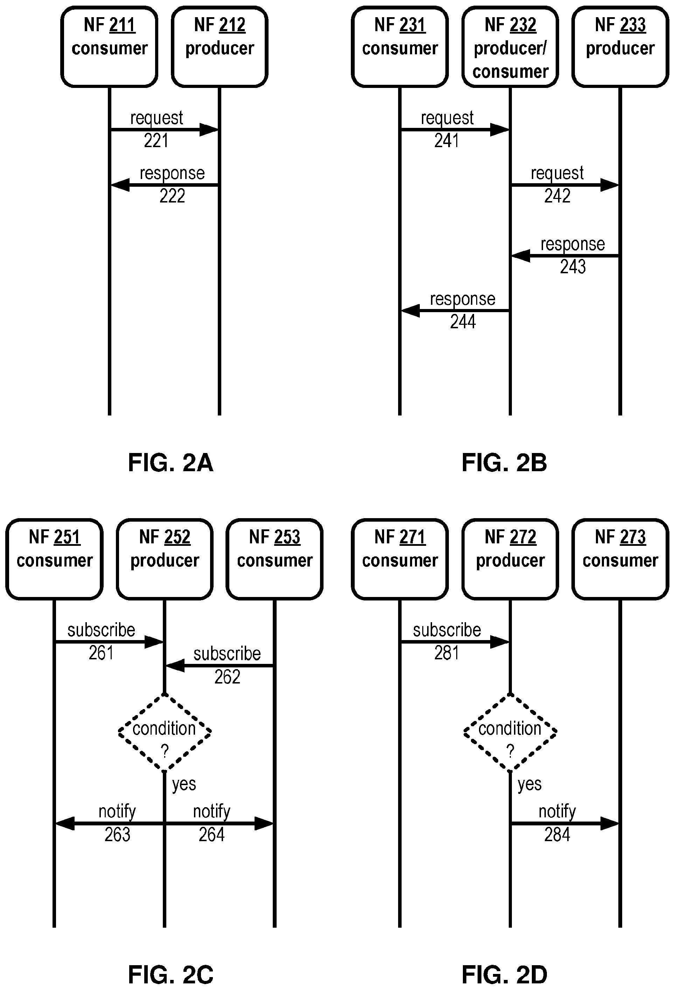

FIG. 2A, FIG. 2B, FIG. 2C, and FIG. 2D illustrate various examples of a framework for a service-based architecture within a core network. In a service-based architecture, a service may be sought by a service consumer and provided by a service producer. Prior to obtaining a particular service, an NF may determine where such as service can be obtained. To discover a service, the NF may communicate with a network repository function (NRF). As an example, an NF that provides one or more services may register with a network repository function (NRF). The NRF may store data relating to the one or more services that the NF is prepared to provide to other NFs in the service-based architecture. A consumer NF may query the NRF to discover a producer NF (for example, by obtaining from the NRF a list of NF instances that provide a particular service).

In the example of FIG. 2A, an NF 211 (a consumer NF in this example) may send a request 221 to an NF 212 (a producer NF). The request 221 may be a request for a particular service and may be sent based on a discovery that NF 212 is a producer of that service. The request 221 may comprise data relating to NF 211 and/or the requested service. The NF 212 may receive request 221, perform one or more actions associated with the requested service (e.g., retrieving data), and provide a response 221. The one or more actions performed by the NF 212 may be based on request data included in the request 221, data stored by NF 212, and/or data retrieved by NF 212. The response 222 may notify NF 211 that the one or more actions have been completed. The response 222 may comprise response data relating to NF 212, the one or more actions, and/or the requested service.

In the example of FIG. 2B, an NF 231 sends a request 241 to an NF 232. In this example, part of the service produced by NF 232 is to send a request 242 to an NF 233. The NF 233 may perform one or more actions and provide a response 243 to NF 232. Based on response 243, NF 232 may send a response 244 to NF 231. It will be understood from FIG. 2B that a single NF may perform the role of producer of services, consumer of services, or both. A particular NF service may include any number of nested NF services produced by one or more other NFs.

FIG. 2C illustrates examples of subscribe-notify interactions between a consumer NF and a producer NF. In FIG. 2C, an NF 251 sends a subscription 261 to an NF 252. An NF 253 sends a subscription 262 to the NF 252. Two NFs are shown in FIG. 2C for illustrative purposes (to demonstrate that the NF 252 may provide multiple subscription services to different NFs), but it will be understood that a subscribe-notify interaction only requires one subscriber. The NFs 251, 253 may be independent from one another. For example, the NFs 251, 253 may independently discover NF 252 and/or independently determine to subscribe to the service offered by NF 252. In response to receipt of a subscription, the NF 252 may provide a notification to the subscribing NF. For example, NF 252 may send a notification 263 to NF 251 based on subscription 261 and may send a notification 264 to NF 253 based on subscription 262.

As shown in the example illustration of FIG. 2C, the sending of the notifications 263, 264 may be based on a determination that a condition has occurred. For example, the notifications 263, 264 may be based on a determination that a particular event has occurred, a determination that a particular condition is outstanding, and/or a determination that a duration of time associated with the subscription has elapsed (for example, a period associated with a subscription for periodic notifications). As shown in the example illustration of FIG. 2C, NF 252 may send notifications 263, 264 to NFs 251, 253 simultaneously and/or in response to the same condition. However, it will be understood that the NF 252 may provide notifications at different times and/or in response to different notification conditions. In an example, the NF 251 may request a notification when a certain parameter, as measured by the NF 252, exceeds a first threshold, and the NF 252 may request a notification when the parameter exceeds a second threshold different from the first threshold. In an example, a parameter of interest and/or a corresponding threshold may be indicated in the subscriptions 261, 262.

FIG. 2D illustrates another example of a subscribe-notify interaction. In FIG. 2D, an NF 271 sends a subscription 281 to an NF 272. In response to receipt of subscription 281 and/or a determination that a notification condition has occurred, NF 272 may send a notification 284. The notification 284 may be sent to an NF 273. Unlike the example in FIG. 2C (in which a notification is sent to the subscribing NF), FIG. 2D demonstrates that a subscription and its corresponding notification may be associated with different NFs. For example, NF 271 may subscribe to the service provided by NF 272 on behalf of NF 273.

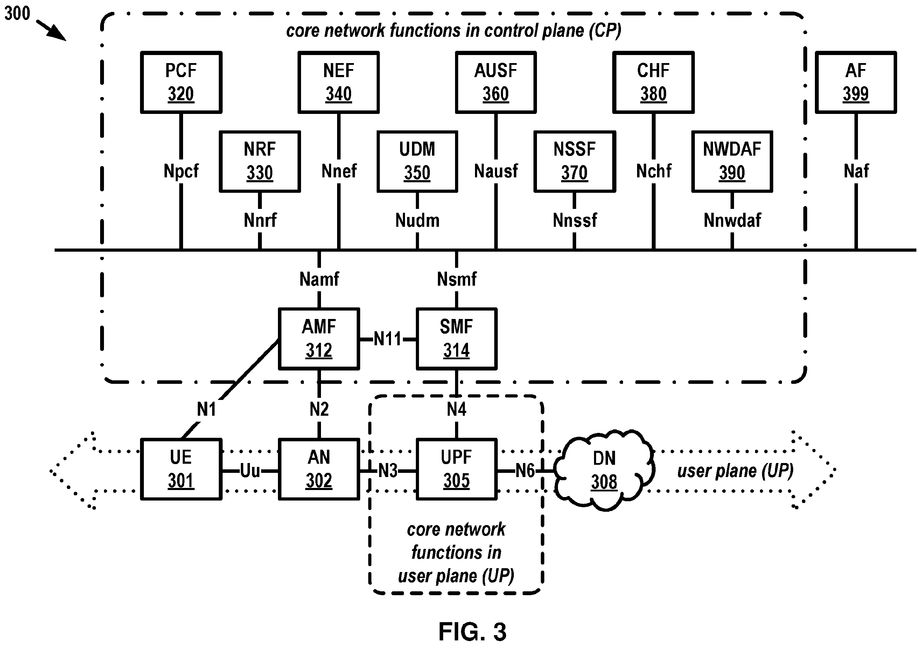

FIG. 3 illustrates another example communication network 300 in which embodiments of the present disclosure may be implemented. Communication network 300 includes a user equipment (UE) 301, an access network (AN) 302, and a data network (DN) 308. The remaining elements depicted in FIG. 3 may be included in and/or associated with a core network. Each element of the core network may be referred to as a network function (NF).

The NFs depicted in FIG. 3 include a user plane function (UPF) 305, an access and mobility management function (AMF) 312, a session management function (SMF) 314, a policy control function (PCF) 320, a network repository function (NRF) 330, a network exposure function (NEF) 340, a unified data management (UDM) 350, an authentication server function (AUSF) 360, a network slice selection function (NSSF) 370, a charging function (CHF) 380, a network data analytics function (NWDAF) 390, and an application function (AF) 399. The UPF 305 may be a user-plane core network function, whereas the NFs 312, 314, and 320-390 may be control-plane core network functions. Although not shown in the example of FIG. 3, the core network may include additional instances of any of the NFs depicted and/or one or more different NF types that provide different services. Other examples of NF type include a gateway mobile location center (GMLC), a location management function (LMF), an operations, administration, and maintenance function (OAM), a public warning system (PWS), a short message service function (SMSF), a unified data repository (UDR), and an unstructured data storage function (UDSF).

Each element depicted in FIG. 3 has an interface with at least one other element. The interface may be a logical connection rather than, for example, a direct physical connection. Any interface may be identified using a reference point representation and/or a service-based representation. In a reference point representation, the letter 'N' is followed by a numeral, indicating an interface between two specific elements. For example, as shown in FIG. 3, AN 302 and UPF 305 interface via 'N3', whereas UPF 305 and DN 308 interface via 'N6'. By contrast, in a service-based representation, the letter 'N' is followed by letters. The letters identify an NF that provides services to the core network. For example, PCF 320 may provide services via interface "Npcf". The PCF 320 may provide services to any NF in the core network via 'Npcf. Accordingly, a service-based representation may correspond to a bundle of reference point representations. For example, the Npcf interface between PCF 320 and the core network generally may correspond to an N7 interface between PCF 320 and SMF 314, an N30 interface between PCF 320 and NEF 340, etc.

The UPF 305 may serve as a gateway for user plane traffic between AN 302 and DN 308. The UE 301 may connect to UPF 305 via a Uu interface and an N3 interface (also described as NG-U interface). The UPF 305 may connect to DN 308 via an N6 interface. The UPF 305 may connect to one or more other UPFs (not shown) via an N9 interface. The UE 301 may be configured to receive services through a protocol data unit (PDU) session, which is a logical connection between UE 301 and DN 308. The UPF 305 (or a plurality of UPFs if desired) may be selected by SMF 314 to handle a particular PDU session between UE 301 and DN 308. The SMF 314 may control the functions of UPF 305 with respect to the PDU session. The SMF 314 may connect to UPF 305 via an N4 interface. The UPF 305 may handle any number of PDU sessions associated with any number of UEs (via any number of ANs). For purposes of handling the one or more PDU sessions, UPF 305 may be controlled by any number of SMFs via any number of corresponding N4 interfaces.

The AMF 312 depicted in FIG. 3 may control UE access to the core network. The UE 301 may register with the network via AMF 312. It may be necessary for UE 301 to register prior to establishing a PDU session. The AMF 312 may manage a registration area of UE 301, enabling the network to track the physical location of UE 301 within the network. For a UE in connected mode, AMF 312 may manage UE mobility, for example, handovers from one AN or portion thereof to another. For a UE in idle mode, AMF 312 may perform registration updates and/or page the UE to transition the UE to connected mode.

The AMF 312 may receive, from UE 301, non-access stratum (NAS) messages transmitted in accordance with NAS protocol. NAS messages relate to communications between UE 301 and the core network. Although NAS messages may be relayed to AMF 312 via AN 302, they may be described as communications via the N1 interface. NAS messages may facilitate UE registration and mobility management, for example, by authenticating, identifying, configuring, and/or managing a connection of UE 301. NAS messages may support session management procedures for maintaining user plane connectivity and quality of service (QoS) of a session between UE 301 and DN 309. If the NAS message involves session management, AMF 312 may send the NAS message to SMF 314. NAS messages may be used to transport messages between UE 301 and other components of the core network (e.g., core network components other than AMF 312 and SMF 314). The AMF 312 may act on a particular NAS message itself, or alternatively, forward the NAS message to an appropriate core network function (e.g., SMF 314, etc.)

The SMF 314 depicted in FIG. 3 may establish, modify, and/or release a PDU session based on messaging received UE 301. The SMF 314 may allocate, manage, and/or assign an IP address to UE 301, for example, upon establishment of a PDU session. There may be multiple SMFs in the network, each of which may be associated with a respective group of wireless devices, base stations, and/or UPFs. A UE with multiple PDU sessions may be associated with a different SMF for each PDU session. As noted above, SMF 314 may select one or more UPFs to handle a PDU session and may control the handling of the PDU session by the selected UPF by providing rules for packet handling (PDR, FAR, QER, etc.). Rules relating to QoS and/or charging for a particular PDU session may be obtained from PCF 320 and provided to UPF 305.

The PCF 320 may provide, to other NFs, services relating to policy rules. The PCF 320 may use subscription data and information about network conditions to determine policy rules and then provide the policy rules to a particular NF which may be responsible for enforcement of those rules. Policy rules may relate to policy control for access and mobility, and may be enforced by the AMF. Policy rules may relate to session management, and may be enforced by the SMF 314. Policy rules may be, for example, network-specific, wireless device-specific, session-specific, or data flow-specific.

The NRF 330 may provide service discovery. The NRF 330 may belong to a particular PLMN. The NRF 330 may maintain NF profiles relating to other NFs in the communication network 300. The NF profile may include, for example, an address, PLMN, and/or type of the NF, a slice identifier, a list of the one or more services provided by the NF, and the authorization required to access the services.

The NEF 340 depicted in FIG. 3 may provide an interface to external domains, permitting external domains to selectively access the control plane of the communication network 300. The external domain may comprise, for example, third-party network functions, application functions, etc. The NEF 340 may act as a proxy between external elements and network functions such as AMF 312, SMF 314, PCF 320, UDM 350, etc. As an example, NEF 340 may determine a location or reachability status of UE 301 based on reports from AMF 312, and provide status information to an external element. As an example, an external element may provide, via NEF 340, information that facilitates the setting of parameters for establishment of a PDU session. The NEF 340 may determine which data and capabilities of the control plane are exposed to the external domain. The NEF 340 may provide secure exposure that authenticates and/or authorizes an external entity to which data or capabilities of the communication network 300 are exposed. The NEF 340 may selectively control the exposure such that the internal architecture of the core network is hidden from the external domain.

The UDM 350 may provide data storage for other NFs. The UDM 350 may permit a consolidated view of network information that may be used to ensure that the most relevant information can be made available to different NFs from a single resource. The UDM 350 may store and/or retrieve information from a unified data repository (UDR). For example, UDM 350 may obtain user subscription data relating to UE 301 from the UDR.

The AUSF 360 may support mutual authentication of UE 301 by the core network and authentication of the core network by UE 301. The AUSF 360 may perform key agreement procedures and provide keying material that can be used to improve security.

The NSSF 370 may select one or more network slices to be used by the UE 301. The NSSF 370 may select a slice based on slice selection information. For example, the NSSF 370 may receive Single Network Slice Selection Assistance Information (S-NSSAI) and map the S-NSSAI to a network slice instance identifier (NSI).

The CHF 380 may control billing-related tasks associated with UE 301. For example, UPF 305 may report traffic usage associated with UE 301 to SMF 314. The SMF 314 may collect usage data from UPF 305 and one or more other UPFs. The usage data may indicate how much data is exchanged, what DN the data is exchanged with, a network slice associated with the data, or any other information that may influence billing. The SMF 314 may share the collected usage data with the CHF. The CHF may use the collected usage data to perform billing-related tasks associated with UE 301. The CHF may, depending on the billing status of UE 301, instruct SMF 314 to limit or influence access of UE 301 and/or to provide billing-related notifications to UE 301.

The NWDAF 390 may collect and analyze data from other network functions and offer data analysis services to other network functions. As an example, NWDAF 390 may collect data relating to a load level for a particular network slice instance from UPF 305, AMF 312, and/or SMF 314. Based on the collected data, NWDAF 390 may provide load level data to the PCF 320 and/or NSSF 370, and/or notify the PC220 and/or NSSF 370 if load level for a slice reaches and/or exceeds a load level threshold.

The AF 399 may be outside the core network, but may interact with the core network to provide information relating to the QoS requirements or traffic routing preferences associated with a particular application. The AF 399 may access the core network based on the exposure constraints imposed by the NEF 340. However, an operator of the core network may consider the AF 399 to be a trusted domain that can access the network directly.

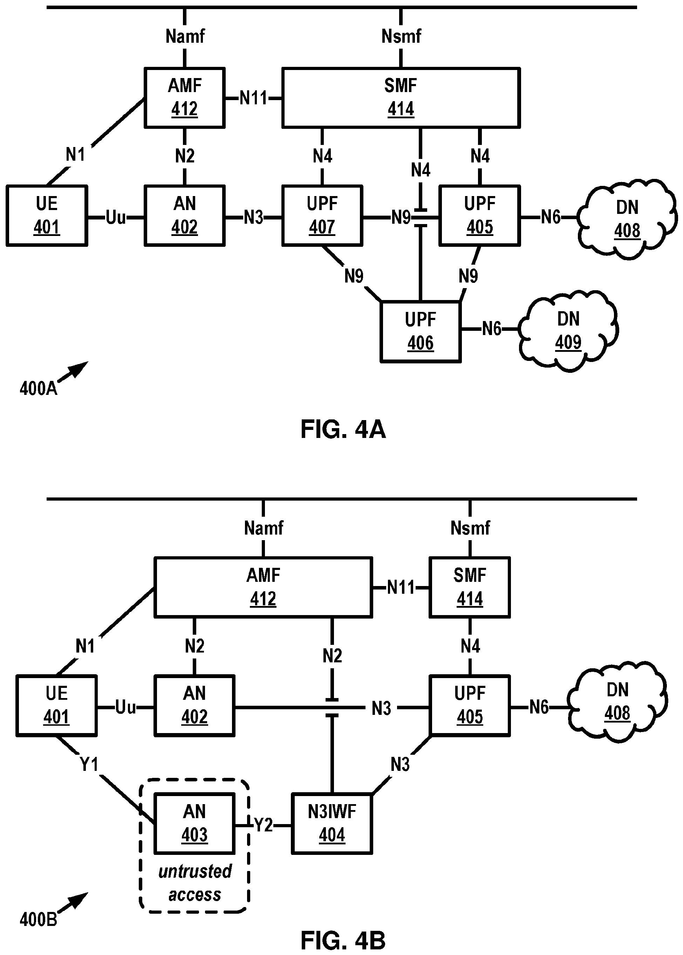

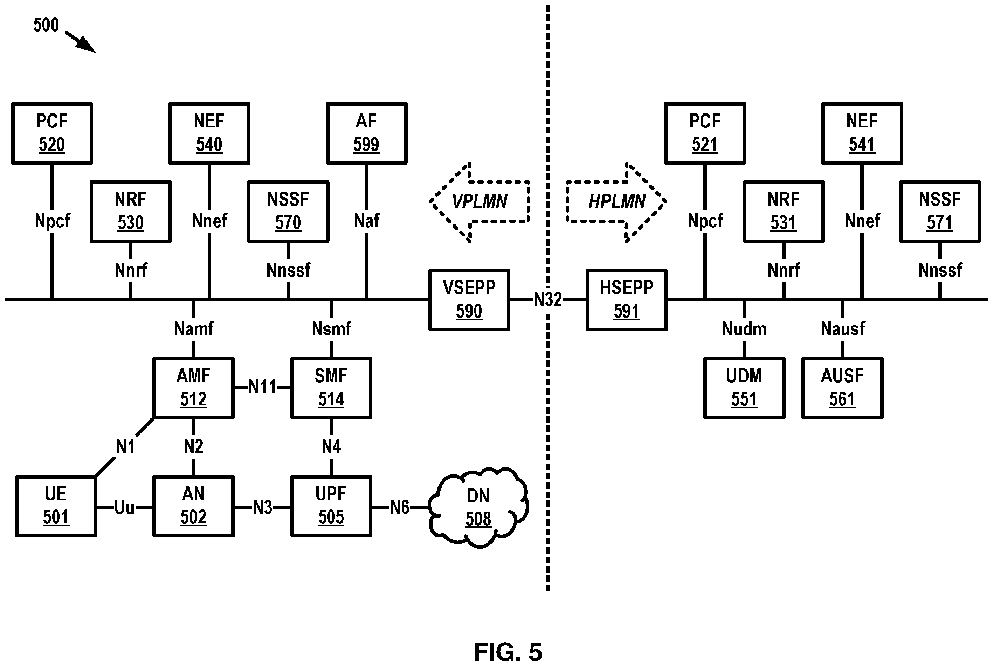

FIGS. 4A, 4B, and 5 illustrate other examples of core network architectures that are analogous in some respects to the core network architecture 300 depicted in FIG. 3. For conciseness, some of the core network elements depicted in FIG. 3 are omitted. Many of the elements depicted in FIGS. 4A, 4B, and 5 are analogous in some respects to elements depicted in FIG. 3. For conciseness, some of the details relating to their functions or operation are omitted.

FIG. 4A illustrates an example of a core network architecture 400A comprising an arrangement of multiple UPFs. Core network architecture 400A includes a UE 401, an AN 402, an AMF 412, and an SMF 414. Unlike previous examples of core network architectures described above, FIG. 4A depicts multiple UPFs, including a UPF 405, a UPF 406, and a UPF 407, and multiple DNs, including a DN 408 and a DN 409. Each of the multiple UPFs 405, 406, 407 may communicate with the SMF 414 via an N4 interface. The DNs 408, 409 communicate with the UPFs 405, 406, respectively, via N6 interfaces. As shown in FIG. 4A, the multiple UPFs 405, 406, 407 may communicate with one another via N9 interfaces.

The UPFs 405, 406, 407 may perform traffic detection, in which the UPFs identify and/or classify packets. Packet identification may be performed based on packet detection rules (PDR) provided by the SMF 414. A PDR may include packet detection information comprising one or more of: a source interface, a UE IP address, core network (CN) tunnel information (e.g., a CN address of an N3/N9 tunnel corresponding to a PDU session), a network instance identifier, a quality of service flow identifier (QFI), a filter set (for example, an IP packet filter set or an ethernet packet filter set), and/or an application identifier.

In addition to indicating how a particular packet is to be detected, a PDR may further indicate rules for handling the packet upon detection thereof. The rules may include, for example, forwarding action rules (FARs), multi-access rules (MARs), usage reporting rules (URRs), QoS enforcement rules (QERs), etc. For example, the PDR may comprise one or more FAR identifiers, MAR identifiers, URR identifiers, and/or QER identifiers. These identifiers may indicate the rules that are prescribed for the handling of a particular detected packet.

The UPF 405 may perform traffic forwarding in accordance with a FAR. For example, the FAR may indicate that a packet associated with a particular PDR is to be forwarded, duplicated, dropped, and/or buffered. The FAR may indicate a destination interface, for example, "access" for downlink or "core" for uplink. If a packet is to be buffered, the FAR may indicate a buffering action rule (BAR). As an example, UPF 405 may perform data buffering of a certain number downlink packets if a PDU session is deactivated.

The UPF 405 may perform QoS enforcement in accordance with a QER. For example, the QER may indicate a guaranteed bitrate that is authorized and/or a maximum bitrate to be enforced for a packet associated with a particular PDR. The QER may indicate that a particular guaranteed and/or maximum bitrate may be for uplink packets and/or downlink packets. The UPF 405 may mark packets belonging to a particular QoS flow with a corresponding QFI. The marking may enable a recipient of the packet to determine a QoS of the packet.

The UPF 405 may provide usage reports to the SMF 414 in accordance with a URR. The URR may indicate one or more triggering conditions for generation and reporting of the usage report, for example, immediate reporting, periodic reporting, a threshold for incoming uplink traffic, or any other suitable triggering condition. The URR may indicate a method for measuring usage of network resources, for example, data volume, duration, and/or event.

As noted above, the DNs 408, 409 may comprise public DNs (e.g., the Internet), private DNs (e.g., private, internal corporate-owned DNs), and/or intra-operator DNs. Each DN may provide an operator service and/or a third-party service. The service provided by a DN may be the Internet, an IP multimedia subsystem (IMS), an augmented or virtual reality network, an edge computing or mobile edge computing (MEC) network, etc. Each DN may be identified using a data network name (DNN). The UE 401 may be configured to establish a first logical connection with DN 408 (a first PDU session), a second logical connection with DN 409 (a second PDU session), or both simultaneously (first and second PDU sessions).

Each PDU session may be associated with at least one UPF configured to operate as a PDU session anchor (PSA, or "anchor"). The anchor may be a UPF that provides an N6 interface with a DN.

In the example of FIG. 4A, UPF 405 may be the anchor for the first PDU session between UE 401 and DN 408, whereas the UPF 406 may be the anchor for the second PDU session between UE 401 and DN 409. The core network may use the anchor to provide service continuity of a particular PDU session (for example, IP address continuity) as UE 401 moves from one access network to another. For example, suppose that UE 401 establishes a PDU session using a data path to the DN 408 using an access network other than AN 402. The data path may include UPF 405 acting as anchor. Suppose further that the UE 401 later moves into the coverage area of the AN 402. In such a scenario, SMF 414 may select a new UPF (UPF 407) to bridge the gap between the newly-entered access network (AN 402) and the anchor UPF (UPF 405). The continuity of the PDU session may be preserved as any number of UPFs are added or removed from the data path. When a UPF is added to a data path, as shown in FIG. 4A, it may be described as an intermediate UPF and/or a cascaded UPF.

As noted above, UPF 406 may be the anchor for the second PDU session between UE 401 and DN 409. Although the anchor for the first and second PDU sessions are associated with different UPFs in FIG. 4A, it will be understood that this is merely an example. It will also be understood that multiple PDU sessions with a single DN may correspond to any number of anchors. When there are multiple UPFs, a UPF at the branching point (UPF 407 in FIG. 4) may operate as an uplink classifier (UL-CL). The UL-CL may divert uplink user plane traffic to different UPFs.

The SMF 414 may allocate, manage, and/or assign an IP address to UE 401, for example, upon establishment of a PDU session. The SMF 414 may maintain an internal pool of IP addresses to be assigned. The SMF 414 may, if necessary, assign an IP address provided by a dynamic host configuration protocol (DHCP) server or an authentication, authorization, and accounting (AAA) server. IP address management may be performed in accordance with a session and service continuity (SSC) mode. In SSC mode 1, an IP address of UE 401 may be maintained (and the same anchor UPF may be used) as the wireless device moves within the network. In SSC mode 2, the IP address of UE 401 changes as UE 401 moves within the network (e.g., the old IP address and UPF may be abandoned and a new IP address and anchor UPF may be established). In SSC mode 3, it may be possible to maintain an old IP address (similar to SSC mode 1) temporarily while establishing a new IP address (similar to SSC mode 2), thus combining features of SSC modes 1 and 2. Applications that are sensitive to IP address changes may operate in accordance with SSC mode 1.

UPF selection may be controlled by SMF 414. For example, upon establishment and/or modification of a PDU session between UE 401 and DN 408, SMF 414 may select UPF 405 as the anchor for the PDU session and/or UPF 407 as an intermediate UPF. Criteria for UPF selection include path efficiency and/or speed between AN 402 and DN 408. The reliability, load status, location, slice support and/or other capabilities of candidate UPFs may also be considered.

FIG. 4B illustrates an example of a core network architecture 400B that accommodates untrusted access. Similar to FIG. 4A, UE 401 as depicted in FIG. 4B connects to DN 408 via AN 402 and UPF 405. The AN 402 and UPF 405 constitute trusted (e.g., 3GPP) access to the DN 408. By contrast, UE 401 may also access DN 408 using an untrusted access network, AN 403, and a non-3GPP interworking function (N3IWF) 404.

The AN 403 may be, for example, a wireless land area network (WLAN) operating in accordance with the IEEE 802.11 standard. The UE 401 may connect to AN 403, via an interface Y1, in whatever manner is prescribed for AN 403. The connection to AN 403 may or may not involve authentication. The UE 401 may obtain an IP address from AN 403. The UE 401 may determine to connect to core network 400B and select untrusted access for that purpose. The AN 403 may communicate with N3IWF 404 via a Y2 interface. After selecting untrusted access, the UE 401 may provide N3IWF 404 with sufficient information to select an AMF. The selected AMF may be, for example, the same AMF that is used by UE 401 for 3GPP access (AMF 412 in the present example). The N3IWF 404 may communicate with AMF 412 via an N2 interface. The UPF 405 may be selected and N3IWF 404 may communicate with UPF 405 via an N3 interface. The UPF 405 may be a PDU session anchor (PSA) and may remain the anchor for the PDU session even as UE 401 shifts between trusted access and untrusted access.

FIG. 5 illustrates an example of a core network architecture 500 in which a UE 501 is in a roaming scenario. In a roaming scenario, UE 501 is a subscriber of a first PLMN (a home PLMN, or HPLMN) but attaches to a second PLMN (a visited PLMN, or VPLMN). Core network architecture 500 includes UE 501, an AN 502, a UPF 505, and a DN 508. The AN 502 and UPF 505 may be associated with a VPLMN. The VPLMN may manage the AN 502 and UPF 505 using core network elements associated with the VPLMN, including an AMF 512, an SMF 514, a PCF 520, an NRF 530, an NEF 540, and an NSSF 570. An AF 599 may be adjacent the core network of the VPLMN.

The UE 501 may not be a subscriber of the VPLMN. The AMF 512 may authorize UE 501 to access the network based on, for example, roaming restrictions that apply to UE 501. In order to obtain network services provided by the VPLMN, it may be necessary for the core network of the VPLMN to interact with core network elements of a HPLMN of UE 501, in particular, a PCF 521, an NRF 531, an NEF 541, a UDM 551, and/or an AUSF 561. The VPLMN and HPLMN may communicate using an N32 interface connecting respective security edge protection proxies (SEPPs). In FIG. 5, the respective SEPPs are depicted as a VSEPP 590 and an HSEPP 591.

The VSEPP 590 and the HSEPP 591 communicate via an N32 interface for defined purposes while concealing information about each PLMN from the other. The SEPPs may apply roaming policies based on communications via the N32 interface. The PCF 520 and PCF 521 may communicate via the SEPPs to exchange policy-related signaling. The NRF 530 and NRF 531 may communicate via the SEPPs to enable service discovery of NFs in the respective PLMNs. The VPLMN and HPLMN may independently maintain NEF 540 and NEF 541. The NSSF 570 and NSSF 571 may communicate via the SEPPs to coordinate slice selection for UE 501. The HPLMN may handle all authentication and subscription related signaling. For example, when the UE 501 registers or requests service via the VPLMN, the VPLMN may authenticate UE 501 and/or obtain subscription data of UE 501 by accessing, via the SEPPs, the UDM 551 and AUSF 561 of the HPLMN.

The core network architecture 500 depicted in FIG. 5 may be referred to as a local breakout configuration, in which UE 501 accesses DN 508 using one or more UPFs of the VPLMN (i.e., UPF 505). However, other configurations are possible. For example, in a home-routed configuration (not shown in FIG. 5), UE 501 may access a DN using one or more UPFs of the HPLMN. In the home-routed configuration, an N9 interface may run parallel to the N32 interface, crossing the frontier between the VPLMN and the HPLMN to carry user plane data. One or more SMFs of the respective PLMNs may communicate via the N32 interface to coordinate session management for UE 501. The SMFs may control their respective UPFs on either side of the frontier.

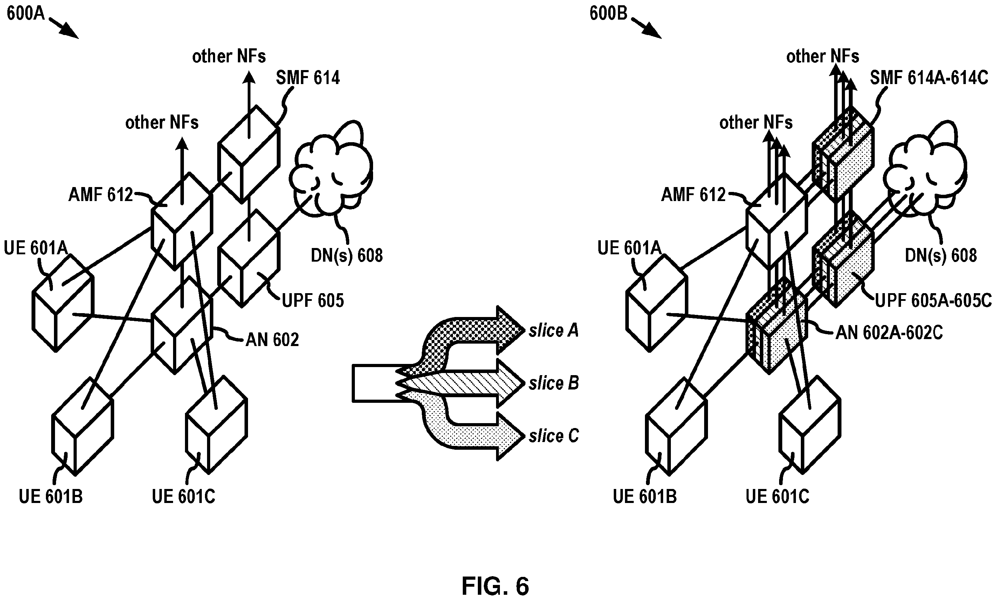

FIG. 6 illustrates an example of network slicing. Network slicing may refer to division of shared infrastructure (e.g., physical infrastructure) into distinct logical networks. These distinct logical networks may be independently controlled, isolated from one another, and/or associated with dedicated resources.

Network architecture 600A illustrates an un-sliced physical network corresponding to a single logical network. The network architecture 600A comprises a user plane wherein UEs 601A, 601B, 601C (collectively, UEs 601) have a physical and logical connection to a DN 608 via an AN 602 and a UPF 605. The network architecture 600A comprises a control plane wherein an AMF 612 and a SMF 614 control various aspects of the user plane.

The network architecture 600A may have a specific set of characteristics (e.g., relating to maximum bit rate, reliability, latency, bandwidth usage, power consumption, etc.). This set of characteristics may be affected by the nature of the network elements themselves (e.g., processing power, availability of free memory, proximity to other network elements, etc.) or the management thereof (e.g., optimized to maximize bit rate or reliability, reduce latency or power bandwidth usage, etc.). The characteristics of network architecture 600A may change over time, for example, by upgrading equipment or by modifying procedures to target a particular characteristic. However, at any given time, network architecture 600A will have a single set of characteristics that may or may not be optimized for a particular use case. For example, UEs 601A, 601B, 601C may have different requirements, but network architecture 600A can only be optimized for one of the three.

Network architecture 600B is an example of a sliced physical network divided into multiple logical networks. In FIG. 6, the physical network is divided into three logical networks, referred to as slice A, slice B, and slice C. For example, UE 601A may be served by AN 602A, UPF 605A, AMF 612, and SMF 614A. UE 601B may be served by AN 602B, UPF 605B, AMF 612, and SMF 614B. UE 601C may be served by AN 602C, UPF 605C, AMF 612, and SMF 614C. Although the respective UEs 601 communicate with different network elements from a logical perspective, these network elements may be deployed by a network operator using the same physical network elements.

Each network slice may be tailored to network services having different sets of characteristics. For example, slice A may correspond to enhanced mobile broadband (eMBB) service. Mobile broadband may refer to internet access by mobile users, commonly associated with smartphones. Slice B may correspond to ultra-reliable low-latency communication (URLLC), which focuses on reliability and speed. Relative to eMBB, URLLC may improve the feasibility of use cases such as autonomous driving and telesurgery. Slice C may correspond to massive machine type communication (mMTC), which focuses on low-power services delivered to a large number of users. For example, slice C may be optimized for a dense network of battery-powered sensors that provide small amounts of data at regular intervals. Many mMTC use cases would be prohibitively expensive if they operated using an eMBB or URLLC network.

If the service requirements for one of the UEs 601 changes, then the network slice serving that UE can be updated to provide better service. Moreover, the set of network characteristics corresponding to eMBB, URLLC, and mMTC may be varied, such that differentiated species of eMBB, URLLC, and mMTC are provided. Alternatively, network operators may provide entirely new services in response to, for example, customer demand.

In FIG. 6, each of the UEs 601 has its own network slice. However, it will be understood that a single slice may serve any number of UEs and a single UE may operate using any number of slices. Moreover, in the example network architecture 600B, the AN 602, UPF 605 and SMF 614 are separated into three separate slices, whereas the AMF 612 is unsliced. However, it will be understood that a network operator may deploy any architecture that selectively utilizes any mix of sliced and unsliced network elements, with different network elements divided into different numbers of slices. Although FIG. 6 only depicts three core network functions, it will be understood that other core network functions may be sliced as well. A PLMN that supports multiple network slices may maintain a separate network repository function (NFR) for each slice, enabling other NFs to discover network services associated with that slice.

Network slice selection may be controlled by an AMF, or alternatively, by a separate network slice selection function (NSSF). For example, a network operator may define and implement distinct network slice instances (NSIs). Each NSI may be associated with single network slice selection assistance information (S-NSSAI). The S-NSSAI may include a particular slice/service type (SST) indicator (indicating eMBB, URLLC, mMTC, etc.). as an example, a particular tracking area may be associated with one or more configured S-NSSAIs. UEs may identify one or more requested and/or subscribed S-NSSAIs (e.g., during registration). The network may indicate to the UE one or more allowed and/or rejected S-NSSAIs.

The S-NSSAI may further include a slice differentiator (SD) to distinguish between different tenants of a particular slice and/or service type. For example, a tenant may be a customer (e.g., vehicle manufacture, service provider, etc.) of a network operator that obtains (for example, purchases) guaranteed network resources and/or specific policies for handling its subscribers. The network operator may configure different slices and/or slice types, and use the SD to determine which tenant is associated with a particular slice.

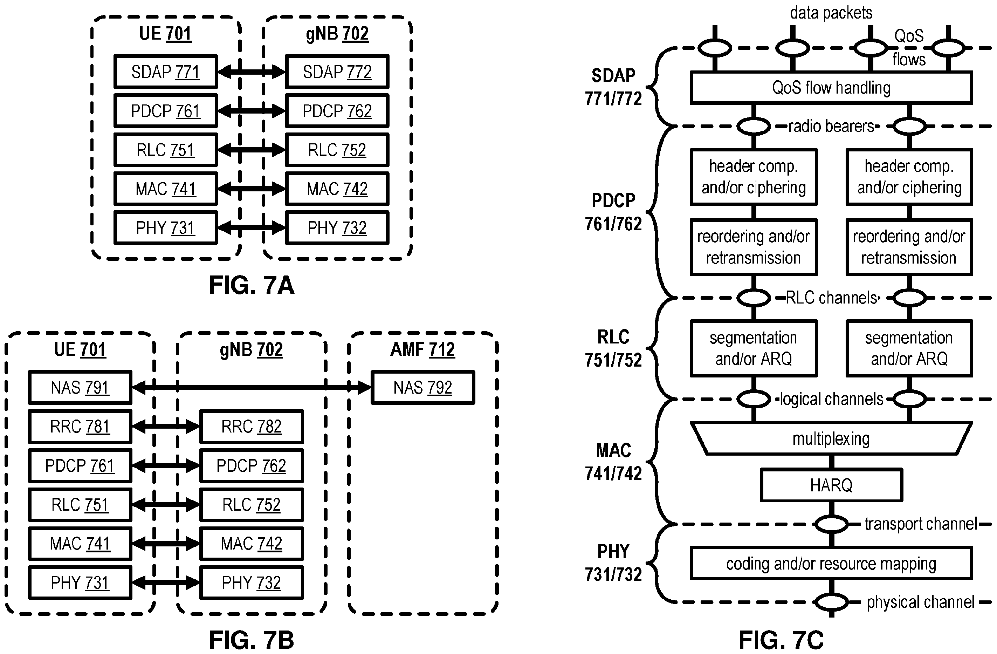

FIG. 7A, FIG. 7B, and FIG. 7C illustrate a user plane (UP) protocol stack, a control plane (CP) protocol stack, and services provided between protocol layers of the UP protocol stack.

The layers may be associated with an open system interconnection (OSI) model of computer networking functionality. In the OSI model, layer 1 may correspond to the bottom layer, with higher layers on top of the bottom layer. Layer 1 may correspond to a physical layer, which is concerned with the physical infrastructure used for transfer of signals (for example, cables, fiber optics, and/or radio frequency transceivers). In New Radio (NR), layer 1 may comprise a physical layer (PHY). Layer 2 may correspond to a data link layer. Layer 2 may be concerned with packaging of data (into, e.g., data frames) for transfer, between nodes of the network, using the physical infrastructure of layer 1. In NR, layer 2 may comprise a media access control layer (MAC), a radio link control layer (RLC), a packet data convergence layer (PDCP), and a service data application protocol layer (SDAP).

Layer 3 may correspond to a network layer. Layer 3 may be concerned with routing of the data which has been packaged in layer 2. Layer 3 may handle prioritization of data and traffic avoidance. In NR, layer 3 may comprise a radio resource control layer (RRC) and a non-access stratum layer (NAS). Layers 4 through 7 may correspond to a transport layer, a session layer, a presentation layer, and an application layer. The application layer interacts with an end user to provide data associated with an application. In an example, an end user implementing the application may generate data associated with the application and initiate sending of that information to a targeted data network (e.g., the Internet, an application server, etc.). Starting at the application layer, each layer in the OSI model may manipulate and/or repackage the information and deliver it to a lower layer. At the lowest layer, the manipulated and/or repackaged information may be exchanged via physical infrastructure (for example, electrically, optically, and/or electromagnetically). As it approaches the targeted data network, the information will be unpackaged and provided to higher and higher layers, until it once again reaches the application layer in a form that is usable by the targeted data network (e.g., the same form in which it was provided by the end user). To respond to the end user, the data network may perform this procedure in reverse.

FIG. 7A illustrates a user plane protocol stack. The user plane protocol stack may be a new radio (NR) protocol stack for a Uu interface between a UE 701 and a gNB 702. In layer 1 of the UP protocol stack, the UE 701 may implement PHY 731 and the gNB 702 may implement PHY 732. In layer 2 of the UP protocol stack, the UE 701 may implement MAC 741, RLC 751, PDCP 761, and SDAP 771. The gNB 702 may implement MAC 742, RLC 752, PDCP 762, and SDAP 772.

FIG. 7B illustrates a control plane protocol stack. The control plane protocol stack may be an NR protocol stack for the Uu interface between the UE 701 and the gNB 702 and/or an N1 interface between the UE 701 and an AMF 712. In layer 1 of the CP protocol stack, the UE 701 may implement PHY 731 and the gNB 702 may implement PHY 732. In layer 2 of the CP protocol stack, the UE 701 may implement MAC 741, RLC 751, PDCP 761, RRC 781, and NAS 791. The gNB 702 may implement MAC 742, RLC 752, PDCP 762, and RRC 782. The AMF 712 may implement NAS 792.

The NAS may be concerned with the non-access stratum, in particular, communication between the UE 701 and the core network (e.g., the AMF 712). Lower layers may be concerned with the access stratum, for example, communication between the UE 701 and the gNB 702. Messages sent between the UE 701 and the core network may be referred to as NAS messages. In an example, a NAS message may be relayed by the gNB 702, but the content of the NAS message (e.g., information elements of the NAS message) may not be visible to the gNB 702.

FIG. 7C illustrates an example of services provided between protocol layers of the NR user plane protocol stack illustrated in FIG. 7A. The UE 701 may receive services through a PDU session, which may be a logical connection between the UE 701 and a data network (DN). The UE 701 and the DN may exchange data packets associated with the PDU session. The PDU session may comprise one or more quality of service (QoS) flows. SDAP 771 and SDAP 772 may perform mapping and/or demapping between the one or more QoS flows of the PDU session and one or more radio bearers (e.g., data radio bearers). The mapping between the QoS flows and the data radio bearers may be determined in the SDAP 772 by the gNB 702, and the UE 701 may be notified of the mapping (e.g., based on control signaling and/or reflective mapping). For reflective mapping, the SDAP 772 of the gNB 220 may mark downlink packets with a QoS flow indicator (QFI) and deliver the downlink packets to the UE 701. The UE 701 may determine the mapping based on the QFI of the downlink packets.

PDCP 761 and PDCP 762 may perform header compression and/or decompression. Header compression may reduce the amount of data transmitted over the physical layer. The PDCP 761 and PDCP 762 may perform ciphering and/or deciphering. Ciphering may reduce unauthorized decoding of data transmitted over the physical layer (e.g., intercepted on an air interface), and protect data integrity (e.g., to ensure control messages originate from intended sources). The PDCP 761 and PDCP 762 may perform retransmissions of undelivered packets, in-sequence delivery and reordering of packets, duplication of packets, and/or identification and removal of duplicate packets. In a dual connectivity scenario, PDCP 761 and PDCP 762 may perform mapping between a split radio bearer and RLC channels.

RLC 751 and RLC 752 may perform segmentation, retransmission through Automatic Repeat Request (ARQ). The RLC 751 and RLC 752 may perform removal of duplicate data units received from MAC 741 and MAC 742, respectively. The RLCs 213 and 223 may provide RLC channels as a service to PDCPs 214 and 224, respectively.

MAC 741 and MAC 742 may perform multiplexing and/or demultiplexing of logical channels. MAC 741 and MAC 742 may map logical channels to transport channels. In an example, UE 701 may, in MAC 741, multiplex data units of one or more logical channels into a transport block. The UE 701 may transmit the transport block to the gNB 702 using PHY 731. The gNB 702 may receive the transport block using PHY 732 and demultiplex data units of the transport blocks back into logical channels. MAC 741 and MAC 742 may perform error correction through Hybrid Automatic Repeat Request (HARQ), logical channel prioritization, and/or padding.

PHY 731 and PHY 732 may perform mapping of transport channels to physical channels. PHY 731 and PHY 732 may perform digital and analog signal processing functions (e.g., coding/decoding and modulation/demodulation) for sending and receiving information (e.g., transmission via an air interface). PHY 731 and PHY 732 may perform multi-antenna mapping.

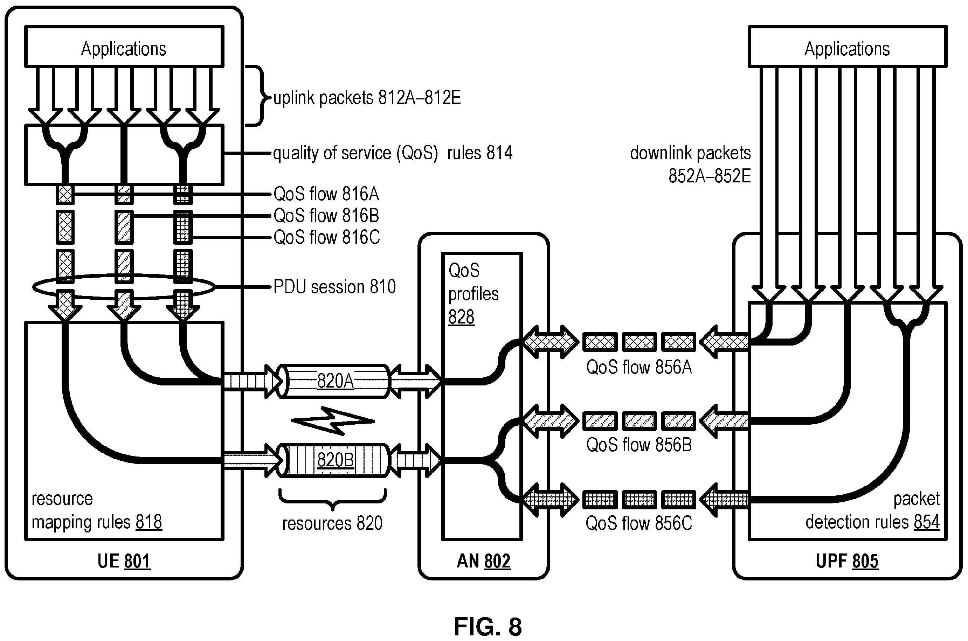

FIG. 8 illustrates an example of a quality of service (QoS) model for differentiated data exchange. In the QoS model of FIG. 8, there are a UE 801, a AN 802, and a UPF 805. The QoS model facilitates prioritization of certain packet or protocol data units (PDUs), also referred to as packets. For example, higher-priority packets may be exchanged faster and/or more reliably than lower-priority packets. The network may devote more resources to exchange of high-QoS packets.

In the example of FIG. 8, a PDU session 810 is established between UE 801 and UPF 805. The PDU session 810 may be a logical connection enabling the UE 801 to exchange data with a particular data network (for example, the Internet). The UE 801 may request establishment of the PDU session 810. At the time that the PDU session 810 is established, the UE 801 may, for example, identify the targeted data network based on its data network name (DNN). The PDU session 810 may be managed, for example, by a session management function (SMF, not shown). In order to facilitate exchange of data associated with the PDU session 810, between the UE 801 and the data network, the SMF may select the UPF 805 (and optionally, one or more other UPFs, not shown).

One or more applications associated with UE 801 may generate uplink packets 812A-812E associated with the PDU session 810. In order to work within the QoS model, UE 801 may apply QoS rules 814 to uplink packets 812A-812E. The QoS rules 814 may be associated with PDU session 810 and may be determined and/or provided to the UE 801 when PDU session 810 is established and/or modified. Based on QoS rules 814, UE 801 may classify uplink packets 812A-812E, map each of the uplink packets 812A-812E to a QoS flow, and/or mark uplink packets 812A-812E with a QoS flow indicator (QFI). As a packet travels through the network, and potentially mixes with other packets from other UEs having potentially different priorities, the QFI indicates how the packet should be handled in accordance with the QoS model. In the present illustration, uplink packets 812A, 812B are mapped to QoS flow 816A, uplink packet 812C is mapped to QoS flow 816B, and the remaining packets are mapped to QoS flow 816C.

The QoS flows may be the finest granularity of QoS differentiation in a PDU session. In the figure, three QoS flows 816A-816C are illustrated. However, it will be understood that there may be any number of QoS flows. Some QoS flows may be associated with a guaranteed bit rate (GBR QoS flows) and others may have bit rates that are not guaranteed (non-GBR QoS flows). QoS flows may also be subject to per-UE and per-session aggregate bit rates. One of the QoS flows may be a default QoS flow. The QoS flows may have different priorities. For example, QoS flow 816A may have a higher priority than QoS flow 816B, which may have a higher priority than QoS flow 816C. Different priorities may be reflected by different QoS flow characteristics. For example, QoS flows may be associated with flow bit rates. A particular QoS flow may be associated with a guaranteed flow bit rate (GFBR) and/or a maximum flow bit rate (MFBR). QoS flows may be associated with specific packet delay budgets (PDBs), packet error rates (PERs), and/or maximum packet loss rates. QoS flows may also be subject to per-UE and per-session aggregate bit rates.

In order to work within the QoS model, UE 801 may apply resource mapping rules 818 to the QoS flows 816A-816C. The air interface between UE 801 and AN 802 may be associated with resources 820. In the present illustration, QoS flow 816A is mapped to resource 820A, whereas QoS flows 816B, 816C are mapped to resource 820B. The resource mapping rules 818 may be provided by the AN 802. In order to meet QoS requirements, the resource mapping rules 818 may designate more resources for relatively high-priority QoS flows. With more resources, a high-priority QoS flow such as QoS flow 816A may be more likely to obtain the high flow bit rate, low packet delay budget, or other characteristic associated with QoS rules 814. The resources 820 may comprise, for example, radio bearers. The radio bearers (e.g., data radio bearers) may be established between the UE 801 and the AN 802. The radio bearers in 5G, between the UE 801 and the AN 802, may be distinct from bearers in LTE, for example, Evolved Packet System (EPS) bearers between a UE and a packet data network gateway (PGW), S1 bearers between an eNB and a serving gateway (SGW), and/or an S5/S8 bearer between an SGW and a PGW.

Once a packet associated with a particular QoS flow is received at AN 802 via resource 820A or resource 820B, AN 802 may separate packets into respective QoS flows 856A-856C based on QoS profiles 828. The QoS profiles 828 may be received from an SMF. Each QoS profile may correspond to a QFI, for example, the QFI marked on the uplink packets 812A-812E. Each QoS profile may include QoS parameters such as 5G QoS identifier (5QI) and an allocation and retention priority (ARP). The QoS profile for non-GBR QoS flows may further include additional QoS parameters such as a reflective QoS attribute (RQA).The QoS profile for GBR QoS flows may further include additional QoS parameters such as a guaranteed flow bit rate (GFBR), a maximum flow bit rate (MFBR), and/or a maximum packet loss rate. The 5QI may be a standardized 5QI which have one-to-one mapping to a standardized combination of 5G QoS characteristics per well-known services. The 5QI may be a dynamically assigned 5QI which the standardized 5QI values are not defined. The 5QI may represent 5G QoS characteristics. The 5QI may comprise a resource type, a default priority level, a packet delay budget (PDB), a packet error rate (PER), a maximum data burst volume, and/or an averaging window. The resource type may indicate a non-GBR QoS flow, a GBR QoS flow or a delay-critical GBR QoS flow. The averaging window may represent a duration over which the GFBR and/or MFBR is calculated. ARP may be a priority level comprising pre-emption capability and a pre-emption vulnerability. Based on the ARP, the AN 802 may apply admission control for the QoS flows in a case of resource limitations.

The AN 802 may select one or more N3 tunnels 850 for transmission of the QoS flows 856A-856C. After the packets are divided into QoS flows 856A-856C, the packet may be sent to UPF 805 (e.g., towards a DN) via the selected one or more N3 tunnels 850. The UPF 805 may verify that the QFIs of the uplink packets 812A-812E are aligned with the QoS rules 814 provided to the UE 801. The UPF 805 may measure and/or count packets and/or provide packet metrics to, for example, a PCF.

The figure also illustrates a process for downlink. In particular, one or more applications may generate downlink packets 852A-852E. The UPF 805 may receive downlink packets 852A-852E from one or more DNs and/or one or more other UPFs. As per the QoS model, UPF 805 may apply packet detection rules (PDRs) 854 to downlink packets 852A-852E. Based on PDRs 854, UPF 805 may map packets 852A-852E into QoS flows. In the present illustration, downlink packets 852A, 852B are mapped to QoS flow 856A, downlink packet 852C is mapped to QoS flow 856B, and the remaining packets are mapped to QoS flow 856C.

The QoS flows 856A-856C may be sent to AN 802. The AN 802 may apply resource mapping rules to the QoS flows 856A-856C. In the present illustration, QoS flow 856A is mapped to resource 820A, whereas QoS flows 856B, 856C are mapped to resource 820B. In order to meet QoS requirements, the resource mapping rules may designate more resources to high-priority QoS flows.

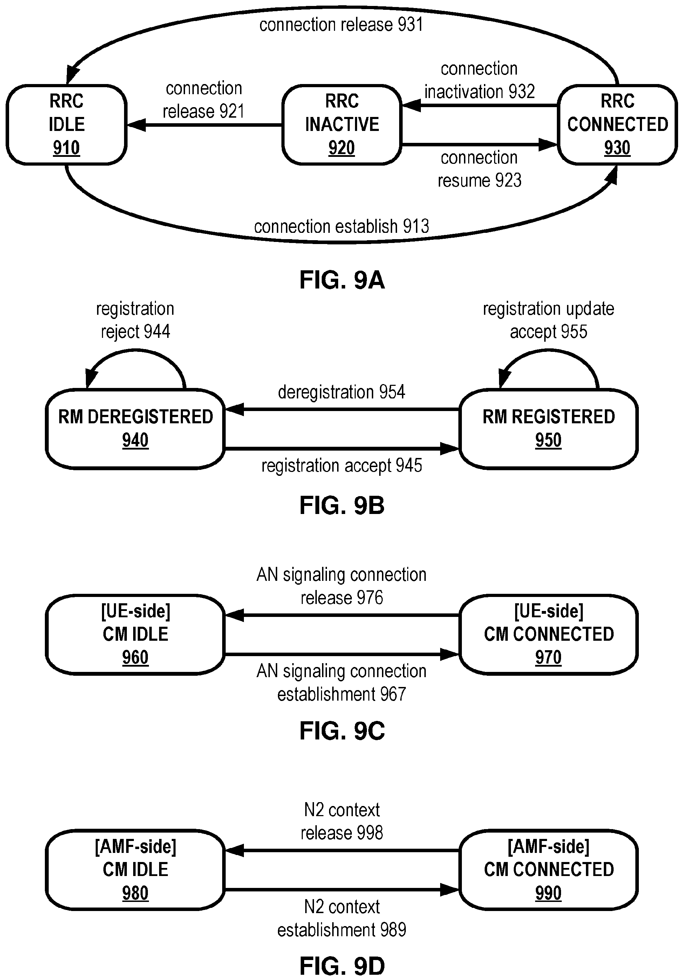

FIGS. 9A- 9D illustrate example states and state transitions of a wireless device (e.g., a UE). At any given time, the wireless device may have a radio resource control (RRC) state, a registration management (RM) state, and a connection management (CM) state.

FIG. 9A is an example diagram showing RRC state transitions of a wireless device (e.g., a UE). The UE may be in one of three RRC states: RRC idle 910, (e.g., RRC_IDLE), RRC inactive 920 (e.g., RRC_INACTIVE), or RRC connected 930 (e.g., RRC_CONNECTED). The UE may implement different RAN-related control-plane procedures depending on its RRC state. Other elements of the network, for example, a base station, may track the RRC state of one or more UEs and implement RAN-related control-plane procedures appropriate to the RRC state of each.

In RRC connected 930, it may be possible for the UE to exchange data with the network (for example, the base station). The parameters necessary for exchange of data may be established and known to both the UE and the network. The parameters may be referred to and/or included in an RRC context of the UE (sometimes referred to as a UE context). These parameters may include, for example: one or more AS contexts; one or more radio link configuration parameters; bearer configuration information (e.g., relating to a data radio bearer, signaling radio bearer, logical channel, QoS flow, and/or PDU session); security information; and/or PHY, MAC, RLC, PDCP, and/or SDAP layer configuration information. The base station with which the UE is connected may store the RRC context of the UE.

While in RRC connected 930, mobility of the UE may be managed by the access network, whereas the UE itself may manage mobility while in RRC idle 910 and/or RRC inactive 920. While in RRC connected 930, the UE may manage mobility by measuring signal levels (e.g., reference signal levels) from a serving cell and neighboring cells and reporting these measurements to the base station currently serving the UE. The network may initiate handover based on the reported measurements. The RRC state may transition from RRC connected 930 to RRC idle 910 through a connection release procedure 930 or to RRC inactive 920 through a connection inactivation procedure 932.

In RRC idle 910, an RRC context may not be established for the UE. In RRC idle 910, the UE may not have an RRC connection with a base station. While in RRC idle 910, the UE may be in a sleep state for a majority of the time (e.g., to conserve battery power). The UE may wake up periodically (e.g., once in every discontinuous reception cycle) to monitor for paging messages from the access network. Mobility of the UE may be managed by the UE through a procedure known as cell reselection. The RRC state may transition from RRC idle 910 to RRC connected 930 through a connection establishment procedure 913, which may involve a random access procedure, as discussed in greater detail below.

In RRC inactive 920, the RRC context previously established is maintained in the UE and the base station. This may allow for a fast transition to RRC connected 930 with reduced signaling overhead as compared to the transition from RRC idle 910 to RRC connected 930. The RRC state may transition to RRC connected 930 through a connection resume procedure 923. The RRC state may transition to RRC idle 910 though a connection release procedure 921 that may be the same as or similar to connection release procedure 931.

An RRC state may be associated with a mobility management mechanism. In RRC idle 910 and RRC inactive 920, mobility may be managed by the UE through cell reselection. The purpose of mobility management in RRC idle 910 and/or RRC inactive 920 is to allow the network to be able to notify the UE of an event via a paging message without having to broadcast the paging message over the entire mobile communications network. The mobility management mechanism used in RRC idle 910 and/or RRC inactive 920 may allow the network to track the UE on a cell-group level so that the paging message may be broadcast over the cells of the cell group that the UE currently resides within instead of the entire communication network. Tracking may be based on different granularities of grouping. For example, there may be three levels of cell-grouping granularity: individual cells; cells within a RAN area identified by a RAN area identifier (RAI); and cells within a group of RAN areas, referred to as a tracking area and identified by a tracking area identifier (TAI).

Tracking areas may be used to track the UE at the CN level. The CN may provide the UE with a list of TAIs associated with a UE registration area. If the UE moves, through cell reselection, to a cell associated with a TAI not included in the list of TAIs associated with the UE registration area, the UE may perform a registration update with the CN to allow the CN to update the UE's location and provide the UE with a new the UE registration area.

RAN areas may be used to track the UE at the RAN level. For a UE in RRC inactive 920 state, the UE may be assigned a RAN notification area. A RAN notification area may comprise one or more cell identities, a list of RAIs, and/or a list of TAIs. In an example, a base station may belong to one or more RAN notification areas. In an example, a cell may belong to one or more RAN notification areas. If the UE moves, through cell reselection, to a cell not included in the RAN notification area assigned to the UE, the UE may perform a notification area update with the RAN to update the UE's RAN notification area.

A base station storing an RRC context for a UE or a last serving base station of the UE may be referred to as an anchor base station. An anchor base station may maintain an RRC context for the UE at least during a period of time that the UE stays in a RAN notification area of the anchor base station and/or during a period of time that the UE stays in RRC inactive 920.

FIG. 9B is an example diagram showing registration management (RM) state transitions of a wireless device (e.g., a UE). The states are RM deregistered 940, (e.g., RM-DEREGISTERED) and RM registered 950 (e.g., RM-REGISTERED).

In RM deregistered 940, the UE is not registered with the network, and the UE is not reachable by the network. In order to be reachable by the network, the UE must perform an initial registration. As an example, the UE may register with an AMF of the network. If registration is rejected (registration reject 944), then the UE remains in RM deregistered 940. If registration is accepted (registration accept 945), then the UE transitions to RM registered 950. While the UE is RM registered 950, the network may store, keep, and/or maintain a UE context for the UE. The UE context may be referred to as wireless device context. The UE context corresponding to network registration (maintained by the core network) may be different from the RRC context corresponding to RRC state (maintained by an access network, .e.g., a base station). The UE context may comprise a UE identifier and a record of various information relating to the UE, for example, UE capability information, policy information for access and mobility management of the UE, lists of allowed or established slices or PDU sessions, and/or a registration area of the UE (i.e., a list of tracking areas covering the geographical area where the wireless device is likely to be found).

While the UE is RM registered 950, the network may store the UE context of the UE, and if necessary use the UE context to reach the UE. Moreover, some services may not be provided by the network unless the UE is registered. The UE may update its UE context while remaining in RM registered 950 (registration update accept 955). For example, if the UE leaves one tracking area and enters another tracking area, the UE may provide a tracking area identifier to the network. The network may deregister the UE, or the UE may deregister itself (deregistration 954). For example, the network may automatically deregister the wireless device if the wireless device is inactive for a certain amount of time. Upon deregistration, the UE may transition to RM deregistered 940.

FIG. 9C is an example diagram showing connection management (CM) state transitions of a wireless device (e.g., a UE), shown from a perspective of the wireless device. The UE may be in CM idle 960 (e.g., CM-IDLE) or CM connected 970 (e.g., CM-CONNECTED).

In CM idle 960, the UE does not have a non access stratum (NAS) signaling connection with the network. As a result, the UE can not communicate with core network functions. The UE may transition to CM connected 970 by establishing an AN signaling connection (AN signaling connection establishment 967). This transition may be initiated by sending an initial NAS message. The initial NAS message may be a registration request (e.g., if the UE is RM deregistered 940) or a service request (e.g., if the UE is RM registered 950). If the UE is RM registered 950, then the UE may initiate the AN signaling connection establishment by sending a service request, or the network may send a page, thereby triggering the UE to send the service request.

In CM connected 970, the UE can communicate with core network functions using NAS signaling. As an example, the UE may exchange NAS signaling with an AMF for registration management purposes, service request procedures, and/or authentication procedures. As another example, the UE may exchange NAS signaling, with an SMF, to establish and/or modify a PDU session. The network may disconnect the UE, or the UE may disconnect itself (AN signaling connection release 976). For example, if the UE transitions to RM deregistered 940, then the UE may also transition to CM idle 960. When the UE transitions to CM idle 960, the network may deactivate a user plane connection of a PDU session of the UE.

FIG. 9D is an example diagram showing CM state transitions of the wireless device (e.g., a UE), shown from a network perspective (e.g., an AMF). The CM state of the UE, as tracked by the AMF, may be in CM idle 980 (e.g., CM-IDLE) or CM connected 990 (e.g., CM-CONNECTED). When the UE transitions from CM idle 980 to CM connected 990, the AMF many establish an N2 context of the UE (N2 context establishment 989). When the UE transitions from CM connected 990 to CM idle 980, the AMF many release the N2 context of the UE (N2 context release 998).

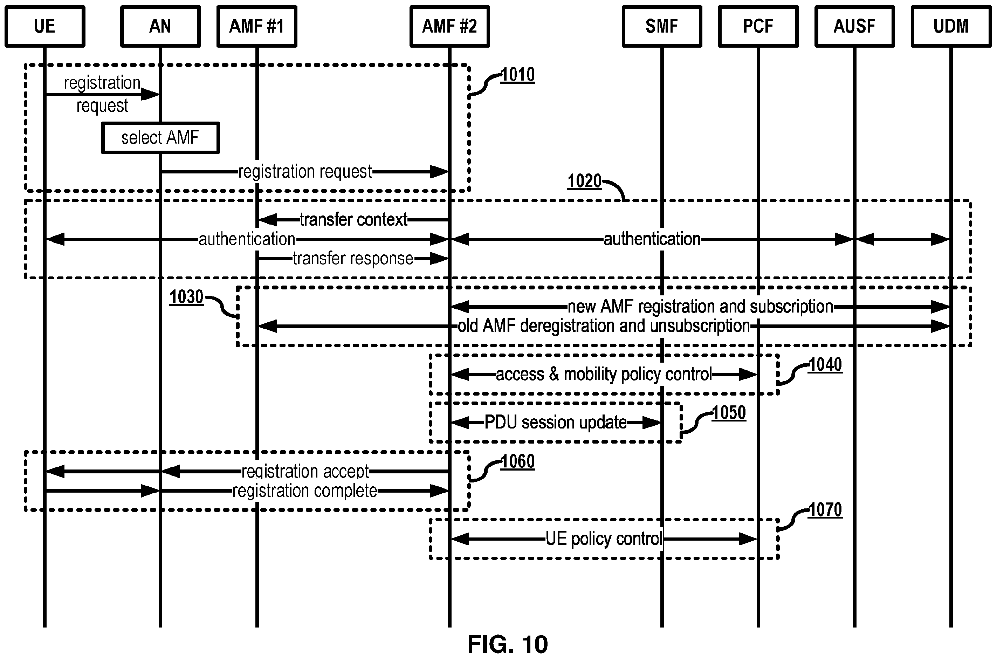

FIGS. 10 - 12 illustrate example procedures for registering, service request, and PDU session establishment of a UE.

FIG. 10 illustrates an example of a registration procedure for a wireless device (e.g., a UE). Based on the registration procedure, the UE may transition from, for example, RM deregistered 940 to RM registered 950.

Registration may be initiated by a UE for the purposes of obtaining authorization to receive services, enabling mobility tracking, enabling reachability, or other purposes. The UE may perform an initial registration as a first step toward connection to the network (for example, if the UE is powered on, airplane mode is turned off, etc.). Registration may also be performed periodically to keep the network informed of the UE's presence (for example, while in CM-IDLE state), or in response to a change in UE capability or registration area. Deregistration (not shown in FIG. 10) may be performed to stop network access.

At 1010, the UE transmits a registration request to an AN. As an example, the UE may have moved from a coverage area of a previous AMF (illustrated as AMF#1) into a coverage area of a new AMF (illustrated as AMF#2). The registration request may be a NAS message. The registration request may include a UE identifier. The AN may select an AMF for registration of the UE. For example, the AN may select a default AMF. For example, the AN may select an AMF that is already mapped to the UE (e.g., a previous AMF). The NAS registration request may include a network slice identifier and the AN may select an AMF based on the requested slice. After the AMF is selected, the AN may send the registration request to the selected AMF.

At 1020, the AMF that receives the registration request (AMF#2) performs a context transfer. The context may be a UE context, for example, an RRC context for the UE. As an example, AMF#2 may send AMF#1 a message requesting a context of the UE. The message may include the UE identifier. The message may be a Namf_Communication_UEContextTransfer message. AMF#1 may send to AMF#2 a message that includes the requested UE context. This message may be a Namf_Communication_ UEContextTransfer message. After the UE context is received, the AMF#2 may coordinate authentication of the UE. After authentication is complete, AMF#2 may send to AMF#1 a message indicating that the UE context transfer is complete. This message may be a Namf_ Communication_ UEContextTransfer Response message.

Authentication may require participation of the UE, an AUSF, a UDM and/or a UDR (not shown). For example, the AMF may request that the AUSF authenticate the UE. For example, the AUSF may execute authentication of the UE. For example, the AUSF may get authentication data from UDM. For example, the AUSF may send a subscription permanent identifier (SUPI) to the AMF based on the authentication being successful. For example, the AUSF may provide an intermediate key to the AMF. The intermediate key may be used to derive an access-specific security key for the UE, enabling the AMF to perform security context management (SCM). The AUSF may obtain subscription data from the UDM. The subscription data may be based on information obtained from the UDM (and/or the UDR). The subscription data may include subscription identifiers, security credentials, access and mobility related subscription data and/or session related data.

At 1030, the new AMF, AMF#2, registers and/or subscribes with the UDM. AMF#2 may perform registration using a UE context management service of the UDM (Nudm_ UECM). AMF#2 may obtain subscription information of the UE using a subscriber data management service of the UDM (Nudm_ SDM). AMF#2 may further request that the UDM notify AMF#2 if the subscription information of the UE changes. As the new AMF registers and subscribes, the old AMF, AMF#1, may deregister and unsubscribe. After deregistration, AMF#1 is free of responsibility for mobility management of the UE.

At 1040, AMF#2 retrieves access and mobility (AM) policies from the PCF. As an example, the AMF#2 may provide subscription data of the UE to the PCF. The PCF may determine access and mobility policies for the UE based on the subscription data, network operator data, current network conditions, and/or other suitable information. For example, the owner of a first UE may purchase a higher level of service than the owner of a second UE. The PCF may provide the rules associated with the different levels of service. Based on the subscription data of the respective UEs, the network may apply different policies which facilitate different levels of service.

For example, access and mobility policies may relate to service area restrictions, RAT/ frequency selection priority (RFSP, where RAT stands for radio access technology), authorization and prioritization of access type (e.g., LTE versus NR), and/or selection of non-3GPP access (e.g., Access Network Discovery and Selection Policy (ANDSP)). The service area restrictions may comprise a list of tracking areas where the UE is allowed to be served (or forbidden from being served). The access and mobility policies may include a UE route selection policy (URSP)) that influences routing to an established PDU session or a new PDU session. As noted above, different policies may be obtained and/or enforced based on subscription data of the UE, location of the UE (i.e., location of the AN and/or AMF), or other suitable factors.

At 1050, AMF#2 may update a context of a PDU session. For example, if the UE has an existing PDU session, the AMF#2 may coordinate with an SMF to activate a user plane connection associated with the existing PDU session. The SMF may update and/or release a session management context of the PDU session (Nsmf_ PDUSession_UpdateSMContext, Nsmf_ PDUSession_ ReleaseSMContext).

At 1060, AMF#2 sends a registration accept message to the AN, which forwards the registration accept message to the UE. The registration accept message may include a new UE identifier and/or a new configured slice identifier. The UE may transmit a registration complete message to the AN, which forwards the registration complete message to the AMF#2. The registration complete message may acknowledge receipt of the new UE identifier and/or new configured slice identifier.

At 1070, AMF#2 may obtain UE policy control information from the PCF. The PCF may provide an access network discovery and selection policy (ANDSP) to facilitate non-3GPP access. The PCF may provide a UE route selection policy (URSP) to facilitate mapping of particular data traffic to particular PDU session connectivity parameters. As an example, the URSP may indicate that data traffic associated with a particular application should be mapped to a particular SSC mode, network slice, PDU session type, or preferred access type (3GPP or non-3GPP).

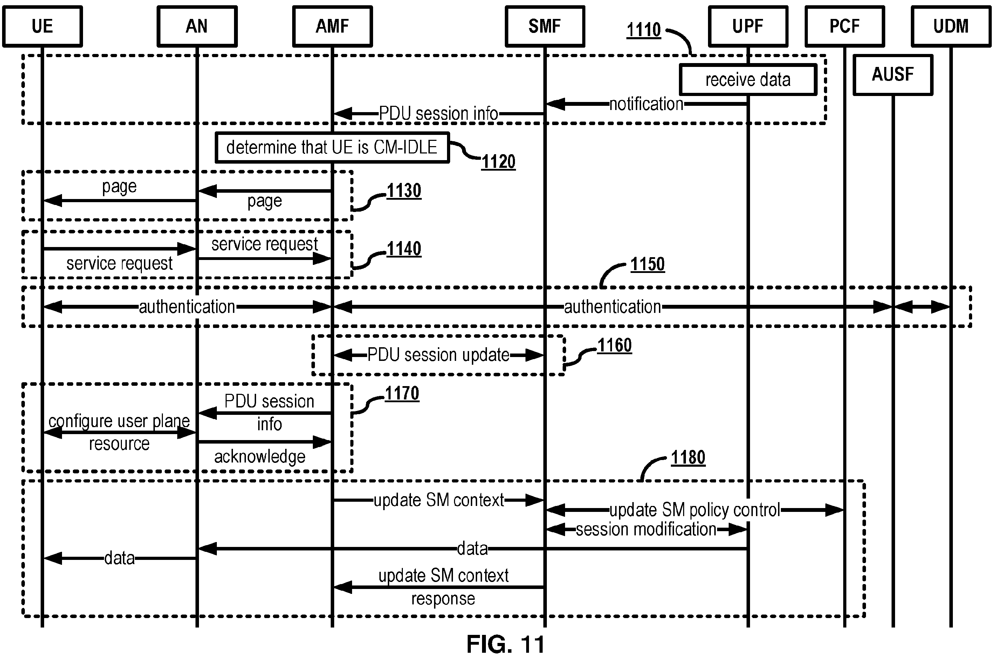

FIG. 11 illustrates an example of a service request procedure for a wireless device (e.g., a UE). The service request procedure depicted in FIG. 11 is a network-triggered service request procedure for a UE in a CM-IDLE state. However, other service request procedures (e.g., a UE-triggered service request procedure) may also be understood by reference to FIG. 11, as will be discussed in greater detail below.

At 1110, a UPF receives data. The data may be downlink data for transmission to a UE. The data may be associated with an existing PDU session between the UE and a DN. The data may be received, for example, from a DN and/or another UPF. The UPF may buffer the received data. In response to the receiving of the data, the UPF may notify an SMF of the received data. The identity of the SMF to be notified may be determined based on the received data. The notification may be, for example, an N4 session report. The notification may indicate that the UPF has received data associated with the UE and/or a particular PDU session associated with the UE. In response to receiving the notification, the SMF may send PDU session information to an AMF. The PDU session information may be sent in an N1N2 message transfer for forwarding to an AN. The PDU session information may include, for example, UPF tunnel endpoint information and/or QoS information.

At 1120, the AMF determines that the UE is in a CM-IDLE state. The determining at 1120 may be in response to the receiving of the PDU session information. Based on the determination that the UE is CM-IDLE, the service request procedure may proceed to 1130 and 1140, as depicted in FIG. 11. However, if the UE is not CM-IDLE (e.g., the UE is CM-CONNECTED), then 1130 and 1140 may be skipped, and the service request procedure may proceed directly to 1150.

At 1130, the AMF pages the UE. The paging at 1130 may be performed based on the UE being CM-IDLE. To perform the paging, the AMF may send a page to the AN. The page may be referred to as a paging or a paging message. The page may be an N2 request message. The AN may be one of a plurality of ANs in a RAN notification area of the UE. The AN may send a page to the UE. The UE may be in a coverage area of the AN and may receive the page.

At 1140, the UE may request service. The UE may transmit a service request to the AMF via the AN. As depicted in FIG. 11, the UE may request service at 1140 in response to receiving the paging at 1130. However, as noted above, this is for the specific case of a network-triggered service request procedure. In some scenarios (for example, if uplink data becomes available at the UE), then the UE may commence a UE-triggered service request procedure. The UE-triggered service request procedure may commence starting at 1140.

At 1150, the network may authenticate the UE. Authentication may require participation of the UE, an AUSF, and/or a UDM, for example, similar to authentication described elsewhere in the present disclosure. In some cases (for example, if the UE has recently been authenticated), the authentication at 1150 may be skipped.

At 1160, the AMF and SMF may perform a PDU session update. As part of the PDU session update, the SMF may provide the AMF with one or more UPF tunnel endpoint identifiers. In some cases (not shown in FIG. 11), it may be necessary for the SMF to coordinate with one or more other SMFs and/or one or more other UPFs to set up a user plane.

At 1170, the AMF may send PDU session information to the AN. The PDU session information may be included in an N2 request message. Based on the PDU session information, the AN may configure a user plane resource for the UE. To configure the user plane resource, the AN may, for example, perform an RRC reconfiguration of the UE. The AN may acknowledge to the AMF that the PDU session information has been received. The AN may notify the AMF that the user plane resource has been configured, and/or provide information relating to the user plane resource configuration.

In the case of a UE-triggered service request procedure, the UE may receive, at 1170, a NAS service accept message from the AMF via the AN. After the user plane resource is configured, the UE may transmit uplink data (for example, the uplink data that caused the UE to trigger the service request procedure).

At 1180, the AMF may update a session management (SM) context of the PDU session. For example, the AMF may notify the SMF (and/or one or more other associated SMFs) that the user plane resource has been configured, and/or provide information relating to the user plane resource configuration. The AMF may provide the SMF (and/or one or more other associated SMFs) with one or more AN tunnel endpoint identifiers of the AN. After the SM context update is complete, the SMF may send an update SM context response message to the AMF.

Based on the update of the session management context, the SMF may update a PCF for purposes of policy control. For example, if a location of the UE has changed, the SMF may notify the PCF of the UE's a new location.

Based on the update of the session management context, the SMF and UPF may perform a session modification. The session modification may be performed using N4 session modification messages. After the session modification is complete, the UPF may transmit downlink data (for example, the downlink data that caused the UPF to trigger the network-triggered service request procedure) to the UE. The transmitting of the downlink data may be based on the one or more AN tunnel endpoint identifiers of the AN.

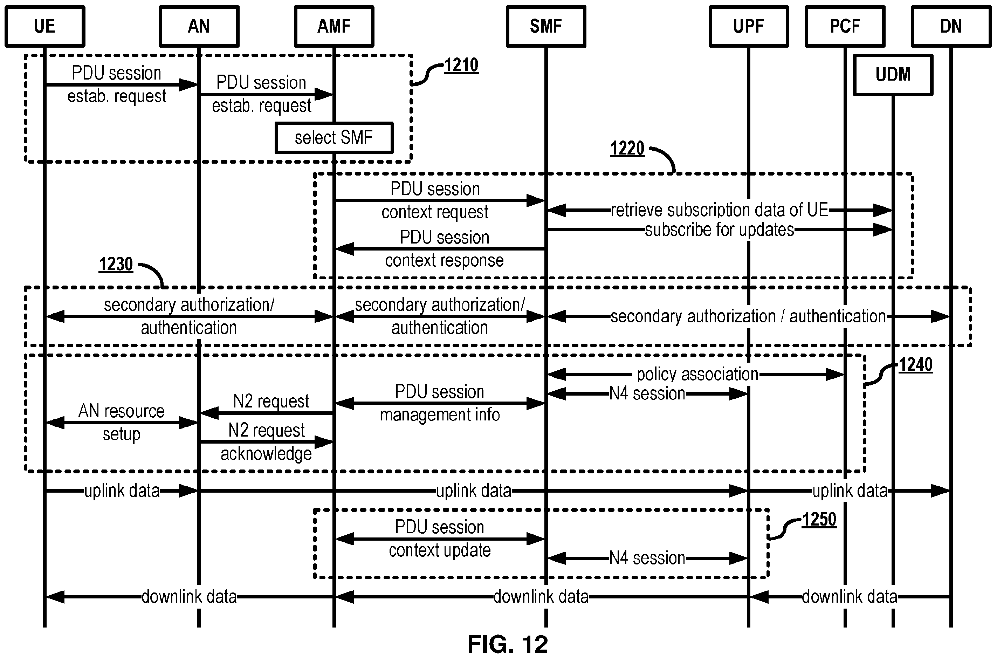

FIG. 12 illustrates an example of a protocol data unit (PDU) session establishment procedure for a wireless device (e.g., a UE). The UE may determine to transmit the PDU session establishment request to create a new PDU session, to hand over an existing PDU session to a 3GPP network, or for any other suitable reason.

At 1210, the UE initiates PDU session establishment. The UE may transmit a PDU session establishment request to an AMF via an AN. The PDU session establishment request may be a NAS message. The PDU session establishment request may indicate: a PDU session ID; a requested PDU session type (new or existing); a requested DN (DNN); a requested network slice (S-NSSAI); a requested SSC mode; and/or any other suitable information. The PDU session ID may be generated by the UE. The PDU session type may be, for example, an Internet Protocol (IP)-based type (e.g., IPv4, IPv6, or dual stack IPv4/IPv6), an Ethernet type, or an unstructured type.

The AMF may select an SMF based on the PDU session establishment request. In some scenarios, the requested PDU session may already be associated with a particular SMF. For example, the AMF may store a UE context of the UE, and the UE context may indicate that the PDU session ID of the requested PDU session is already associated with the particular SMF. In some scenarios, the AMF may select the SMF based on a determination that the SMF is prepared to handle the requested PDU session. For example, the requested PDU session may be associated with a particular DNN and/or S-NSSAI, and the SMF may be selected based on a determination that the SMF can manage a PDU session associated with the particular DNN and/or S-NSSAI.

At 1220, the network manages a context of the PDU session. After selecting the SMF at 1210, the AMF sends a PDU session context request to the SMF. The PDU session context request may include the PDU session establishment request received from the UE at 1210. The PDU session context request may be a Nsmf_ PDUSession_CreateSMContext Request and/or a Nsmf_ PDUSession_ UpdateSMContext Request. The PDU session context request may indicate identifiers of the UE; the requested DN; and/or the requested network slice. Based on the PDU session context request, the SMF may retrieve subscription data from a UDM. The subscription data may be session management subscription data of the UE. The SMF may subscribe for updates to the subscription data, so that the PCF will send new information if the subscription data of the UE changes. After the subscription data of the UE is obtained, the SMF may transmit a PDU session context response to the AMG. The PDU session context response may be a Nsmf_ PDUSession_ CreateSMContext Response and/or a Nsmf_ PDUSession_ UpdateSMContext Response. The PDU session context response may include a session management context ID.

At 1230, secondary authorization/authentication may be performed, if necessary. The secondary authorization/authentication may involve the UE, the AMF, the SMF, and the DN. The SMF may access the DN via a Data Network Authentication, Authorization and Accounting (DN AAA) server.

At 1240, the network sets up a data path for uplink data associated with the PDU session. The SMF may select a PCF and establish a session management policy association. Based on the association, the PCF may provide an initial set of policy control and charging rules (PCC rules) for the PDU session. When targeting a particular PDU session, the PCF may indicate, to the SMF, a method for allocating an IP address to the PDU Session, a default charging method for the PDU session, an address of the corresponding charging entity, triggers for requesting new policies, etc. The PCF may also target a service data flow (SDF) comprising one or more PDU sessions. When targeting an SDF, the PCF may indicate, to the SMF, policies for applying QoS requirements, monitoring traffic (e.g., for charging purposes), and/or steering traffic (e.g., by using one or more particular N6 interfaces).

The SMF may determine and/or allocate an IP address for the PDU session. The SMF may select one or more UPFs (a single UPF in the example of FIG. 12) to handle the PDU session. The SMF may send an N4 session message to the selected UPF. The N4 session message may be an N4 Session Establishment Request and/or an N4 Session Modification Request. The N4 session message may include packet detection, enforcement, and reporting rules associated with the PDU session. In response, the UPF may acknowledge by sending an N4 session establishment response and/or an N4 session modification response.

The SMF may send PDU session management information to the AMF. The PDU session management information may be a Namf_ Communication_ N1N2MessageTransfer message. The PDU session management information may include the PDU session ID. The PDU session management information may be a NAS message. The PDU session management information may include N1 session management information and/or N2 session management information. The N1 session management information may include a PDU session establishment accept message. The PDU session establishment accept message may include tunneling endpoint information of the UPF and quality of service (QoS) information associated with the PDU session.

The AMF may send an N2 request to the AN. The N2 request may include the PDU session establishment accept message. Based on the N2 request, the AN may determine AN resources for the UE. The AN resources may be used by the UE to establish the PDU session, via the AN, with the DN. The AN may determine resources to be used for the PDU session and indicate the determined resources to the UE. The AN may send the PDU session establishment accept message to the UE. For example, the AN may perform an RRC reconfiguration of the UE. After the AN resources are set up, the AN may send an N2 request acknowledge to the AMF. The N2 request acknowledge may include N2 session management information, for example, the PDU session ID and tunneling endpoint information of the AN.

After the data path for uplink data is set up at 1240, the UE may optionally send uplink data associated with the PDU session. As shown in FIG. 12, the uplink data may be sent to a DN associated with the PDU session via the AN and the UPF.

At 1250, the network may update the PDU session context. The AMF may transmit a PDU session context update request to the SMF. The PDU session context update request may be a Nsmf_ PDUSession_ UpdateSMContext Request. The PDU session context update request may include the N2 session management information received from the AN. The SMF may acknowledge the PDU session context update. The acknowledgement may be a Nsmf_ PDUSession_ UpdateSMContext Response. The acknowledgement may include a subscription requesting that the SMF be notified of any UE mobility event. Based on the PDU session context update request, the SMF may send an N4 session message to the UPF. The N4 session message may be an N4 Session Modification Request. The N4 session message may include tunneling endpoint information of the AN. The N4 session message may include forwarding rules associated with the PDU session. In response, the UPF may acknowledge by sending an N4 session modification response.

After the UPF receives the tunneling endpoint information of the AN, the UPF may relay downlink data associated with the PDU session. As shown in FIG. 12, the downlink data may be received from a DN associated with the PDU session via the AN and the UPF.

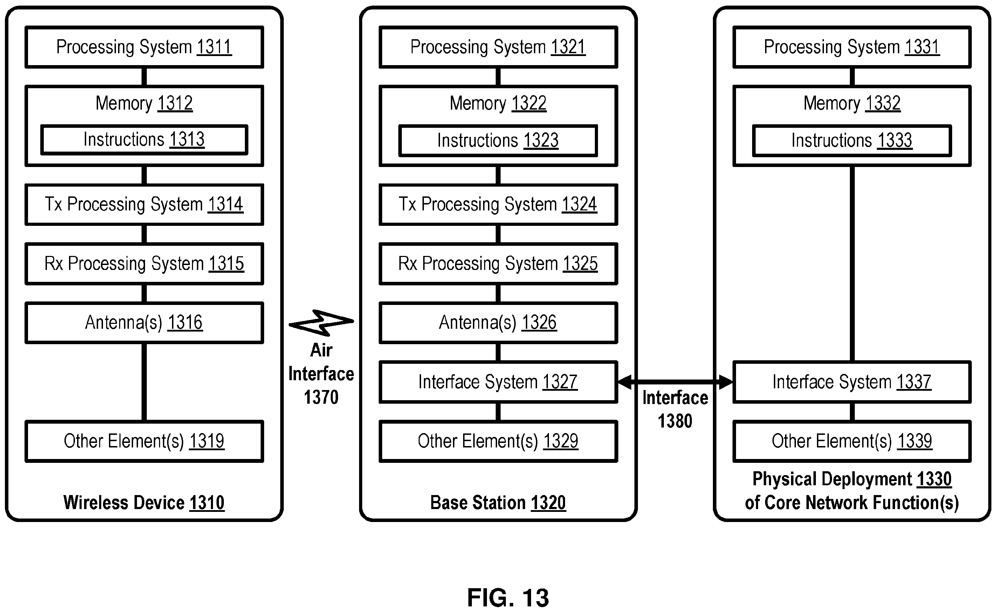

FIG. 13 illustrates examples of components of the elements in a communications network. FIG. 13 includes a wireless device 1310, a base station 1320, and a physical deployment of one or more network functions 1330 (henceforth "deployment 1330"). Any wireless device described in the present disclosure may have similar components and may be implemented in a similar manner as the wireless device 1310. Any other base station described in the present disclosure (or any portion thereof, depending on the architecture of the base station) may have similar components and may be implemented in a similar manner as the base station 1320. Any physical core network deployment in the present disclosure (or any portion thereof, depending on the architecture of the base station) may have similar components and may be implemented in a similar manner as the deployment 1330.

The wireless device 1310 may communicate with base station 1320 over an air interface 1370. The communication direction from wireless device 1310 to base station 1320 over air interface 1370 is known as uplink, and the communication direction from base station 1320 to wireless device 1310 over air interface 1370 is known as downlink. Downlink transmissions may be separated from uplink transmissions using FDD, TDD, and/or some combination of duplexing techniques. FIG. 13 shows a single wireless device 1310 and a single base station 1320, but it will be understood that wireless device 1310 may communicate with any number of base stations or other access network components over air interface 1370, and that base station 1320 may communicate with any number of wireless devices over air interface 1370.

The wireless device 1310 may comprise a processing system 1311 and a memory 1312. The memory 1312 may comprise one or more computer-readable media, for example, one or more non-transitory computer readable media. The memory 1312 may include instructions 1313. The processing system 1311 may process and/or execute instructions 1313. Processing and/or execution of instructions 1313 may cause wireless device 1310 and/or processing system 1311 to perform one or more functions or activities. The memory 1312 may include data (not shown). One of the functions or activities performed by processing system 1311 may be to store data in memory 1312 and/or retrieve previously-stored data from memory 1312. In an example, downlink data received from base station 1320 may be stored in memory 1312, and uplink data for transmission to base station 1320 may be retrieved from memory 1312. As illustrated in FIG. 13, the wireless device 1310 may communicate with base station 1320 using a transmission processing system 1314 and/or a reception processing system 1315. Alternatively, transmission processing system 1314 and reception processing system 1315 may be implemented as a single processing system, or both may be omitted and all processing in the wireless device 1310 may be performed by the processing system 1311. Although not shown in FIG. 13, transmission processing system 1314 and/or reception processing system 1315 may be coupled to a dedicated memory that is analogous to but separate from memory 1312, and comprises instructions that may be processed and/or executed to carry out one or more of their respective functionalities. The wireless device 1310 may comprise one or more antennas 1316 to access air interface 1370.

The wireless device 1310 may comprise one or more other elements 1319. The one or more other elements 1319 may comprise software and/or hardware that provide features and/or functionalities, for example, a speaker, a microphone, a keypad, a display, a touchpad, a satellite transceiver, a universal serial bus (USB) port, a hands-free headset, a frequency modulated (FM) radio unit, a media player, an Internet browser, an electronic control unit (e.g., for a motor vehicle), and/or one or more sensors (e.g., an accelerometer, a gyroscope, a temperature sensor, a radar sensor, a lidar sensor, an ultrasonic sensor, a light sensor, a camera, a global positioning sensor (GPS) and/or the like). The wireless device 1310 may receive user input data from and/or provide user output data to the one or more one or more other elements 1319. The one or more other elements 1319 may comprise a power source. The wireless device 1310 may receive power from the power source and may be configured to distribute the power to the other components in wireless device 1310. The power source may comprise one or more sources of power, for example, a battery, a solar cell, a fuel cell, or any combination thereof.

The wireless device 1310 may transmit uplink data to and/or receive downlink data from base station 1320 via air interface 1370. To perform the transmission and/or reception, one or more of the processing system 1311, transmission processing system 1314, and/or reception system 1315 may implement open systems interconnection (OSI) functionality. As an example, transmission processing system 1314 and/or reception system 1315 may perform layer 1 OSI functionality, and processing system 1311 may perform higher layer functionality. The wireless device 1310 may transmit and/or receive data over air interface 1370 using one or more antennas 1316. For scenarios where the one or more antennas 1316 include multiple antennas, the multiple antennas may be used to perform one or more multi-antenna techniques, such as spatial multiplexing (e.g., single-user multiple-input multiple output (MIMO) or multi-user MIMO), transmit/receive diversity, and/or beamforming.

The base station 1320 may comprise a processing system 1321 and a memory 1322. The memory 1322 may comprise one or more computer-readable media, for example, one or more non-transitory computer readable media. The memory 1322 may include instructions 1323. The processing system 1321 may process and/or execute instructions 1323. Processing and/or execution of instructions 1323 may cause base station 1320 and/or processing system 1321 to perform one or more functions or activities. The memory 1322 may include data (not shown). One of the functions or activities performed by processing system 1321 may be to store data in memory 1322 and/or retrieve previously-stored data from memory 1322. The base station 1320 may communicate with wireless device 1310 using a transmission processing system 1324 and a reception processing system 1325. Although not shown in FIG. 13, transmission processing system 1324 and/or reception processing system 1325 may be coupled to a dedicated memory that is analogous to but separate from memory 1322, and comprises instructions that may be processed and/or executed to carry out one or more of their respective functionalities. The wireless device 1320 may comprise one or more antennas 1326 to access air interface 1370.

The base station 1320 may transmit downlink data to and/or receive uplink data from wireless device 1310 via air interface 1370. To perform the transmission and/or reception, one or more of the processing system 1321, transmission processing system 1324, and/or reception system 1325 may implement OSI functionality. As an example, transmission processing system 1324 and/or reception system 1325 may perform layer 1 OSI functionality, and processing system 1321 may perform higher layer functionality. The base station 1320 may transmit and/or receive data over air interface 1370 using one or more antennas 1326. For scenarios where the one or more antennas 1326 include multiple antennas, the multiple antennas may be used to perform one or more multi-antenna techniques, such as spatial multiplexing (e.g., single-user multiple-input multiple output (MIMO) or multi-user MIMO), transmit/receive diversity, and/or beamforming.

The base station 1320 may comprise an interface system 1327. The interface system 1327 may communicate with one or more base stations and/or one or more elements of the core network via an interface 1380. The interface 1380 may be wired and/or wireless and interface system 1327 may include one or more components suitable for communicating via interface 1380. In FIG. 13, interface 1380 connects base station 1320 to a single deployment 1330, but it will be understood that wireless device 1310 may communicate with any number of base stations and/or CN deployments over interface 1380, and that deployment 1330 may communicate with any number of base stations and/or other CN deployments over interface 1380. The base station 1320 may comprise one or more other elements 1329 analogous to one or more of the one or more other elements 1319.

The deployment 1330 may comprise any number of portions of any number of instances of one or more network functions (NFs). The deployment 1330 may comprise a processing system 1331 and a memory 1332. The memory 1332 may comprise one or more computer-readable media, for example, one or more non-transitory computer readable media. The memory 1332 may include instructions 1333. The processing system 1331 may process and/or execute instructions 1333. Processing and/or execution of instructions 1333 may cause the deployment 1330 and/or processing system 1331 to perform one or more functions or activities. The memory 1332 may include data (not shown). One of the functions or activities performed by processing system 1331 may be to store data in memory 1332 and/or retrieve previously-stored data from memory 1332. The deployment 1330 may access the interface 1380 using an interface system 1337. The deployment 1330 may comprise one or more other elements 1339 analogous to one or more of the one or more other elements 1319.

One or more of the systems 1311, 1314, 1315, 1321, 1324, 1325, and/or 1331 may comprise one or more controllers and/or one or more processors. The one or more controllers and/or one or more processors may comprise, for example, a general-purpose processor, a digital signal processor (DSP), a microcontroller, an application specific integrated circuit (ASIC), a field programmable gate array (FPGA) and/or other programmable logic device, discrete gate and/or transistor logic, discrete hardware components, an on-board unit, or any combination thereof. One or more of the systems 1311, 1314, 1315, 1321, 1324, 1325, and/or 1331 may perform signal coding/processing, data processing, power control, input/output processing, and/or any other functionality that may enable wireless device 1310, base station 1320, and/or deployment 1330 to operate in a mobile communications system.

Many of the elements described in the disclosed embodiments may be implemented as modules. A module is defined here as an element that performs a defined function and has a defined interface to other elements. The modules described in this disclosure may be implemented in hardware, software in combination with hardware, firmware, wetware (e.g. hardware with a biological element) or a combination thereof, which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. It may be possible to implement modules using physical hardware that incorporates discrete or programmable analog, digital and/or quantum hardware. Examples of programmable hardware comprise computers, microcontrollers, microprocessors, DSPs, ASICs, FPGAs, and complex programmable logic devices (CPLDs). Computers, microcontrollers and microprocessors may be programmed using languages such as assembly, C, C++ or the like. FPGAs, ASICs and CPLDs are often programmed using hardware description languages (HDL) such as VHSIC hardware description language (VHDL) or Verilog that configure connections between internal hardware modules with lesser functionality on a programmable device. The mentioned technologies are often used in combination to achieve the result of a functional module.

The wireless device 1310, base station 1320, and/or deployment 1330 may implement timers and/or counters. A timer/counter may start at an initial value. As used herein, starting may comprise restarting. Once started, the timer/counter may run. Running of the timer/counter may be associated with an occurrence. When the occurrence occurs, the value of the timer/counter may change (for example, increment or decrement). The occurrence may be, for example, an exogenous event (for example, a reception of a signal, a measurement of a condition, etc.), an endogenous event (for example, a transmission of a signal, a calculation, a comparison, a performance of an action or a decision to so perform, etc.), or any combination thereof. In the case of a timer, the occurrence may be the passage of a particular amount of time. However, it will be understood that a timer may be described and/or implemented as a counter that counts the passage of a particular unit of time. A timer/counter may run in a direction of a final value until it reaches the final value. The reaching of the final value may be referred to as expiration of the timer/counter. The final value may be referred to as a threshold. A timer/counter may be paused, wherein the present value of the timer/counter is held, maintained, and/or carried over, even upon the occurrence of one or more occurrences that would otherwise cause the value of the timer/counter to change. The timer/counter may be un-paused or continued, wherein the value that was held, maintained, and/or carried over begins changing again when the one or more occurrence occur. A timer/counter may be set and/or reset. As used herein, setting may comprise resetting. When the timer/counter sets and/or resets, the value of the timer/counter may be set to the initial value. A timer/counter may be started and/or restarted. As used herein, starting may comprise restarting. In some embodiments, when the timer/counter restarts, the value of the timer/counter may be set to the initial value and the timer/counter may begin to run.

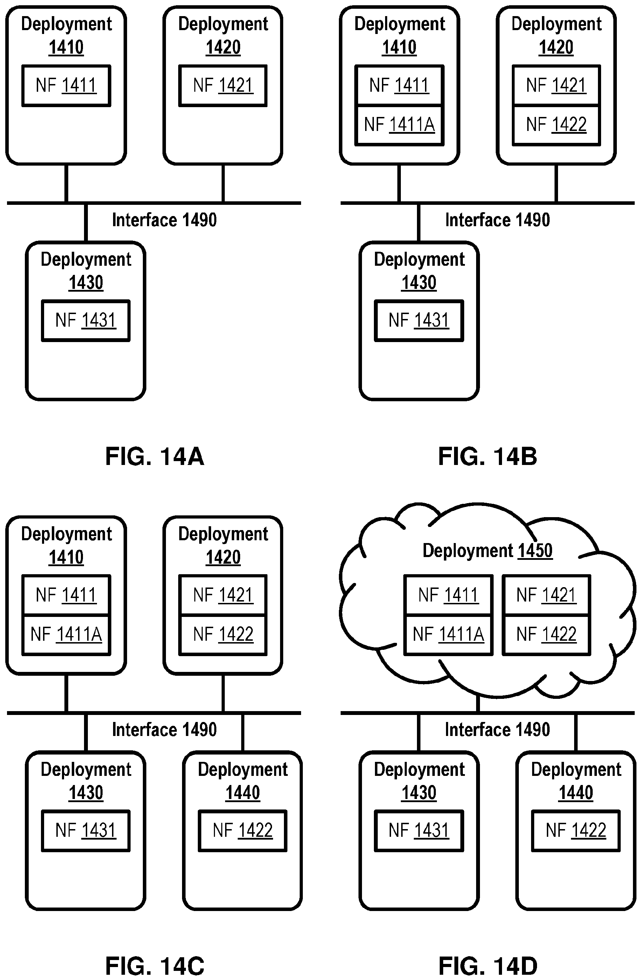

FIGS. 14A, 14B, 14C, and 14D illustrate various example arrangements of physical core network deployments, each having one or more network functions or portions thereof. The core network deployments comprise a deployment 1410, a deployment 1420, a deployment 1430, a deployment 1440, and/or a deployment 1450. Each deployment may be analogous to, for example, the deployment 1330 depicted in FIG. 13. In particular, each deployment may comprise a processing system for performing one or more functions or activities, memory for storing data and/or instructions, and an interface system for communicating with other network elements (for example, other core network deployments). Each deployment may comprise one or more network functions (NFs). The term NF may refer to a particular set of functionalities and/or one or more physical elements configured to perform those functionalities (e.g., a processing system and memory comprising instructions that, when executed by the processing system, cause the processing system to perform the functionalities). For example, in the present disclosure, when a network function is described as performing X, Y, and Z, it will be understood that this refers to the one or more physical elements configured to perform X, Y, and Z, no matter how or where the one or more physical elements are deployed. The term NF may refer to a network node, network element, and/or network device.

As will be discussed in greater detail below, there are many different types of NF and each type of NF may be associated with a different set of functionalities. A plurality of different NFs may be flexibly deployed at different locations (for example, in different physical core network deployments) or in a same location (for example, co-located in a same deployment). A single NF may be flexibly deployed at different locations (implemented using different physical core network deployments) or in a same location. Moreover, physical core network deployments may also implement one or more base stations, application functions (AFs), data networks (DNs), or any portions thereof. NFs may be implemented in many ways, including as network elements on dedicated or shared hardware, as software instances running on dedicated or shared hardware, or as virtualized functions instantiated on a platform (e.g., a cloud-based platform).

FIG. 14A illustrates an example arrangement of core network deployments in which each deployment comprises one network function. A deployment 1410 comprises an NF 1411, a deployment 1420 comprises an NF 1421, and a deployment 1430 comprises an NF 1431. The deployments 1410, 1420, 1430 communicate via an interface 1490. The deployments 1410, 1420, 1430 may have different physical locations with different signal propagation delays relative to other network elements. The diversity of physical locations of deployments 1410, 1420, 1430 may enable provision of services to a wide area with improved speed, coverage, security, and/or efficiency.

FIG. 14B illustrates an example arrangement wherein a single deployment comprises more than one NF. Unlike FIG. 14A, where each NF is deployed in a separate deployment, FIG. 14B illustrates multiple NFs in deployments 1410, 1420. In an example, deployments 1410, 1420 may implement a software-defined network (SDN) and/or a network function virtualization (NFV).

For example, deployment 1410 comprises an additional network function, NF 1411A. The NFs 1411, 1411A may consist of multiple instances of the same NF type, co-located at a same physical location within the same deployment 1410. The NFs 1411, 1411A may be implemented independently from one another (e.g., isolated and/or independently controlled). For example, the NFs 1411, 1411A may be associated with different network slices. A processing system and memory associated with the deployment 1410 may perform all of the functionalities associated with the NF 1411 in addition to all of the functionalities associated with the NF 1411A. In an example, NFs 1411, 1411A may be associated with different PLMNs, but deployment 1410, which implements NFs 1411, 1411A, may be owned and/or operated by a single entity.

Elsewhere in FIG. 14B, deployment 1420 comprises NF 1421 and an additional network function, NF 1422. The NFs 1421, 1422 may be different NF types. Similar to NFs 1411, 1411A, the NFs 1421, 1422 may be co-located within the same deployment 1420, but separately implemented. As an example, a first PLMN may own and/or operate deployment 1420 having NFs 1421, 1422. As another example, the first PLMN may implement NF 1421 and a second PLMN may obtain from the first PLMN (e.g., rent, lease, procure, etc.) at least a portion of the capabilities of deployment 1420 (e.g., processing power, data storage, etc.) in order to implement NF 1422. As yet another example, the deployment may be owned and/or operated by one or more third parties, and the first PLMN and/or second PLMN may procure respective portions of the capabilities of the deployment 1420. When multiple NFs are provided at a single deployment, networks may operate with greater speed, coverage, security, and/or efficiency.

FIG. 14C illustrates an example arrangement of core network deployments in which a single instance of an NF is implemented using a plurality of different deployments. In particular, a single instance of NF 1422 is implemented at deployments 1420, 1440. As an example, the functionality provided by NF 1422 may be implemented as a bundle or sequence of subservices. Each subservice may be implemented independently, for example, at a different deployment. Each subservices may be implemented in a different physical location. By distributing implementation of subservices of a single NF across different physical locations, the mobile communications network may operate with greater speed, coverage, security, and/or efficiency.

FIG. 14D illustrates an example arrangement of core network deployments in which one or more network functions are implemented using a data processing service. In FIG. 14D, NFs 1411, 1411A, 1421, 1422 are included in a deployment 1450 that is implemented as a data processing service. The deployment 1450 may comprise, for example, a cloud network and/or data center. The deployment 1450 may be owned and/or operated by a PLMN or by a non-PLMN third party. The NFs 1411, 1411A, 1421, 1422 that are implemented using the deployment 1450 may belong to the same PLMN or to different PLMNs. The PLMN(s) may obtain (e.g., rent, lease, procure, etc.) at least a portion of the capabilities of the deployment 1450 (e.g., processing power, data storage, etc.). By providing one or more NFs using a data processing service, the mobile communications network may operate with greater speed, coverage, security, and/or efficiency.

As shown in the figures, different network elements (e.g., NFs) may be located in different physical deployments, or co-located in a single physical deployment. It will be understood that in the present disclosure, the sending and receiving of messages among different network elements is not limited to inter-deployment transmission or intra-deployment transmission, unless explicitly indicated.

In an example, a deployment may be a 'black box' that is preconfigured with one or more NFs and preconfigured to communicate, in a prescribed manner, with other 'black box' deployments (e.g., via the interface 1490). Additionally or alternatively, a deployment may be configured to operate in accordance with open-source instructions (e.g., software) designed to implement NFs and communicate with other deployments in a transparent manner. The deployment may operate in accordance with open RAN (O-RAN) standards.

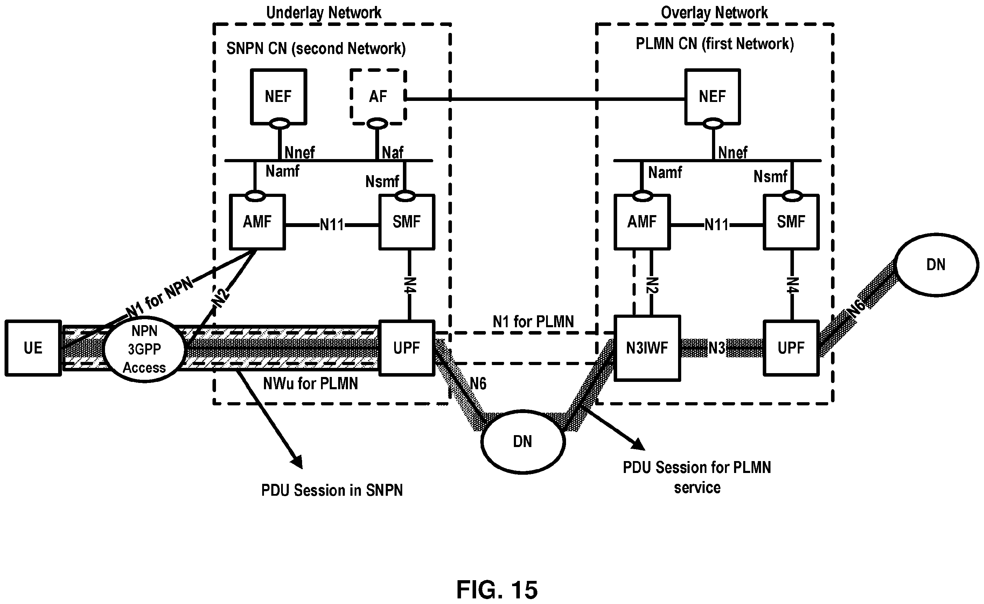

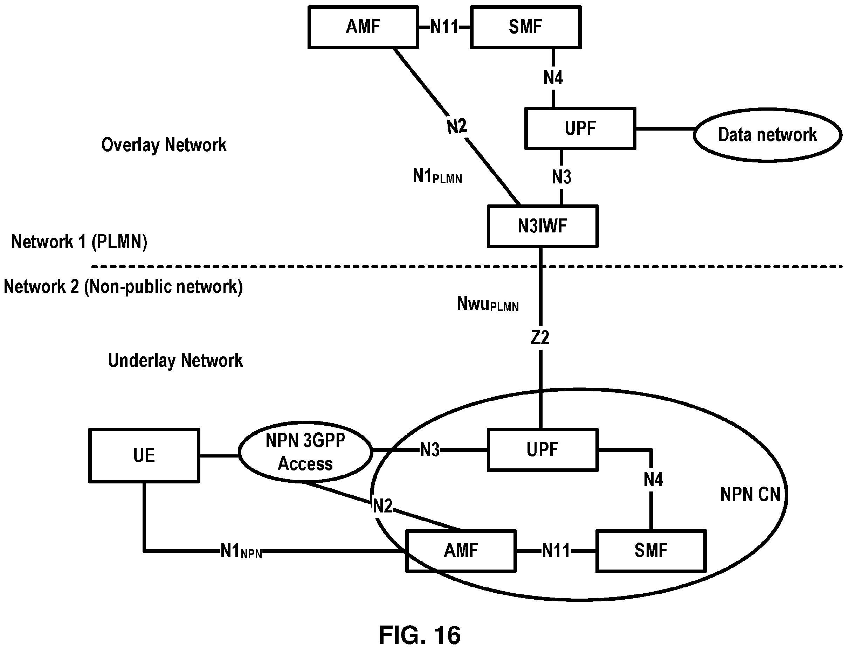

In an example embodiment as depicted in FIG. 15 and FIG. 16, a UE may access to a first network (overlay network) services via a second network (e.g., non-public network, underlay network). The UE may first obtain IP connectivity by registering with the non-public network. Then the UE may obtain connectivity to the 5GC in the PLMN via an interworking function (e.g., a proxy, N3IWF, and/or the like). The Non-public network may deploy a 3GPP RAT, though it may not be considered a public PLMN. The UE may perform PLMN selection as part of the N3IWF discovery.

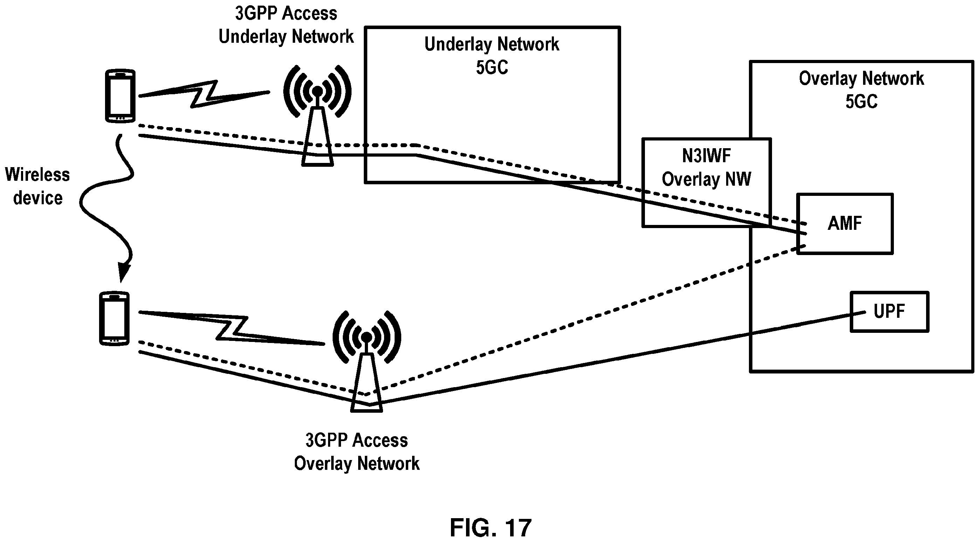

In an example embodiment as depicted in FIG. 17, a UE may access an overlay network via an underlay network. The UE access may be via at least one of a base station, an access network, 3GPP access of the underlay network. The UE may lose coverage with the base station of the underlay network. In the figure, the UE loses coverage because of movement of the UE, however, it will be understood that coverage may be lost in any number of other scenarios. The UE may access a target base station, access network, or 3GPP access of the overlay network. The target base station may be a base station of another underlay network.

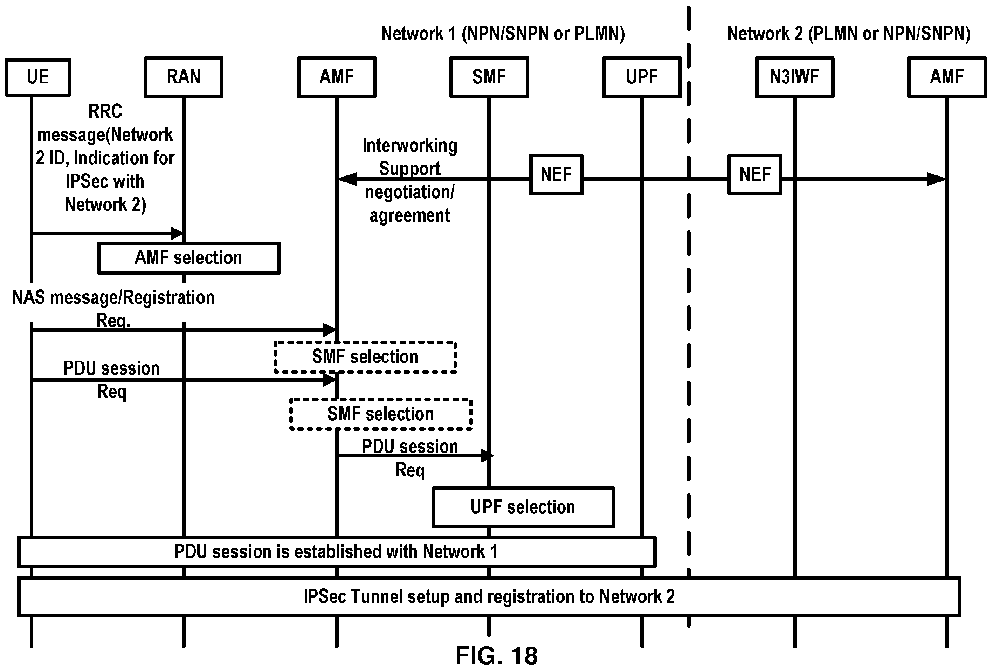

In an example embodiment as depicted in FIG. 18, a UE may access network 2 via network 1. In an example, the UE may have two subscription e.g., one PLMN (aka "PLMN UE" for PLMN parts of the UE) and one SNPN (aka "SNPN UE" for SNPN parts of the UE) subscription. The scenarios described may employ PLMN and SNPN, but same principles may apply between SNPNs, if allowed.

In an example embodiment as depicted in FIG. 18, the UE may be either in connected state or in a power saving state in the serving network (network 1) and still get service from the other network. The UE may be always in CM connected state in both networks and that the IPsec tunnel between the UE and N3IWF over Nwu may be always maintained. It may involve that the UE send IPsec keep alive messages. In an example, in order for the UE to maintain an IPSec tunnel to network 2, a PDU session in network 1 may be required. As depicted in FIG. 18, the UE may register to the network 1 (e.g., NPN). The UE may request service in order to setup an IPsec tunnel to the N3IWF. The service request may need to indicate the specific service (connection to the PLMN/network 2). The PDU session may be setup in network 1. The AMF may include in the RRC inactive assistance information that this UE may only be released to RRC Inactive and may send the RRC inactive assistance information to the RAN. This behavior in the AMF may be triggered by 1) either based on the UE indication in the NAS message (SR or PDU session establishment), or 2) informed by the SMF/UPF. The SMF/UPF, when the SMF/UPF detect that the target address for the IPSec tunnel is a known N3IWF of a PLMN (in this case the RRC Inactive Assistance IE may need to be updated if already sent). UE sets up the IPSec tunnel and registers to the PLMN (network 2). Due to inactivity in the network 1 (NPN) the RAN may release the UE to RRC Inactive mode. RAN may receive DL data or NAS message from the PLMN (network 2) to the UE. The RAN node may page the UE. The UE may resume the RRC-Connection. The DL data or NAS message may be sent to the UE.

In an example, FIG. 18 may depict an example registration and access procedure of a UE to the second network (network 2) in accordance with embodiments of the present disclosure. In an example, the UE may send a registration request message or a NAS message to the AMF via a base station of the second network. Upon completion of the registration procedure, the AMF may send a registration accept message to the UE that may comprise a support indication for IPSec with a first network, an underlying network capability support indication, one or more network IDs (e.g., SNPN ID). The one or more network IDs may indicate that the network may support underlying network capability for the one or more networks e.g., SNPN. The one or more network IDs may indicate that the network supports onboarding for the one or more networks. The registration accept message may comprise a CAG ID, S-NSSAI, and/or the like that may be employed for underlying network capability support, or IPSec tunnel to the first network. The UE may employ an element of the registration accept message to send a PDU session establishment request message. The PDU session establishment request message may comprise the CAG ID for underlying network access to the second network via the second network, the S-NSSAI for underlying network access to the first network via the second network, and/or the like. Upon establishment of the PDU session for underlying network access, the UE may establish or configure a connection, IPSec tunnel, and/or the like to an interworking function (N3IWF) of the first network. In an example, during the PDU session establishment procedure the SMF of the second network may select a UPF that can be connected to or have a logical/physical connectivity to the N3IWF of the first network. The SMF may select the UPF that may support underlying network capability.

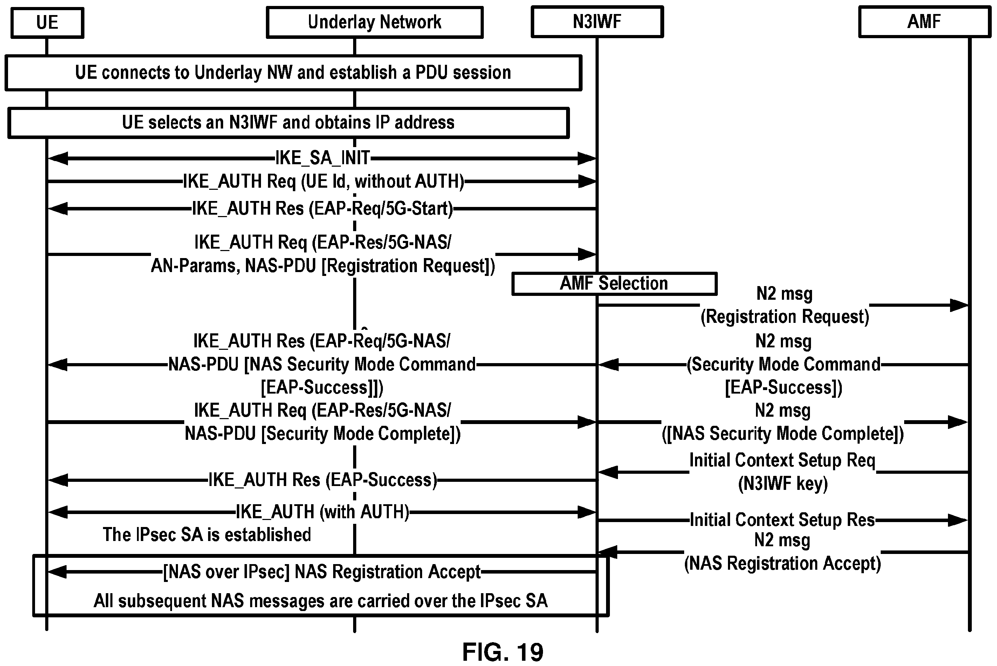

In an example as depicted in FIG. 19, the UE may connect to the underlying network using the registration procedure. The UE may establish a PDU session with the underlying network using the PDU session establishment procedure. In an example, to connect to an N3IWF of the overlay network, the UE may select an N3IWF.

In an example, the UE may the establish an IPsec Security Association (SA) with the selected N3IWF by initiating an IKE initial exchange. All subsequent IKE messages may be encrypted and integrity protected by using the IKE SA established. In an example, the UE may initiate an IKE_AUTH exchange by sending an IKE_AUTH request message. The AUTH payload may or may not be included in the IKE_AUTH request message, which may indicate that the IKE_AUTH exchange may use EAP signaling (for example, EAP-5G signalling). If the UE supports MOBIKE, it may include a notify payload in the IKE_AUTH request, indicating that MOBIKE is supported. In an example, if the UE is provisioned with the N3IWF root certificate, it may include the CERTREQ payload within the IKE_AUTH request message to request the N3IWF's certificate.

In an example, the N3IWF may respond with an IKE_AUTH response message, which may include an EAP-Request/5G-Start packet. The EAP-Request/5G-Start packet may inform the UE to initiate an EAP-5G session, e.g., to start sending NAS messages encapsulated within EAP-5G packets. If the N3IWF has received a CERTREQ payload from the UE, the N3IWF may include the CERT payload in the IKE_AUTH response message comprising the N3IWF's certificate.

In an example, the UE may send an IKE_AUTH request, which may comprise an EAP-Response/5G-NAS packet that may comprise the access network parameters (AN parameters) and a registration request message. The AN parameters may comprise information that is used by the N3IWF for selecting an AMF in the 5G core network (e.g., overlay network). This information may comprise e.g., the GUAMI, the selected PLMN ID (or PLMN ID and NID, SNPN ID, and/or the like), the requested NSSAI, the establishment cause, and/or the like. The establishment cause may provide the reason for requesting a signalling connection with 5GC.

In an example, the N3IWF may select an AMF based on the received AN parameters and local policy. The N3IWF may forward the registration request received from the UE to the selected AMF within an N2 message. The N2 message may comprise N2 parameters that include the selected PLMN ID and the establishment cause. The selected AMF may determine/decide to request the SUCI by sending a NAS identity request message to the UE. This NAS message and all subsequent NAS messages may be sent to the UE encapsulated within EAP/5G-NAS packets. In an example, the AMF may determine/decide to authenticate the UE by invoking an AUSF. The AMF may select an AUSF based on the SUPI or SUCI. In an example, the AUSF may execute the authentication of the UE. The AUSF may select a UDM and may get or receive the authentication data from the UDM. The authentication packets may be encapsulated within NAS authentication messages and the NAS authentication messages are encapsulated within EAP/5G-NAS packets. In an example, upon successful authentication: the AUSF may send the anchor key (SEAF key) to AMF which may be used by AMF to derive NAS security keys and a security key for N3IWF (N3IWF key). The UE may derive the anchor key (SEAF key) and from that key it derives the NAS security keys and the security key for N3IWF (N3IWF key). The N3IWF key may used by the UE and N3IWF for establishing the IPsec Security Association. The AUSF may include the SUPI that the AMF provided to AUSF a SUCI.

In an example, the AMF may send a NAS security mode command to the UE in order to activate NAS security. If an EAP-AKA' authentication was successfully executed, the AMF may encapsulate the EAP-Success received from AUSF within the NAS security mode command message. The N3IWF may forward the NAS security mode command message to the UE within an EAP/5G-NAS packet. The UE may complete the EAP-AKA' authentication, creates a NAS security context and an N3IWF key and may send the NAS security mode complete message within an EAP/5G-NAS packet. The N3IWF may relay/transmit the NAS security mode complete message to the AMF.

In an example, upon receiving NAS security mode complete, the AMF may send an NGAP initial context setup request message that includes the N3IWF key. This may trigger the N3IWF to send an EAP-Success to the UE, which completes the EAP-5G session.

In an example, the IPsec SA may be established between the UE and N3IWF by using the common N3IWF key that was created in the UE and received by the N3IWF. The established IPsec SA may be referred to as the signalling IPsec SA. After the establishment of the signalling IPsec SA, the N3IWF may notify the AMF that the UE context (including AN security) was created by sending a NGAP initial context setup response. The signalling IPsec SA may be configured to operate in tunnel mode and the N3IWF may assign to UE an inner IP address. If the N3IWF has received an indication that the UE supports MOBIKE, then the N3IWF may include a notify payload in the IKE_AUTH response message, indicating that MOBIKE may be supported.

In an example, all subsequent NAS messages exchanged between the UE and N3IWF may be sent via the signaling IPsec SA and may be carried over TCP/IP or the like. The UE may send NAS messages within TCP/IP packets with source address the inner IP address of the UE and destination address the NAS_IP_ADDRESS. The N3IWF may send NAS messages within TCP/IP packets with source address the NAS_IP_ADDRESS and destination address the inner IP address of the UE. The TCP connection used for reliable NAS transport between the UE and N3IWF may be initiated by the UE after the signalling IPsec SA is established. The UE may send the TCP connection request to the NAS_IP_ADDRESS and to the TCP port number.

In an example, the AMF may send the NAS registration accept message to the N3IWF. The N2 Message may comprise the Allowed NSSAI for the access type for the UE. The N3IWF may send or forward the NAS registration accept to the UE via the established signaling IPsec SA. If the NAS registration request message is received by the N3IWF before the IPsec SA is established, the N3IWF may store it and forward it to the UE only after the establishment of the signaling IPsec SA. In an example, the AMF may provide the access type set to Non-3GPP access to the UDM when it registers with the UDM. In an example, the AMF may provide the access type set to underlay network access, IPSec tunnel access, the underlay or underlying network 3GPP access, and/or the like to the UDM when it registers with the UDM.

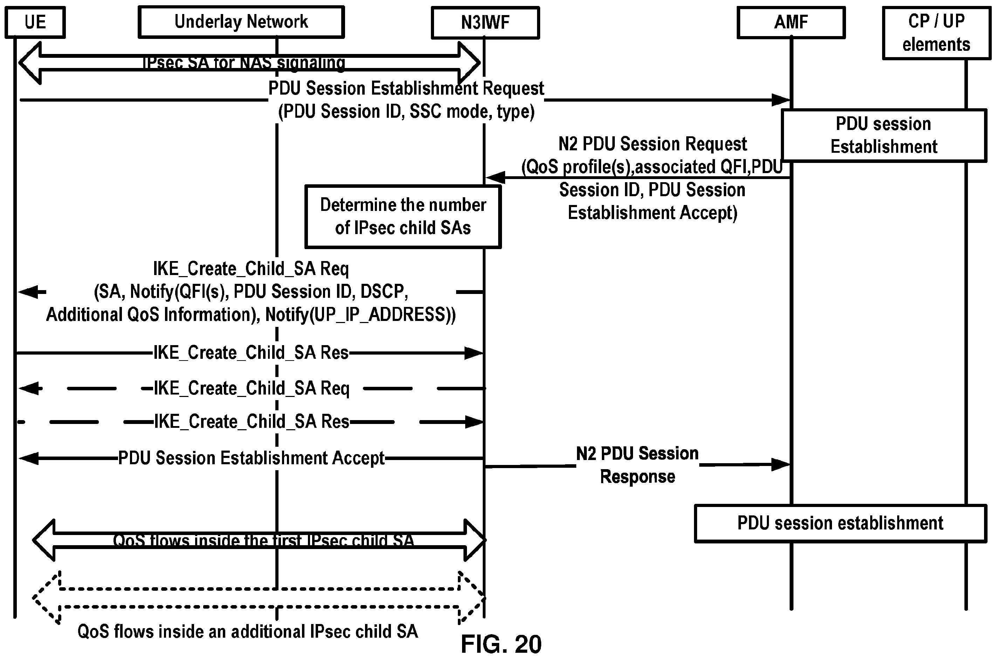

In an example embodiment as depicted in FIG. 20, the UE may send a PDU session establishment request message to the AMF of the overlay network via the N3IWF. The PDU session establishment request message may be sent to the N3IWF via the IPsec SA for NAS signalling and the N3IWF may transparently forward/send it to the AMF in the 5GC (e.g., the overlay network). In an example, the AMF may send a N2 PDU session request message to N3IWF to establish the access resources for this PDU Session. Based on its own policies and configuration, and based on the QoS profiles received, the N3IWF may determine the number of IPsec Child SAs to establish and the QoS profiles associated with each IPsec Child SA. For example, the N3IWF may decide/determine to establish one IPsec Child SA and associate all QoS profiles with this IPsec Child SA. In this case, all QoS Flows of the PDU Session may be transferred over one IPsec Child SA. The N3IWF may send to the UE an IKE Create_Child_SA request to establish the first IPsec Child SA for the PDU Session. The IKE Create_Child_SA request indicates that the requested IPsec Child SA may operate in tunnel mode. This request may include a 3GPP-specific notify payload which contains (a) the QFI(s) associated with the Child SA, (b) the identity of the PDU session associated with this Child SA, (c) a DSCP value associated with the Child SA, (d) a Default Child SA indication, and (e) the additional QoS Information, and/or the like. The IKE Create_Child_SA request may comprise another 3GPP-specific notify payload, which contains a UP_IP_ADDRESS. If a DSCP value is included, then the UE and the N3IWF may mark all IP packets sent over this Child SA with this DSCP value. There may be one default child SA per PDU session. The UE may send all QoS flows to this Child SA for which there is no mapping information to a specific Child SA. The IKE Create_Child_SA request may comprise other information such as the SA payload, the traffic selectors (TS) for the N3IWF and the UE. After receiving the IKE Create_Child_SA request, if the Additional QoS Information is received, the UE may reserve non-3GPP access network resources according to the additional QoS information.

In an example, if the UE accepts the new IPsec Child SA, the UE may send an IKE Create_Child_SA response. During the IPsec Child SA establishment the UE may or may not be assigned an IP address. If the N3IWF determined to establish multiple IPsec Child SAs for the PDU session, then additional IPsec Child SAs may be established, additional IPsec Child SAs may be associated with one or more QFI(s), with a DSCP value, with a UP_IP_ADDRESS and with the Additional QoS Information. For IPsec Child SA, if the additional QoS information is received, the UE may reserve non-3GPP access network resources according to the additional QoS information for the IPsec Child SA.

In an example, after IPsec Child SAs are established, the N3IWF may forward to UE via the signalling IPsec SA the PDU session establishment accept message. The N3IWF may send to the AMF an N2 PDU session response.

In an example, on the user-plane, when the UE has to transmit an UL PDU, the UE may determine the QFI associated with the UL PDU (by using the QoS rules of the PDU Session), it may encapsulate the UL PDU inside a GRE packet and may forward the GRE packet to N3IWF via the IPsec Child SA associated with this QFI. The header of the GRE packet carries the QFI associated with the UL PDU. The UE may encapsulate the GRE packet into an IP packet with source address the inner IP address of the UE and destination address the UP_IP_ADDRESS associated with the Child SA.

In an example, when the N3IWF receives a DL PDU via N3, the N3IWF may use the QFI and the identity of the PDU session in order to determine the IPsec Child SA to use for sending the DL PDU over NWu. The N3IWF may encapsulate the DL PDU inside a GRE packet and copies the QFI in the header of the GRE packet. The N3IWF may include in the GRE header a Reflective QoS Indicator (RQI), which may be used by the UE to enable reflective QoS. The N3IWF shall encapsulate the GRE packet into an IP packet with source address the UP_IP_ADDRESS associated with the Child SA and destination address the inner IP address of the UE.

The procedure described in example embodiments may apply to a case wherein the UE may access a SNPN via a PLMN. The procedure described in example embodiments may apply to a case wherein the UE may access a PLMN via a SNPN. The procedure described in example embodiments may apply to a case wherein the UE may access a first SNPN via a second SNPN. The procedure described in example embodiments may apply to a case wherein the UE may access a first PLMN via a second PLMN.

Existing technologies may support access of the wireless device to a second network via a first network as depicted in FIG. 15 and FIG. 16. When the first network is employed to access the second network e.g., via an interworking node (N3IWF) of the second network, the first network may act as an underlay or underlying network to enable the wireless device to connect to the N3IWF.

A wireless device may access a second network (underlay NW: e.g., an SNPN or a PLMN) to access a first network (an overlay network). The wireless device may establish a second PDU session in the second network. The wireless device may employ the second PDU session to establish an IPSec tunnel with an N3IWF node of the first network. The wireless device may employ the IPSec tunnel and the second PDU session to establish a first PDU session with the first network.

In an example, as depicted in FIG. 17, when the wireless device is connected to the overlay network via a 3GPP access and user plane resources of the second network, the wireless device may lose coverage with access network of the underlay network. For example, the wireless device may move, as shown in the figure. If the wireless device is able to connect to an NG-RAN node of the overlay network, the wireless device may detach from the NG-RAN of the underlay network and perform access registration via the NG-RAN node of the overlay network. The overlay network may not be aware that change of access network is in progress and that the wireless device may not be reached via the NG-RAN node of the underlay network. Downlink data may be transmitted by the overlay network and, if the wireless device is not within coverage of the underlay network, or if the user plane resources of the wireless device in the underlay network are released, downlink data may be lost, and service disruption can occur.

In an example, during handover procedure to the NG-RAN node of the overlay network the existing PDU session of the wireless device in the overlay network may be released and may not be retrieved. As a result, the wireless device may establish a new PDU session with the target network and may incur additional signaling and delays.

Example embodiments improve the performance of the system by mechanisms to enable the overlay network to suspend data transmission to the wireless device until the wireless device is reachable via user plane resources of the overlay network or user plane resources of an underlay network. Example embodiments comprise mechanisms wherein the wireless device proactively determines that coverage may be lost and send a notification of the network. Example embodiments comprise mechanisms wherein a base station sending a notification in response to detection of a failure in the connection of the wireless device. The network may suspend data transmission to the wireless device based on the notification.

In an example embodiment, an underlay network may be a 3GPP network that may provide access to a first network referred to as an overlay network. In example embodiments of the present disclosure, a first network may be an overlay network and a second network may be referred to as an underlay network. An underlay network may provide connectivity to an overlay network. The connectivity may be via an N3IWF of the overlay network. The connectivity to the N3IWF may be via a UPF of the underlay network. A PDU session may provide connectivity between a UE and the UPF. Connectivity between the UE and the N3IWF may comprise a tunnel such as IPsec tunnel or the like. Connectivity between the UE and the N3IWF may employ a generic routing encapsulation (GRE). The IPsec tunnel may be configured in tunnel mode or transport mode. All or part of the packet headers and/or payload may be encrypted.

In an example embodiment, an access switch may comprise a change of access type. In an example, access switch may comprise change of access from RAN of a second network to RAN of a first network. In an example, access switch may comprise change of access from RAN of a first underlay network to a RAN of a second underlay network. In an example, access switch may comprise deregistration, disconnection, detaching, and/or the like of the UE from a radio access network (access point, base station, RAN, NG-RAN, or the like) of a network and attaching, accessing, registering or the like with another network. In an example, an access switch may be caused by a radio link failure, loss of coverage, signal quality reaching below a threshold, mobility of the UE or base station, and/or the like. In an example, an access switch may comprise a handover from a base station to another base station or a target base station. The target base station may be part of a different network, e.g., a different PLMN, SNPN, and/or the like. In an example, an access switch may comprise change of an access network wherein the UE may connect to an overlay network via an underlay network and upon performing access switch, the UE may be connected to the overlay network (directly) via a RAN node of the overlay network. In an example, access switch may comprise change of an access network wherein the UE may connect to an overlay network directly via an NG-RAN of the overlay network and upon performing access switch, the UE may access the overlay network via a RAN node of the underlay network. In an example, access switch may comprise change of an access network wherein the UE may connect to the overlay network via an underlay network and upon performing access switch, the UE may be connected to the overlay network via a RAN node of a target underlay network.

In an example, an access switch indication may comprise a notification to an overlay network that an underlay network no longer provides access or connectivity between the UE and the overlay network. The access switch indication may indicate that the UE may perform a handover, or connect to a target access network or RAN node in order to resume or continue services with the overlay network. In an example, the access switch indication may be an information element IE that comprises measurement information for one or more cells or RAN nodes of one or more networks (e.g., underlay networks). In an example, the access switch indication may indicate a request to receive one or more configuration information. The one or more configuration may be a list of target (underlay) networks that support accessing an overlay network.

In an example, an access switch configuration parameter may comprise at least one of a list of target networks (e.g., underlay networks, NG-RAN identifiers, cell identifiers, and/or the like) that support underlay network functionality to access an overlay network, an identifier (e.g., IP address, FQDN, and/or the like) of an N3IWF for the overlay network.

In an example, a target network parameter request may comprise a request to receive potential supported networks (e.g., underlay networks) that may be employed to access an overlay network.

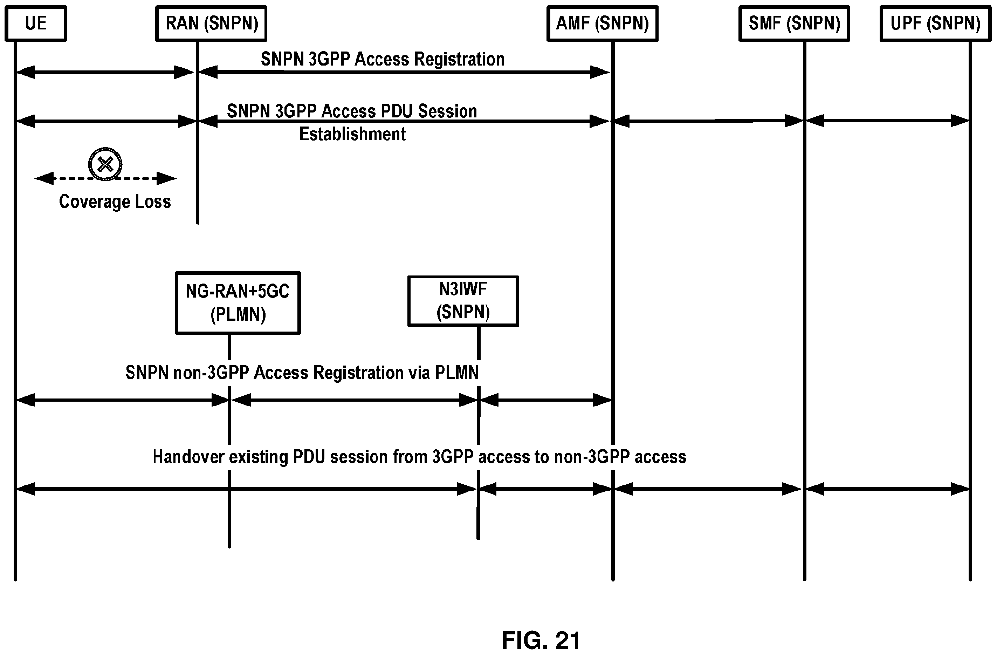

In an example embodiment as depicted in FIG. 21, A UE may perform 3GPP access registration in SNPN. The UE may establish the 3GPP access PDU session in SNPN and the corresponding user plane. This PDU session may be anchored in SNPN UPF. For a single radio UE, after the UE detects the coverage loss of SNPN NG-RAN, the UE may activate the PLMN UE and may switch its radio interface from SNPN NG-RAN to PLMN NG-RAN, and then perform initial registration and PDU session establishment with PLMN. For dual radio UE, it is possible to register in PLMN, via its PLMN UE, and establish the PLMN PDU session whenever the radio coverage of PLMN is available, even prior to the SNPN radio coverage loss. Once the PLMN PDU session is established, the UE may perform the non-3GPP access registration in SNPN using the SNPN PDU Session connectivity of the PLMN UE. In an example, if MA-PDU session established for the UE in SNPN, the user plane for non-3GPP access may be activated due to the registration procedure. If it is a single access PDU session, the UE may perform handover of a PDU Session procedure from 3GPP to non-3GPP access.

The handover procedure may be as follows. If the UE is not registered via untrusted non-3GPP access, the UE may initiate registration procedure. The UE may perform PDU Session Establishment procedure with the PDU Session ID of the PDU Session to be moved. When sending the PDU Session Establishment Accept, within the N1 SM container and in the N2 SM information, the SMF may include all QoS information (e.g. QoS Rule(s) in N1 SM container, QFI(s) and QoS Profile(s) in N2 SM information) for the QoS Flow(s) that are applicable to the PDU Session for the target access. If the User Plane of the PDU Session is activated in 3GPP access, the (V-)SMF may execute the release of resource in 3GPP access (e.g., UE or network requested PDU Session Release for Non-Roaming and Roaming with Local Breakout) in order to release the resources over the source 3GPP access. Because the PDU Session may not be released, the SMF may not send the PDU session release command to the UE. Hence, applicable messages may not include the N1 SM container but only the N2 Resource Release Request (resp. Ack). Since the PDU Session is not to be released, the SM context between the AMF and the SMF may be maintained.

In an example, if it is a MA-PDU session, the UE may add the user plane resource for non-3GPP access. The UE may trigger the release of 3GPP access user plane resource in SNPN.

In an example, FIG. 21 may depict an example access switch or handover procedure of a UE to a target network in accordance with embodiments of the present disclosure. In an example, the UE may access a network e.g., a SNPN via an NG-RAN of the SNPN. The UE may establish a PDU session in the SNPN network. The UE may lose coverage from cells of the SNPN NG-RAN. The UE may access another network e.g., a PLMN or another SNPN. The PLMN may provide connectivity to the SNPN via user plane resources of the PLMN and an N3IWF of the SNPN. The UE may register to the PLMN network, establish a PDU session in the PLMN network and may perform access registration to the SNPN via an IPsec tunnel though user plane of the PLMN. The UE may perform a handover procedure for the PDU session of the SNPN.

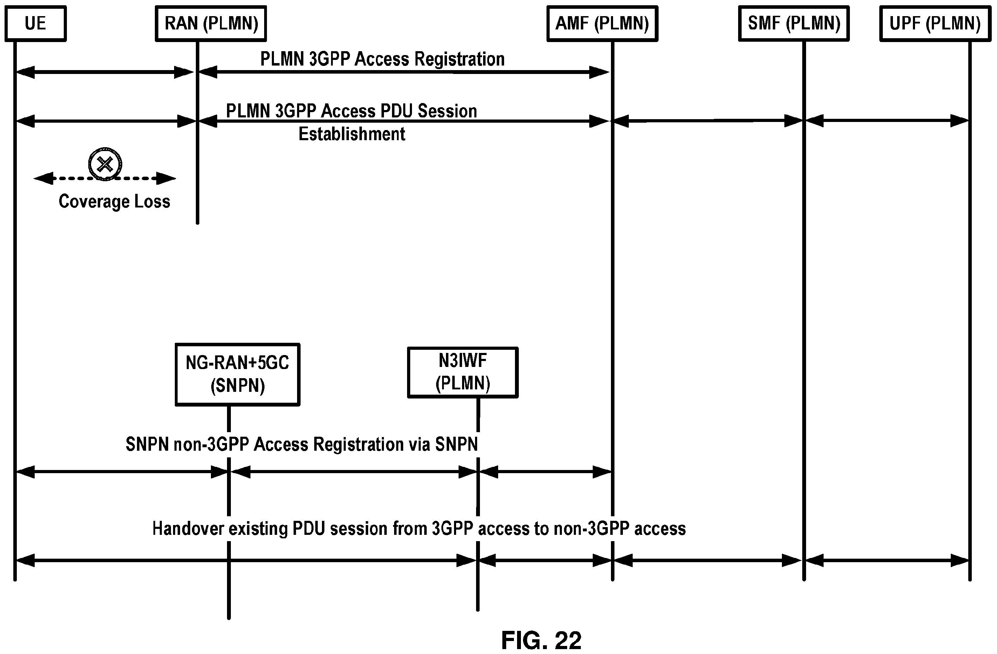

In an example, FIG. 22 may depict an example access switch or handover procedure of a UE to a target network in accordance with embodiments of the present disclosure. In an example, the UE may access a network e.g., a PLMN via an NG-RAN of the PLMN. The UE may establish a PDU session in the PLMN network. The UE may lose coverage from cells of the PLMN NG-RAN. The UE may access another network e.g., a SNPN or another PLMN. The SNPN may provide connectivity to the PLMN via user plane resources of the SNPN and an N3IWF of the PLMN. The UE may register to the SNPN network, establish a PDU session in the SNPN network and may perform access registration to the PLMN via an IPsec tunnel though user plane of the SNPN. The UE may perform a handover procedure for the PDU session of the PLMN. In an example, the target network may be another PLMN.

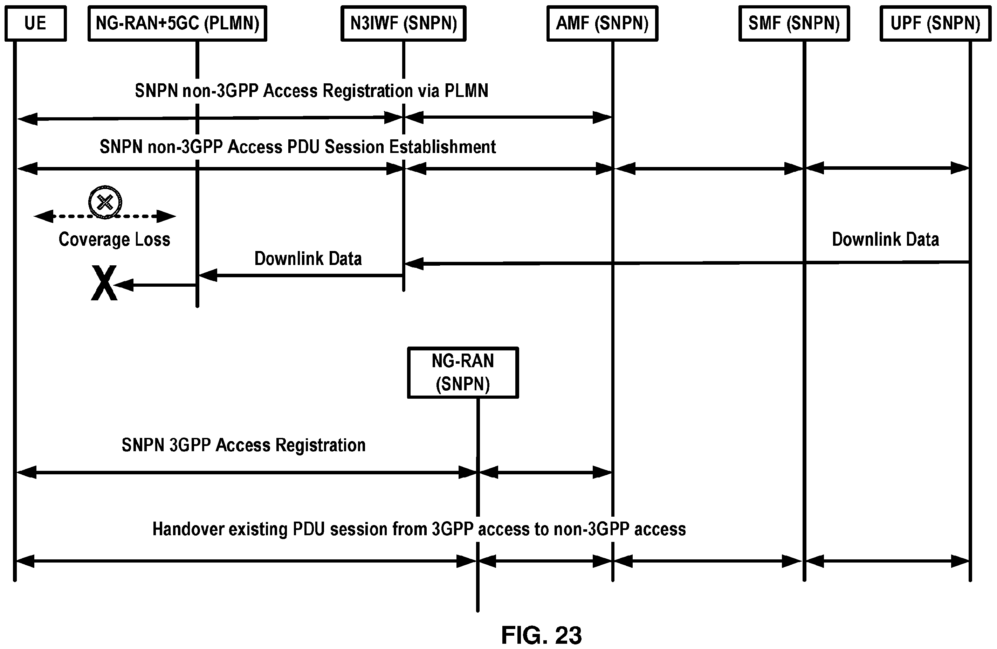

In an example as depicted in FIG. 23, the UE may be initially registered in PLMN NG-RAN/5GC and may establish a PDU session in PLMN. The UE may perform SNPN non-3GPP access registration via PLMN. The UE may establish the non-3GPP access PDU session in SNPN and the corresponding user plane. This PDU session may be anchored in SNPN UPF, and subject to the handover procedure described in the following steps. For single radio UE, after PLMN UE detects the coverage loss of PLMN NG-RAN, it may activate the SNPN UE and switch its radio interface from PLMN NG-RAN to SNPN NG-RAN, and then may perform 3GPP access registration in SNPN. For dual radio UE, it is possible that this step of 3GPP access registration in SNPN is done at any time prior to the coverage loss of PLMN NG-RAN, if there is SNPN radio coverage available. If an MA-PDU session established, the user plane for 3GPP access may be activated due to the registration procedure. If it is a single access PDU session, the UE may perform handover of a PDU Session procedure from non-3GPP to 3GPP access as follows. In an example, If the UE is not registered via 3GPP access, the UE may initiate registration procedure. The UE may perform a PDU session establishment procedure with the PDU session ID of the PDU Session to be moved (e.g., PDU Session Establishment for Non-roaming and Roaming with Local Breakout). When sending the PDU session establishment accept, within the N1 SM container and in the N2 SM information, the SMF may include all QoS information (e.g. QoS Rule(s) in N1 SM container, QFI(s) and QoS Profile(s) in N2 SM information) for the QoS Flow(s) that are applicable to the PDU session for the target access. If the User Plane of the PDU session is activated in non-3GPP access, the (V-)SMF may execute/perform the release of resources in non-3GPP access in order to release the resources over the source non-3GPP access (e.g., underlay network). Because the PDU Session may not be released, the SMF may not send the PDU session release command to the UE. Hence, the messages may not include the N1 SM container but only the N2 resource release request (resp. Ack). Since the PDU Session is not to be released, the SM context between the AMF and the SMF may be maintained. If the UE is moving to the NB-IoT RAT type of 3GPP access, the PDU session establishment request may be rejected by AMF when the UP resources exceeds the UE's maximum number of supported UP resources. In an example, if it is a MA-PDU session, the UE may add the user plane resource for 3GPP access . The UE may trigger the release of non-3GPP access user plane resource.

In an example, FIG. 23 may depict an example access switch or handover procedure of a UE to a target network in accordance with embodiments of the present disclosure. In an example, the UE may access a network e.g., a SNPN via an NG-RAN and user plane resources of a PLMN (underlay network). The UE may establish a PDU session in the SNPN network via an IPsec tunnel between the UE and the N3IWF of the SNPN (overlay network) wherein the IPsec tunnel is via core network, user plane resources, NG-RAN and UPF of the underlay network (PLMN). The UE may lose coverage from cells of the underlay network NG-RAN. The UE may access another network such as another underlay network or a RAN node of the overlay network. The RAN node of the overlay network may provide connectivity to the overlay network. The UE may register to the overlay network and perform a handover of the PDU session via target access network e.g., RAN node of the overlay network.

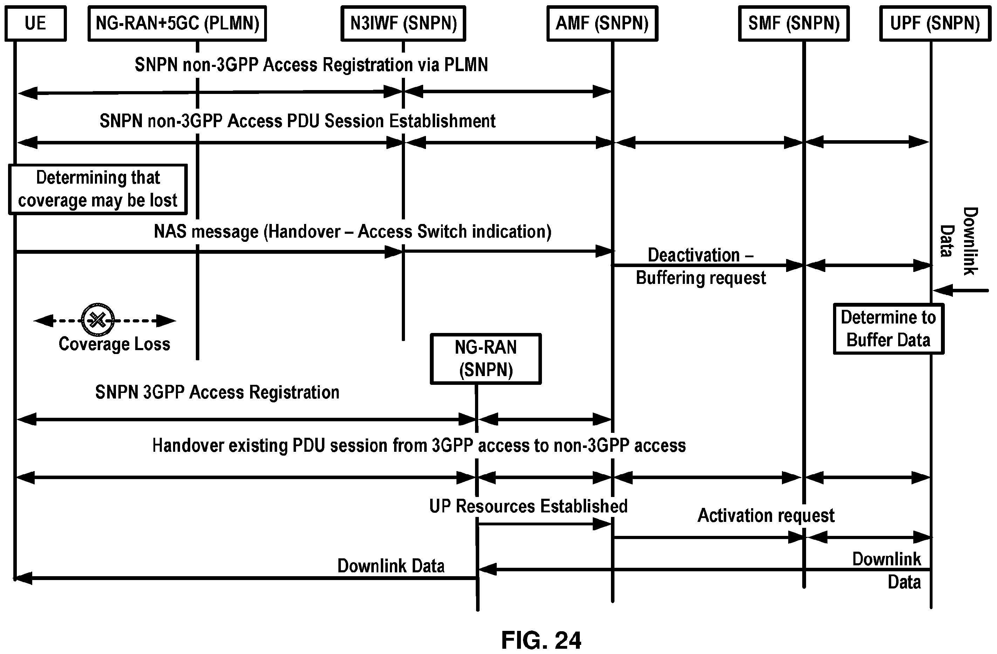

In an example, FIG. 24 may depict an example access switch or handover procedure of a UE prior to loss of coverage in accordance with embodiments of the present disclosure. In an example, the UE may access the overlay network via an underlay network. In an example, the UE may send to an overlay network via an N3IWF of the overlay network and a RAN node of the underlay network, data packets via an IPsec tunnel over the underlay network. In an example, the UE may receive from the overlay network and via N3IWF of the overlay network and the RAN node of the underlay network, data packets (downlink data packets) via the IPsec tunnel over the underlay network. In an example, the UE may determine based on a received power from a cell of the overlay network, that the cell of the overlay network is available. In an example, the UE may send to the N3IWF via the underlay network, a first message indicating an access switch from the RAN node of the underlay network to a RAN node the overlay network. An example, the first message may comprise a request to receive potential target network identifiers that may be provide access to the overlay network. In an example, the first message may comprise measurement information (such as power level, signal quality, and/or the like) of one or more cells of one or more networks. In an example, one or more elements of the first message may be employed by the overlay network to provide configuration information or parameters to the UE via NAS signaling. In an example, the configuration information may be employed by the UE to access target networks that support connectivity with the overlay network and prevent rejection of request and excessive signaling. In an example, the UE may send the first message via the signaling IPsec SA. The first message may be a NAS message from the UE to the AMF of the overlay network. The MAS message may be transmitted from the UE to the overlay network via signaling IPsec SA to the N3IWF of the overlay network and an N2 interface (or an interface between the AMF and the N3IWF). In an example, the AMF may determine based on the access switch indication that a connection or a PDU session of the wireless device in the underlay network may be released. The AMF may determine that the UE may not be reached via the user plane and radio access network of the underlay network. In an example, the AMF may determine to suspend or deactivate a PDU session (e.g., a first PDU session) of the wireless device in the overlay network. In an example, the AMF may determine a time period to keep the first PDU session in suspended or inactive/deactivated mode before releasing the first PDU session and/or initiate deregistration of the UE in the overlay network. In an example, the AMF of the overlay network may send to an SMF of the overlay network a notification to suspend or deactivate the first PDU session of the UE. The notification may comprise a buffering request, a time duration, a cause value indicating the suspending is due to access switch or a connection disruption in the underlay network. In an example, the SMF may perform an N4 procedure comprising an N4 session modification or the like to notify the UPF that data packets for the first PDU session of the UE may be buffered. The buffering may be based on at least one or more elements of the notification (e.g., received by the SMF from the AMF). In an example, the UE may select a cell of an NG-RAN of another network e.g., another underlay network, or NG-RAN of the overlay network. The UE may send to the NG-RAN node of the overlay network a registration request message. The registration request message may be a NAS message sent by the UE to the AMF of the overlay network via the NG-RAN. In an example, upon completion of the registration procedure with the NG-RAN node of the overlay network, the AMF may determine to resume or activate data transmission for the UE. The AMF may send a notification to the SMF to resume or activate the first PDU session. In an example, the SMF may send an N4 session modification or an N4 message to the UPF. The N4 message may comprise access network tunnel information associated with the NG-RAN of the overlay network. The UPF of the overlay network may send downlink data to the UE via the NG-RAN of the overlay network.

In an example embodiment, the first message may be sent by the UE to the N3IWF of the first network. In an example, the first message may be sent by the UE to the AMF of the first network. In an example, the first message may be a NAS message (e.g., MM-NAS, SM-NAS). The first message (e.g., the NAS message) be transmitted via the signaling IPsec SA. In an example, the NAS message may be a PSU session modification request message, a service request message, a PDU session establishment request message, and/or the like. The PDU session modification request message may be a UE initiated modification. In an example, the UE may initiate the PDU session modification procedure by the transmission of the NAS message that may comprise (e.g., at least one of the access switch indication, handover indication, a target network parameter request, N1 SM container (PDU session modification request (PDU session ID, Packet Filters, Operation, Requested QoS, Segregation, 5GSM Core Network Capability, Number Of Packet Filters, [Always-on PDU Session Requested])), PDU Session ID, UE Integrity Protection Maximum Data Rate, [Port Management Information Container]) message. In an example, depending on the access type, if the UE was in CM-IDLE state, this SM-NAS message may be preceded by the Service Request procedure. The NAS message may be forwarded by the N3IWF of the first network or overlay network (or by a (R)AN node) to the AMF with the access switch indication, handover indication, an indication of User location Information, and/or the like. The AMF may invoke Nsmf_PDUSession_UpdateSMContext (SM Context ID, N1 SM container (PDU Session Modification Request)) that may comprise at least one of the access switch indication, handover indication, the target network parameter request, and/or the like.

In an example, the AMF of the first network may send a NAS message (e.g., a DL NAS message) to the UE via the signaling IPsec SA. The DL NAS message may comprise the access switch configuration parameter. The UE may employ the access switch configuration parameter to select a target cell of a target network. In an example, the UE may employ the identifier of the N3IWF that is received in the access switch configuration parameter, to establish a connection with the N3IWF of the overlay network via user plane of the underlay network. The connection may comprise an IPsec tunnel.

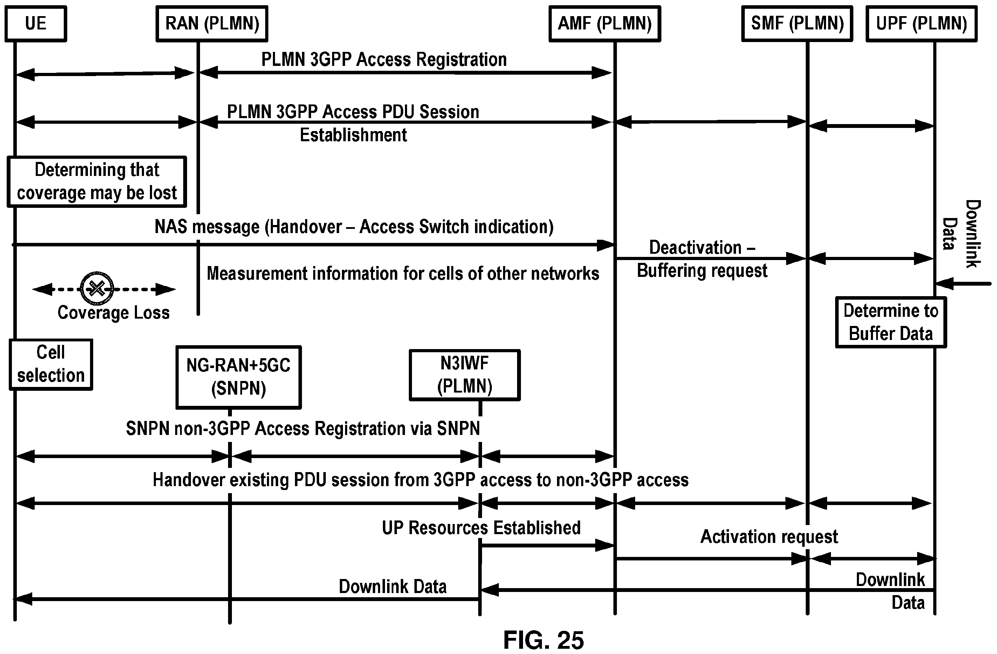

In an example, FIG. 25 may depict an example access switch or handover procedure of a UE prior to loss of coverage in accordance with embodiments of the present disclosure. In an example, the UE may access a first network via an NG-RAN of the first network. In an example, the UE may send to (and receive from) the first network via the NG-RAN node of the first network, data packets. In an example, the UE may determine based on a received power from a cell of one or more networks, that the cells of the one or more network are available. In an example, the UE may send to the AMF of the first network, a first message (e.g., the NAS message) indicating an access switch from the RAN node of the first network to a RAN node a second network. In an example, the first message may comprise the access switch indication, the target network parameter request, a request to receive potential target network identifiers that may be provide access to the first network. In an example, the first message may comprise measurement information (such as power level, signal quality, and/or the like) of one or more cells of one or more networks. In an example, one or more elements of the first message may be employed by the first network to provide configuration information or parameters to the UE via NAS signaling. In an example, the configuration information may be employed by the UE to access target networks (e.g., a second network, an underlay network, and/or the like) that support connectivity with the first network and prevent rejection of request and excessive signaling. In an example, the UE may send the first message via NAS and NG-RAN of the first network. The first message may be a NAS message from the UE to the AMF of the first network. The MAS message may be transmitted from the UE to the first network via NG-RAN of the first network an N2 interface (or an interface between the AMF and the NG-RAN). In an example, the AMF may determine based on the access switch indication that a cell of the first network may not serve the UE and that the UE may access to a second network and handover the first PDU session to a base station of the second network. The AMF may determine not to release the PDU session and to suspend transmission of data for the UE. In an example, the AMF may determine a time period to keep the first PDU session in suspended or inactive/deactivated mode before releasing the first PDU session and/or initiate deregistration of the UE in the first network. In an example, the AMF of the first network may send to an SMF of the first network a notification to suspend or deactivate the first PDU session of the UE. The notification may comprise at least one of a buffering request, a time duration, a cause value indicating that the UE may access the first network via the second network, and/or the like. In an example, the SMF may perform an N4 procedure comprising an N4 session modification or the like to notify the UPF that data packets for the first PDU session of the UE may be buffered. The buffering may be based on at least one or more elements of the notification (e.g., received by the SMF from the AMF). In an example, the UE may select a cell of an NG-RAN of the second network. The UE may send to the NG-RAN node of the second network a registration request message. The registration request message may indicate that a request to access the second network is for accessing the first network via IPsec tunnel via user plane resources of the second network. The UE may establish a second PDU session in the second network. In an example, the registration request message may comprise at least one of an identifier of the first PDU session, an identifier of the first network, and/or the like. The second PDU session may be employed to serve the IPsec tunnel between the UE and the N3IWF of the first network. The UE may send and receive NAS messages to/from the first network via signaling IPsec SA. The UE may perform a PDU session establishment procedure comprising an identifier of the first PDU session. In an example, a handover procedure for the first PDU session may be performed and upon successful establishment of user plane resources and connectivity, the UPF of the first network may transmit data packets to the UE.

In an example, upon completion of the registration procedure with the NG-RAN node of the first network, the AMF may determine to resume or activate data transmission for the UE. The AMF may send a notification to the SMF to resume or activate the first PDU session. In an example, the SMF may send an N4 session modification or an N4 message to the UPF. The N4 message may comprise access network tunnel information associated with the N3IWF of the first network. The UPF of the first network may send downlink data to the UE via the N3IWF of the first network, UPF of the second network, user plane resources and NG-RAN node of the second network.

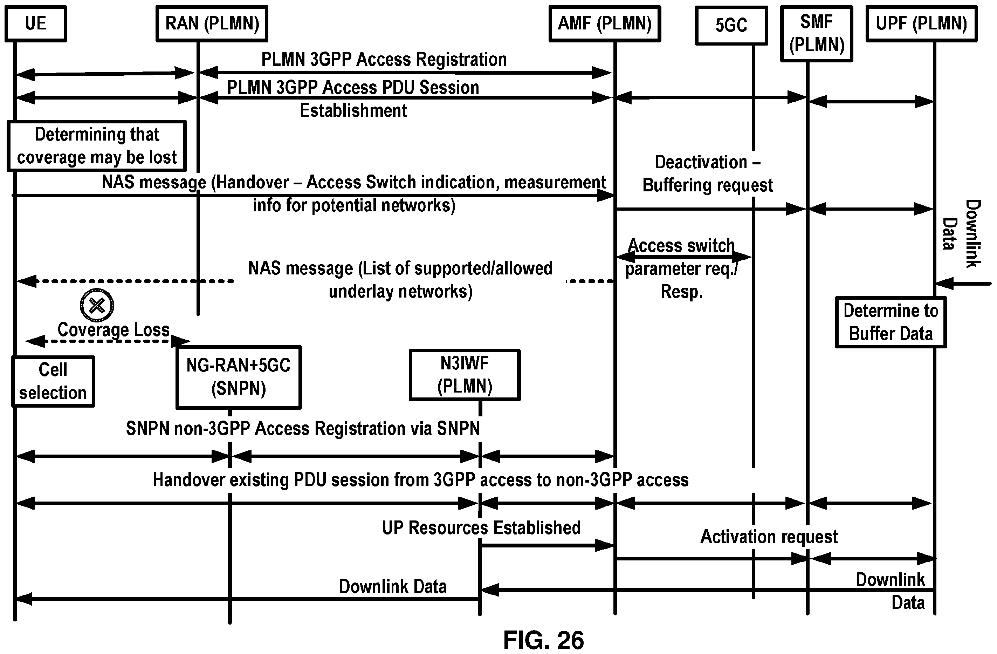

In an example, FIG. 26 may depict an example handover or access switch procedure of a UE in accordance with embodiments of the present disclosure. In an example, as depicted in FIG. 24 and FIG. 25, when the UE sends a NAS message over signaling IPsec SA with the access switch indication, the UE may receive from the first network a response message (NAS message) that may comprise a list of potential target networks (underlay networks) that may provide access to the first network.

In an example embodiment in the present disclosure, when the AMF receives the access switch indication, the AMF may provide the UE with access switch configuration parameters. The AMF may send a request to a network node of the core network such as OAM, PCF, UDM, UDR, and/or the like, wherein the request may comprise at least one of the access switch indication, measurement information of one or more cells of one or more networks, and/or the like. In an example, the AMF may receive from the network node of the core network list of supported or allowed cells (or networks) that support underlay network connectivity for the overlay network.

In an example embodiment, the UE upon release of resources in the underlay network may select a cell of an NG-RAN of the overlay network. The UE may select a cell of an NG-RAN of another underlay network.

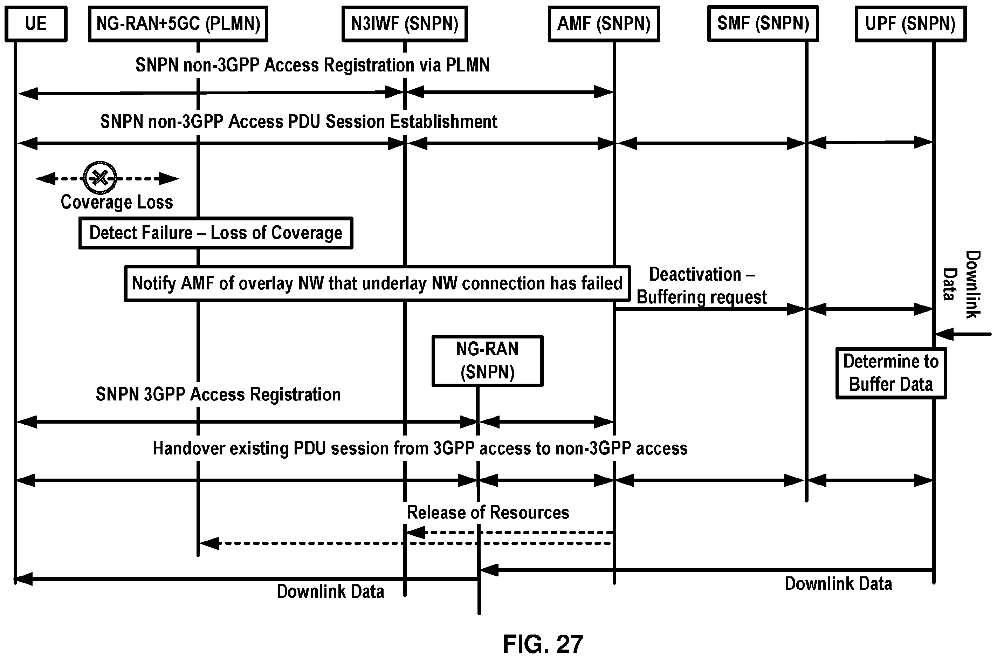

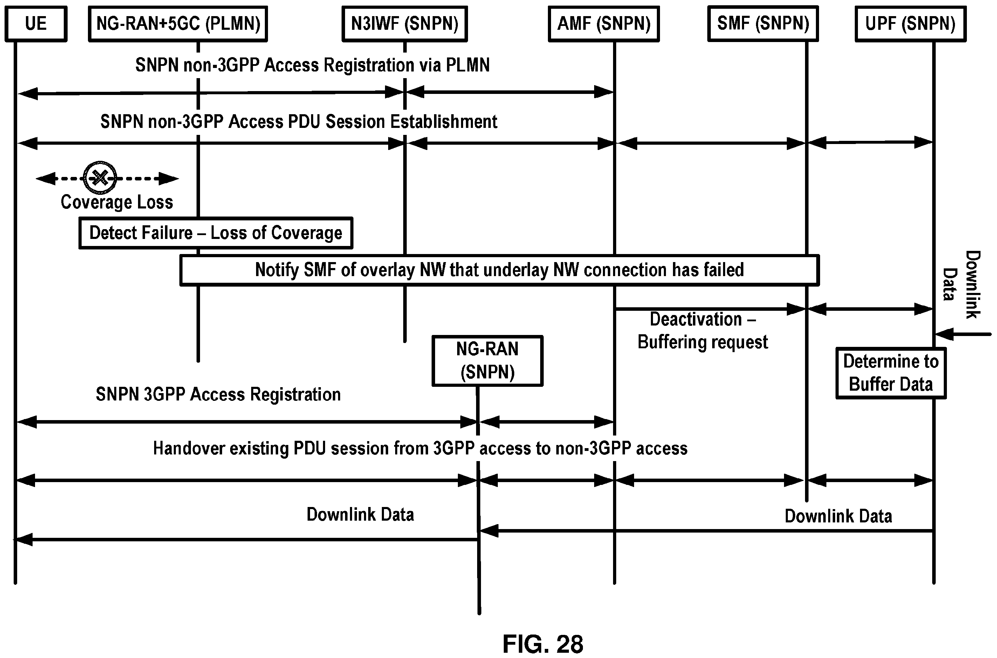

In an example, FIG. 27 and FIG. 28 may depict example notification procedures of a second network to the first network in accordance with embodiments of the present disclosure. In an example, when loss of coverage happens, the UE may lose connectivity to the second network and may not access the first network via user plane of the second network. The UE may not be able to send a notification to the second network that access switch procedure may be performed. The first network may send data packets (e.g., downlink data packets) to the UE. Based on a keep alive procedure, upon loss of coverage or loss of connection, the N3IWF may release the tunnel. The N3IWF may drop packets if the tunnel (e.g., the IPsec tunnel) is released. In an example, the N3IWF may send data packets to the UPF of the second network. Upon loss of connection the second PDU session of the wireless device in the second network may not be active or may be released. The UPF of the second network may drop the data packets. The UPF of the second network may buffer the data packets for time period and drop or discard packets upon expiry of a timer.

FIG. 27 may depict an example notification procedure of a second network to the AMF of first network in accordance with embodiments of the present disclosure. In an example embodiment as in FIG. 27, the RAN node of the second network may detect a failure such as a radio link failure, UE is not reachable, loss of connection, loss of coverage for the UE, and/or the like. The RAN node of the second network may send a notification to the AMF of the second network. The AMF node of the second network may send a notification to the AMF of the first network. The notification may be sent via an NEF of the second network, an NEF of the first network, and/or the like. In an example, the AMF of the second network may send the notification to the NEF and/or AF of the first network or the second network. The NEF and/or AF of the second network may send the notification to the AF and/or NEF of the first network indicating that the notification is for the AMF of the first network. The NEF of the first network may send the notification to the AMF of the first network. In an example, the notification may comprise at least one or more of an identifier of the second PDU session, an identifier of the first PDU session, the access switch indication, and/or the like. In an example embodiment, when the AMF of the first network receives the notification, the AMF may determine to suspend data transmission. The AMF of the first network may send to the SMF of the first network a message to deactivate or suspend data transmission wherein the message may comprise the identifier of the first PDU session, the cause value indicating that the deactivation is due to loss of connectivity in the underlay (the first network), a time value or duration for buffering data packets, and/or the like. The SMF may notify the UPF of the first network via N4 interface (e.g., based on N4 session modification, PFCP session modification, and/or the like procedure) to buffer data packets based on one or more elements of the message to deactivate or suspend data transmission. In an example, the SMF may send an N4 message (e.g., PFCP session modification message, N4 session modification message, and/or the like) to the UPF. The N4 message may comprise at least one of an identifier of an N4 session associated with (the identifier of) the first PDU session, the cause value indicating that the deactivation is due to loss of connectivity in the underlay (the first network), the time value or duration for buffering data packets, and/or the like. The UPF may buffer data packets destined to the UE.

In an example embodiment as in FIG. 27, upon establishment of user plane resources and successful registration in the target network, the AMF may send to the SMF an activation request for the first PDU session. The SMF may send to the UPF the activation request (e.g., an N4 session modification request message). In an example, upon establishment of user plane resources and successful registration in the target network, the AMF may send a request to the second network to release resources associated with the first PDU session and/or the second PDU session of the UE.

In an example embodiment as in FIG. 28, the RAN node of the second network may detect a failure such as a radio link failure, UE is not reachable, loss of connection, loss of coverage for the UE, and/or the like. The RAN node of the second network may send a notification to the AMF of the second network. The AMF node of the second network may send a notification to the AMF of the first network. The notification may be sent via an NEF of the second network, an NEF of the first network, and/or the like. In an example, the AMF of the second network may send the notification to the NEF and/or AF of the first network. The NEF and/or AF of the second network may send the notification to the AF and/or NEF of the first network indicating that the notification is for the SMF of the first network. The NEF of the first network may send the notification to the SMF of the first network. In an example, the notification may comprise at least one or more of an identifier of the second PDU session, an identifier of the first PDU session, the access switch indication, and/or the like. In an example embodiment, when the SMF of the first network receives the notification, the SMF may determine to suspend data transmission. The SMF of the first network may notify (e.g., a message to deactivate or suspend data transmission) the UPF of the first network via N4 interface (e.g., based on N4 session modification, PFCP session modification, and/or the like procedure) to buffer data packets based on one or more elements of the message to deactivate or suspend data transmission. In an example, the SMF may send an N4 message (e.g., PFCP session modification message, N4 session modification message, and/or the like) to the UPF. The N4 message may comprise at least one of an identifier of an N4 session associated with (the identifier of) the first PDU session, the cause value indicating that the deactivation is due to loss of connectivity in the underlay (the first network), the time value or duration for buffering data packets, and/or the like. The UPF may buffer data packets destined to the UE.

In an example embodiment as in FIG. 28, upon establishment of user plane resources and successful registration in the target network, the AMF may send to the SMF an activation request for the first PDU session. The SMF may send to the UPF the activation request (e.g., an N4 session modification request message). In an example, upon establishment of user plane resources and successful registration in the target network, the AMF of the first network or the SMF of the first network may send a request to the second network (e.g., to the SMF or the AMF of the second network) to release resources associated with the first PDU session and/or the second PDU session of the UE.

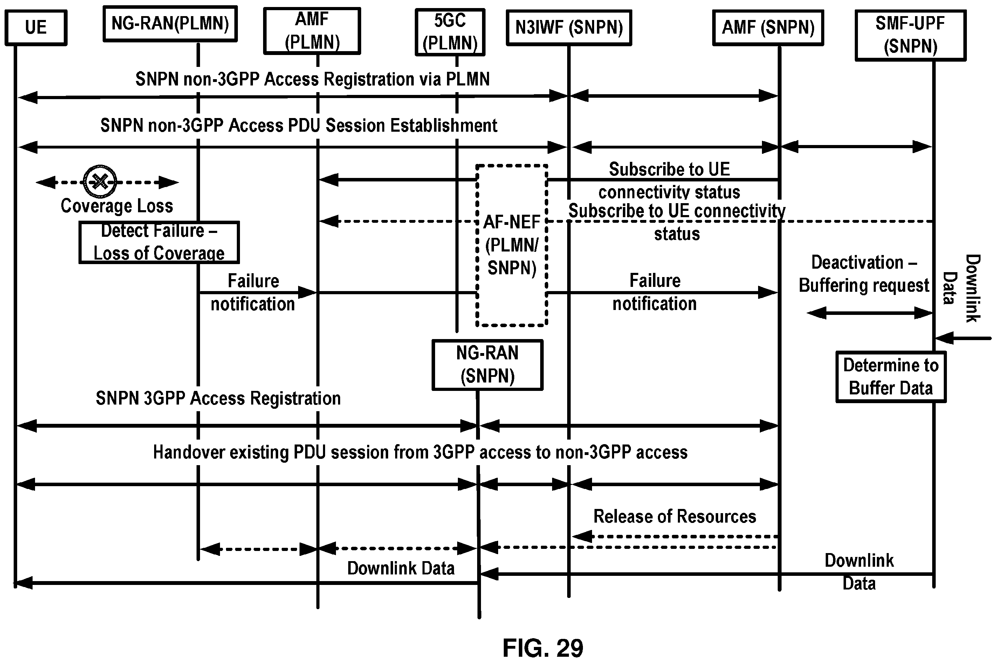

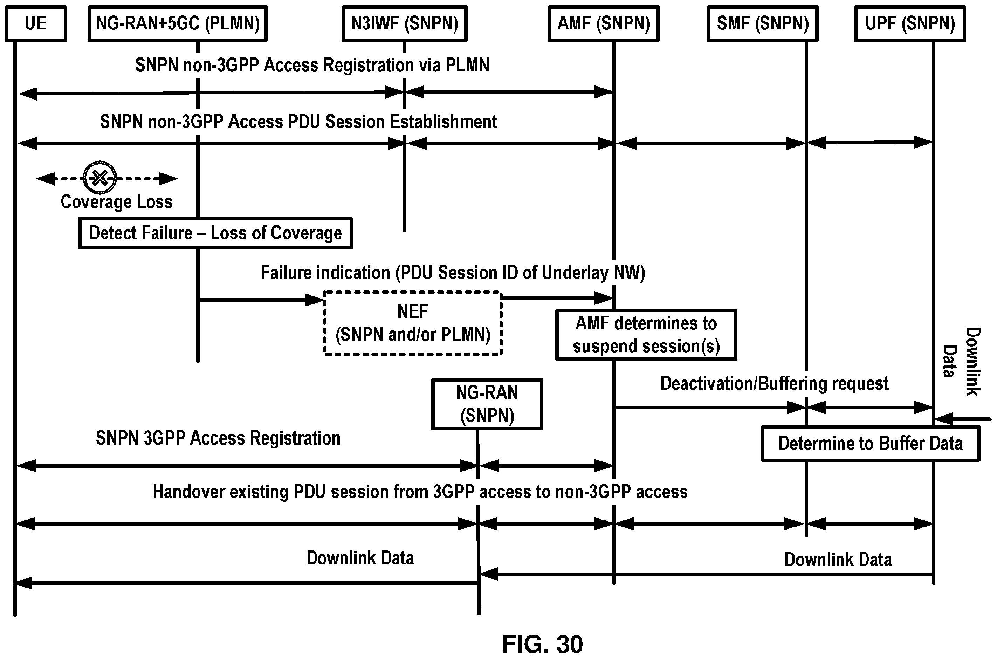

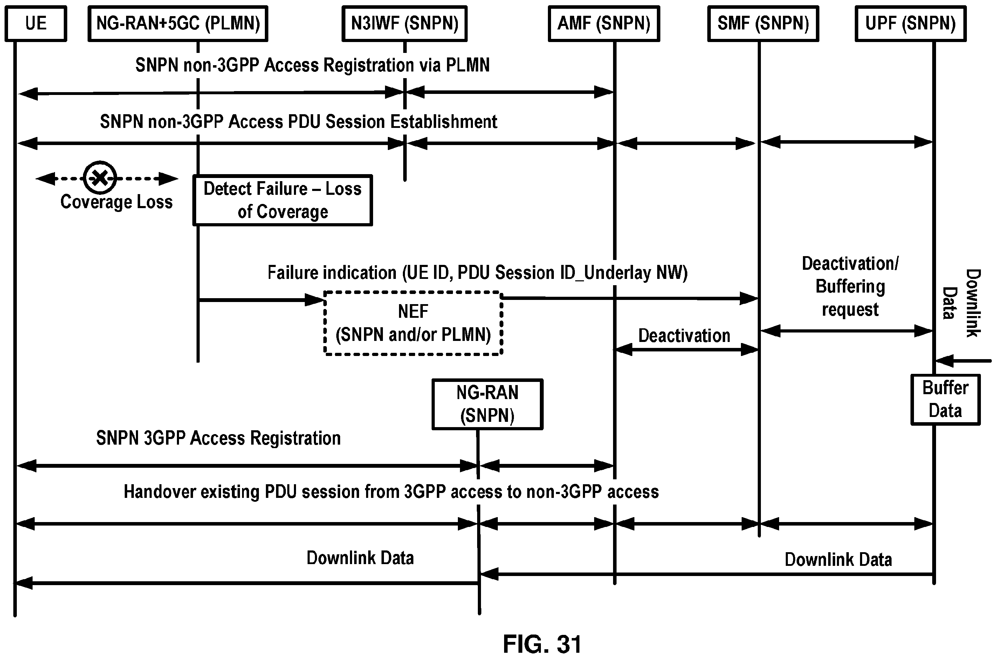

In an example, FIG. 29, FIG. 30 and FIG. 31 may depict an example procedure wherein the first network subscribes to failure events in the second network in accordance with embodiments of the present disclosure. In an example, when the UE performs PDU session establishment procedure with the first network via the second network, the first network may subscribe to failure event s in the second network. In an example, the SMF of the first network and/or the AMF of the first network may send a request to the AMF of the second network and/or the SMF of the second network indicating a request to subscribe to an event. In an example, the event may be loss of connectivity of the UE in the second network, loss of coverage, UE being unreachable by the second network, disruption of connection in the second network for the UE, and/or the like. The request (to subscribe to the event) may be sent via the AF and/or NEF of the first network and/or of the second network. In an example, the request may comprise an identifier of the UE (UE ID), the identifier of the first PDU session, an identifier of the first network, and/or the like. In an example, when a network node of the second network (e.g., AMF or SMF) receives the request (e.g., to subscribe to the event), the AMF of the second network may determine the second PDU session of the wireless device that is associated with the first PDU session (the identifier of the first PDU session). When the AMF received the notification (failure notification, loss of connection, radio link failure, and/or the like) from the RAN node of the second network, the AMF may send the notification to the node of the first network (e.g., AMF, SMF, and/or the like) that subscribed to the event.

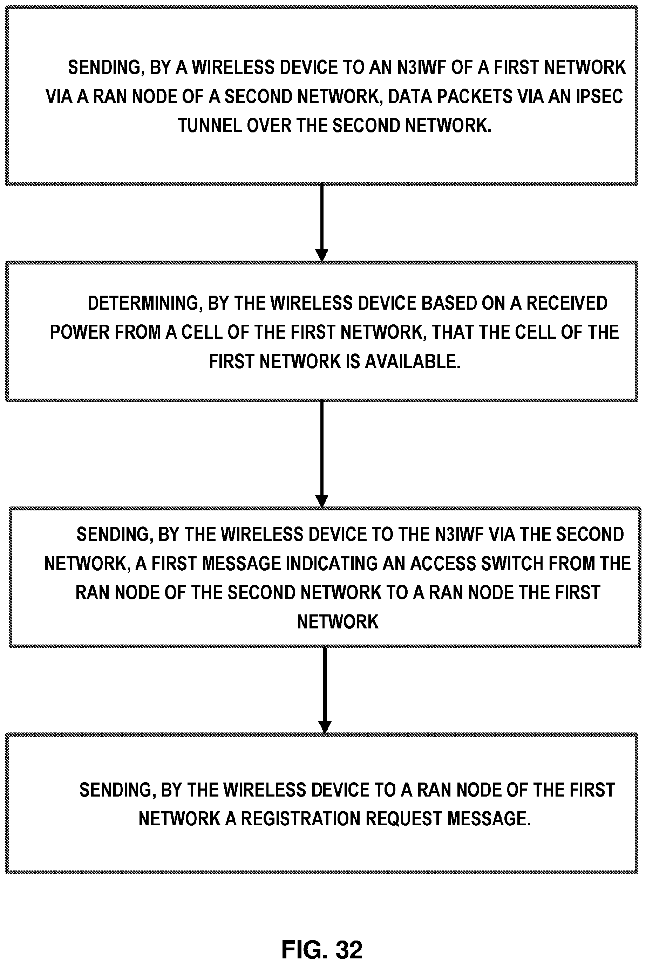

In an example embodiment as depicted in FIG. 32, a wireless device may send to an N3IWF of a first network via a RAN node of a second network, data packets via an IPsec tunnel over the second network. The wireless device may determine based on a received power from a cell of the first network, that the cell of the first network is available. The wireless device may send to the N3IWF via the second network, a first message indicating an access switch from the RAN node of the second network to a RAN node the first network. The wireless device may send to a RAN node of the first network a registration request message.

In an example, the IPsec tunnel may be established between the wireless device and the N3IWF. The first message may be a NAS message over a signaling IPsec SA and via user plane of the second network. The wireless device may select (e.g., after release of the second network), a cell of the RAN node of the first network. The first message may comprise an identifier of the RAN node of the first network. The wireless device may determine, and based on a threshold of radio signal quality, that connectivity with the second network may be lost. The wireless device may receive from the first network, data packets. In an example, the first message may comprise measurement information for one or more cells of one or more RAN nodes of one or more networks. In an example, the first message may be a PDU session modification message comprising an identifier of the first PDU session. In an example, the wireless device may receive from the first network (e.g., the N3IWF of the first network, AMF of the first network, SMF of the first network) a response message (e.g., a NAS message) comprising a list of supported second networks (underlay networks) that the wireless device is allowed to use to access the first network. In an example, the first message may comprise an access switch indication. In an example, the access switch indication may indicate a request to receive an access switch parameter. In an example, the access switch parameter may comprise at least one of a list of supported target access networks, an identifier of an N3IWF of the first network, and/or the like. In an example, the access switch may comprise change of access from a RAN node of the second network to a RAN of the first network. In an example, the access switch may comprise change of access from a RAN node of a first underlay network to a RAN node of a second underlay network. In an example, the access switch may comprise an indication to the SMF of the first network to suspend (deactivate) user plane resources associated with the first PDU session of the wireless device. In an example, the first network may be an overlay network. In an example, the second network may be an underlay network providing access to an overlay network via an IPsec tunnel to an N3IWF of the overlay network. In an example, the wireless device may send to the first network a NAS message via a signaling IPsec SA. The NAS message may comprise an identifier of the second PDU session of the wireless device in the second network. In an example, the registration request message comprises an indication that a request is for access of the wireless device to the first network. The registration request message may be an RRC message comprising an establishment cause for accessing the first network (indicating request to access the first network). The establishment cause may be determined based on an operator defined access category wherein the access category is determined by (an operator of) the first network. The operator defined access category may be configured in the wireless device.

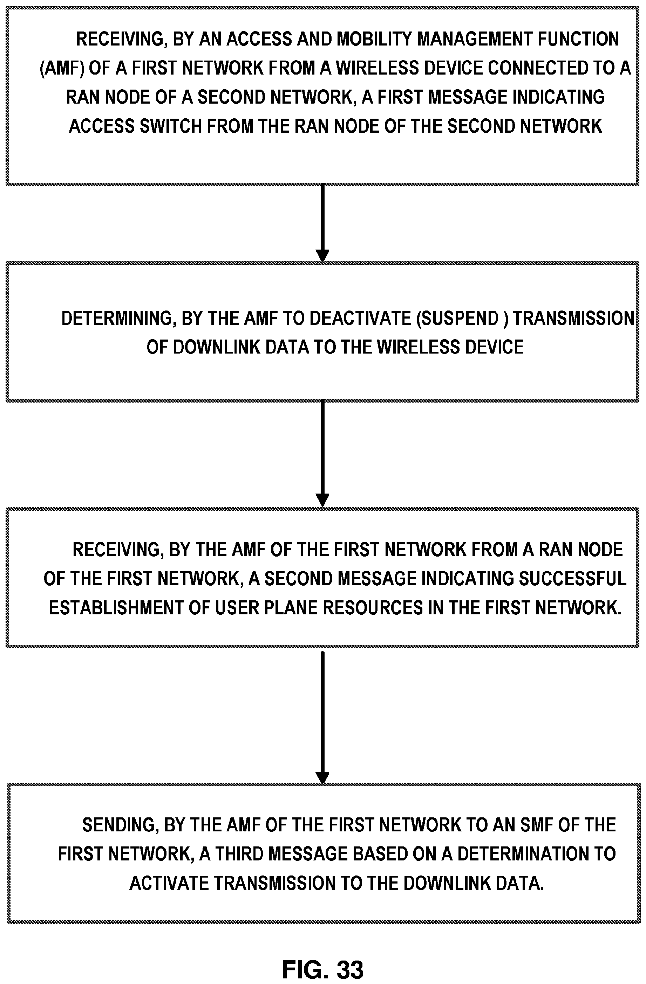

In an example embodiment as depicted in FIG. 33, an access and mobility management function (AMF) of a first network may receive from a wireless device connected to a RAN node of a second network, a first message indicating access switch from the RAN node of the second network. In an example, the AMF may determine to deactivate (suspend ) transmission of downlink data to the wireless device. In an example, the AMF of the first network may receive from a RAN node of the first network, a second message indicating successful establishment of user plane resources in the first network. The AMF of the first network may send to an SMF of the first network, a third message based on a determination to activate transmission to the downlink data.

In an example, the wireless device may send to the first network a NAS message via a signaling IPsec SA. The NAS message may comprise an identifier of the second PDU session of the wireless device in the second network. The AMF of the first network may send to a network node of the first network a request to receive access switch configuration parameter. The request may be in response to receiving the first message indicating access switch. The AMF may receive from the network node of the first network the access switch configuration parameter. In an example, the AMF may send a NAS message comprising a list of supported underlay networks. The AMF of the first network may send to a SMF of the first network a request to suspend/deactivate the first PDU session of the wireless device. In an example, the request may comprise a cause value indicating that the deactivation is due to loss of coverage of the wireless device in the second network. In an example, the request may comprise a time value. In an example, the request may comprise a buffering request to buffer the downlink data for a time duration determined by the time value.

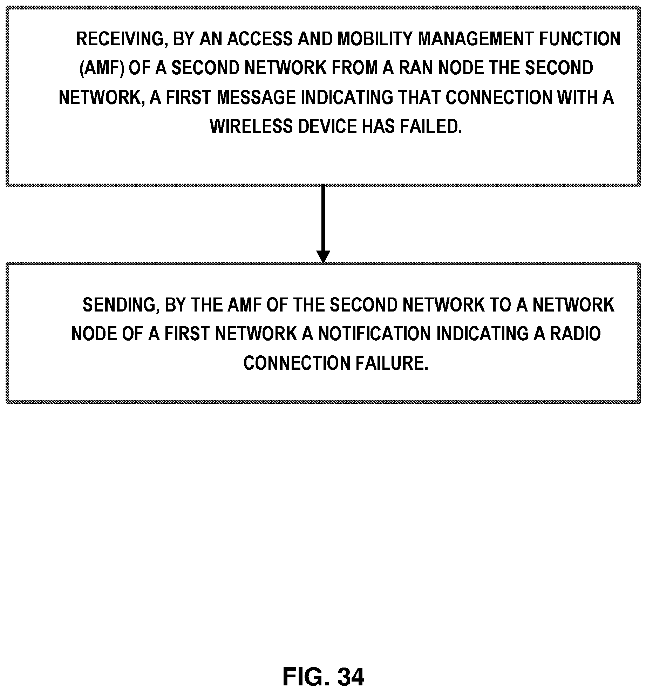

In an example embodiment as depicted in FIG. 34, an access and mobility management function (AMF) of a second network may receive from a RAN node the second network, a first message indicating that connection with a wireless device has failed. The AMF of the second network may send to a network node of a first network a notification indicating a radio connection failure.

In an example, the wireless device access to the first network may be via the RAN node of the second network. The wireless device access to the first network may be via a first PDU session of the wireless device in the first network. The wireless device access to the first network may be via a second PDU session of the wireless device in the second network. In an example, the first PDU session may be via an IPsec tunnel between the wireless device and an N3IWF of the first network. In an example, the AMF of the second network may receive from the AMF of the first network, a request to receive notification on a status of the wireless device connectivity (failure notification) in the second network. In an example, the network node may be an AMF of the first network. In an example, the network node may be a SMF of the first network.

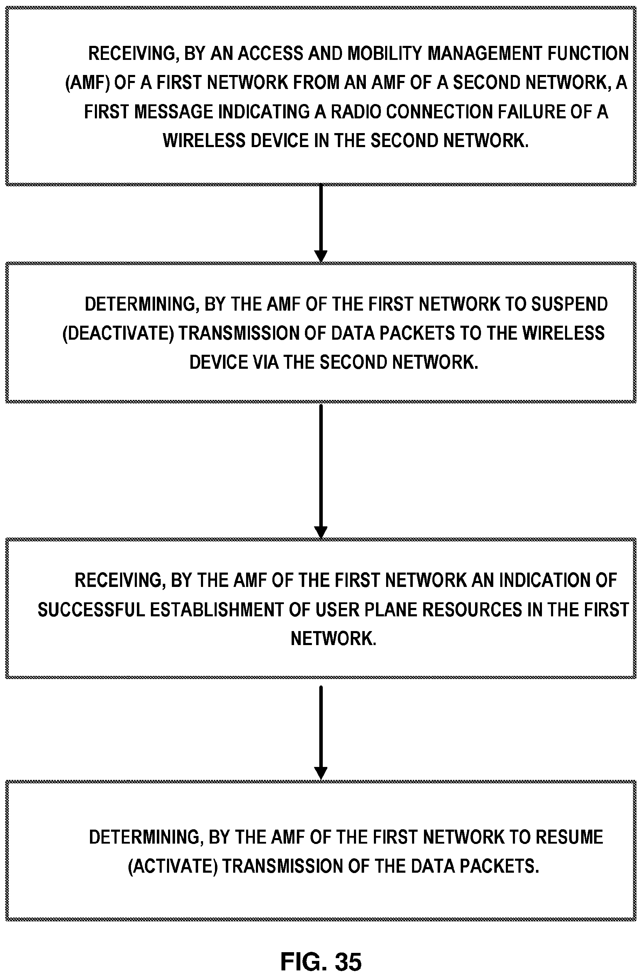

In an example embodiment as depicted in FIG. 35, an access and mobility management function (AMF) of a first network may receive from an AMF of a second network, a first message indicating a radio connection failure of a wireless device in the second network. The AMF of the first network may determine to suspend (deactivate) transmission of data packets to the wireless device via the second network. In an example, the AMF of the first network may receive an indication of successful establishment of user plane resources (e.g., NG-RAN resources, N3 tunnel, AN tunnel, N9 tunnel, and/or the like) in the first network. The AMF of the first network may determine to resume (activate) transmission of the data packets.

In an example, the indication may be received from a RAN node of the first network. The indication may be received from a SMF node of the first network. The AMF of the first network may send to an N3IWF of the first network, a request to release an IPsec tunnel. The AMF of the first network may send to a network node of the second network, a request to release resources associated with the wireless device. The AMF of the first network may send to a network node of the second network, a request to release resources associated with a second PDU session of the wireless device in the second network. The AMF of the first network may send to a SMF of the first network, a request to suspend (deactivate) data transmission to the wireless device.

## Claims

1. A method comprising:
sending, by a wireless device to an access and mobility management function, AMF, of an overlay network, a first non-access stratum, NAS, message indicating an access switch, wherein the access switch indicates a request to receive information of one or more underlay networks; and
receiving, by the wireless device from the AMF, a second NAS message comprising the information of the one or more underlay networks.

2. The method of claim 1, wherein the second NAS message comprises an identifier of a non-3GPP interworking function, N3IWF, of the overlay network.

3. The method of one of claims 1 to 2, further comprising sending, by the wireless device to a non-3GPP interworking function, N3IWF, of the overlay network via a base station of an underlay network, a registration request message.

4. The method of claim 3, further comprising sending, by the wireless device to the N3IWF of the overlay network via the base station of the underlay network, data packets via an internet protocol security, IPsec, tunnel established between the wireless device and the N3IWF.

5. The method of one of claims 1 to 4, wherein the information of the one or more underlay networks comprises a list of supported underlay networks that the wireless device is allowed to use to access the overlay network.

6. A wireless device comprising one or more processors and memory storing instructions that, when executed by the one or more processors, cause the wireless device to perform the method of any of claims 1 to 5.

7. A non-transitory computer-readable medium comprising instructions that, when executed by one or more processors of a wireless device, cause the wireless device to perform the method of any of claims 1 to 5.

8. A method comprising:
receiving, by an access and mobility management function, AMF, of an overlay network from a wireless device, a first non-access stratum, NAS, message indicating an access switch, wherein the access switch indicates a request to receive information of one or more underlay networks; and
sending, by the AMF to the wireless device, a second NAS message comprising the information of the one or more underlay networks.

9. The method of claim 8, wherein the second NAS message comprises an identifier of a non-3GPP interworking function, N3IWF, of the overlay network.

10. The method of one of claims 8 to 9, further comprising sending, by the AMF to a network node of the overlay network, a request message indicating the access switch.

11. The method of claim 10, further comprising receiving, by the AMF from the network node of the overlay network, the information of the one or more underlay networks.

12. The method of one of claims 9 to 11, wherein the network node of the overlay network comprises at least one of:
an operations and management, OAM, node;
a policy control function, PCF; or
a unified data management, UDM, node.

13. The method of one of claims 8 to 12, wherein the information of the one or more underlay networks comprises a list of supported underlay networks that the wireless device is allowed to use to access the overlay network.

14. An access and mobility management function, AMF, comprising one or more processors and memory storing instructions that, when executed by the one or more processors, cause the AMF to perform the method of any of claims 8 to 13.

15. A non-transitory computer-readable medium comprising instructions that, when executed by one or more processors of an access and mobility management function AMF, cause the AMF to perform the method of any of claims 8 to 13.

## Patentansprüche

1. Verfahren, das Folgendes umfasst:
Senden einer ersten Nachricht einer Nicht-Zugriffsschicht, non-access stratum - NAS, die einen Zugriffs-Switch angibt, durch eine drahtlose Vorrichtung an eine Zugriffs- und Mobilitätsmanagementfunktion, access and mobility management function - AMF, eines Overlay-Netzes, wobei der Zugriffs-Switch eine Anforderung zum Empfangen von Informationen eines oder mehrerer Underlay-Netze angibt; und
Empfangen einer zweiten NAS-Nachricht, die die Informationen des einen oder der mehreren Underlay-Netze umfasst, durch die drahtlose Vorrichtung von der AMF.

2. Verfahren nach Anspruch 1, wobei die zweite NAS-Nachricht eine Kennung einer Nicht-3GPP-Interworking-Funktion (N3IWF) des Overlay-Netzes umfasst.

3. Verfahren nach einem der Ansprüche 1 bis 2, ferner umfassend Senden einer Registrierungsanforderungsnachricht durch die drahtlose Vorrichtung an eine Nicht-3GPP-Interworking-Funktion (N3IWF) des Overlay-Netzes über eine Basisstation eines Underlay-Netzes.

4. Verfahren nach Anspruch 3, ferner umfassend Senden von Datenpaketen über einen Internetprotokollsicherheittunnel, IPsec-Tunnel, der zwischen der drahtlosen Vorrichtung und der N3IWF eingerichtet ist, durch die drahtlose Vorrichtung an die N3IWF des Overlay-Netzes über die Basisstation des Underlay-Netzes.

5. Verfahren nach einem der Ansprüche 1 bis 4, wobei die Informationen des einen oder der mehreren Underlay-Netze eine Liste unterstützter Underlay-Netze umfassen, die die drahtlose Vorrichtung verwenden darf, um auf das Overlay-Netz zuzugreifen.

6. Drahtlose Vorrichtung, umfassend einen oder mehrere Prozessoren und Speicher, der Anweisungen speichert, die bei Ausführung durch den einen oder die mehreren Prozessoren die drahtlose Vorrichtung dazu veranlassen, das Verfahren nach einem der Ansprüche 1 bis 5 durchzuführen.

7. Nichtflüchtiges computerlesbares Medium, umfassend Anweisungen, die bei Ausführung durch einen oder mehrere Prozessoren einer drahtlosen Vorrichtung die drahtlose Vorrichtung dazu veranlassen, das Verfahren nach einem der Ansprüche 1 bis 5 durchzuführen.

8. Verfahren, das Folgendes umfasst:
Empfangen einer ersten Nachricht einer Nicht-Zugriffsschicht, NAS, die einen Zugriffs-Switch angibt, durch eine Zugriffs- und Mobilitätsmanagementfunktion, AMF, eines Overlay-Netzes von einer drahtlosen Vorrichtung, wobei der Zugriffs-Switch eine Anforderung zum Empfangen von Informationen eines oder mehrerer Underlay-Netze angibt; und
Senden einer zweiten NAS-Nachricht, die die Informationen des einen oder der mehreren Underlay-Netze umfasst, durch die AMF an die drahtlose Vorrichtung.

9. Verfahren nach Anspruch 8, wobei die zweite NAS-Nachricht eine Kennung einer Nicht-3GPP-Interworking-Funktion (N3IWF) des Overlay-Netzes umfasst.

10. Verfahren nach einem der Ansprüche 8 bis 9, ferner umfassend Senden einer Anforderungsnachricht, die den Zugriffs-Switch angibt, durch die AMF an einen Netzknoten des Overlay-Netzes.

11. Verfahren nach Anspruch 10, ferner umfassend Empfangen der Informationen des einen oder der mehreren Underlay-Netze durch die AMF von dem Netzknoten des Overlay-Netzes.

12. Verfahren nach einem der Ansprüche 9 bis 11, wobei der Netzknoten des Overlay-Netzes mindestens eines von Folgendem umfasst:
einen Knoten für Operationen und Management, operations and management - OAM;
eine Richtliniensteuerfunktion, policy control function - PCF; oder
einen Knoten für einheitliches Datenmanagement, unified data management - UDM.

13. Verfahren nach einem der Ansprüche 8 bis 12, wobei die Informationen des einen oder der mehreren Underlay-Netze eine Liste unterstützter Underlay-Netze umfassen, die die drahtlose Vorrichtung verwenden darf, um auf das Overlay-Netz zuzugreifen.

14. Zugriffs- und Mobilitätsmanagementfunktion, AMF, umfassend einen oder mehrere Prozessoren und Speicher, der Anweisungen speichert, die bei Ausführung durch den einen oder die mehreren Prozessoren die AMF dazu veranlassen, das Verfahren nach einem der Ansprüche 8 bis 13 durchzuführen.

15. Nichtflüchtiges computerlesbares Medium, umfassend Anweisungen, die bei Ausführung durch einen oder mehrere Prozessoren einer Zugriffs- und Mobilitätsmanagementfunktion, AMF, die AMF dazu veranlassen, das Verfahren nach einem der Ansprüche 8 bis 13 durchzuführen.

## Revendications

1. Procédé comprenant :
l'envoi, par un dispositif sans fil à une fonction de gestion d'accès et de mobilité, AMF, d'un réseau superposé, d'un premier message de strate de non-accès, NAS, indiquant un commutateur d'accès, dans lequel le commutateur d'accès indique une demande de réception d'informations d'un ou de plusieurs réseaux sous-jacents ; et
la réception, par le dispositif sans fil en provenance de l'AMF, d'un second message NAS comprenant les informations des un ou plusieurs réseaux sous-jacents.

2. Procédé selon la revendication 1, dans lequel le second message NAS comprend un identifiant d'une fonction d'interfonctionnement non 3GPP, N3IWF, du réseau superposé.

3. Procédé selon l'une des revendications 1 à 2, comprenant également l'envoi, par le dispositif sans fil à une fonction d'interfonctionnement non 3GPP, N3IWF, du réseau superposé via une station de base d'un réseau sous-jacent, d'un message de demande d'enregistrement.

4. Procédé selon la revendication 3, comprenant également l'envoi, par le dispositif sans fil à la N3IWF du réseau superposé via la station de base du réseau sous-jacent, de paquets de données via un tunnel de sécurité de protocole Internet, IPsec, établi entre le dispositif sans fil et la N3IWF.

5. Procédé selon l'une des revendications 1 à 4, dans lequel les informations des un ou plusieurs réseaux sous-jacents comprennent une liste de réseaux sous-jacents pris en charge que le dispositif sans fil est autorisé à utiliser pour accéder au réseau superposé.

6. Dispositif sans fil comprenant un ou plusieurs processeurs et une mémoire stockant des instructions qui, lorsqu'elles sont exécutées par les un ou plusieurs processeurs, amènent le dispositif sans fil à réaliser le procédé selon l'une quelconque des revendications 1 à 5.

7. Support non transitoire lisible par ordinateur comprenant des instructions qui, lorsqu'elles sont exécutées par un ou plusieurs processeurs d'un dispositif sans fil, amènent le dispositif sans fil à réaliser le procédé selon l'une quelconque des revendications 1 à 5.

8. Procédé comprenant :
la réception, par une fonction de gestion d'accès et de mobilité, AMF, d'un réseau superposé à partir d'un dispositif sans fil, d'un premier message de strate de non-accès, NAS, indiquant un commutateur d'accès, dans lequel le commutateur d'accès indique une demande de réception d'informations d'un ou de plusieurs réseaux sous-jacents ; et
l'envoi, par l'AMF au dispositif sans fil, d'un second message NAS comprenant les informations des un ou plusieurs réseaux sous-jacents.

9. Procédé selon la revendication 8, dans lequel le second message NAS comprend un identifiant d'une fonction d'interfonctionnement non 3GPP, N3IWF, du réseau superposé.

10. Procédé selon l'une des revendications 8 à 9, comprenant également l'envoi, par l'AMF à un nœud de réseau du réseau superposé, d'un message de demande indiquant le commutateur d'accès.

11. Procédé selon la revendication 10, comprenant également la réception, par l'AMF en provenance du nœud de réseau du réseau superposé, des informations des un ou plusieurs réseaux sous-jacents.

12. Procédé selon l'une des revendications 9 à 11, dans lequel le nœud de réseau du réseau superposé comprend au moins l'un parmi :
un nœud d'opérations et de gestion, OAM ;
une fonction de commande de politiques, PCF ; ou
un nœud de gestion unifiée de données, UDM.

13. Procédé selon l'une des revendications 8 à 12, dans lequel les informations des un ou plusieurs réseaux sous-jacents comprennent une liste de réseaux sous-jacents pris en charge que le dispositif sans fil est autorisé à utiliser pour accéder au réseau superposé.

14. Fonction de gestion d'accès et de mobilité, AMF, comprenant un ou plusieurs processeurs et une mémoire stockant des instructions qui, lorsqu'elles sont exécutées par les un ou plusieurs processeurs, amènent l'AMF à réaliser le procédé selon l'une quelconque des revendications 8 à 13.

15. Support non transitoire lisible par ordinateur comprenant des instructions qui, lorsqu'elles sont exécutées par un ou plusieurs processeurs d'une fonction de gestion d'accès et de mobilité, AMF, amènent l'AMF à réaliser le procédé selon l'une quelconque des revendications 8 à 13.
